# EUROPEAN PATENT SPECIFICATION

(11) **EP 2 740 590 B1**
(45) Date of publication and mention of the grant of the patent: **31.03.2021**
(21) Application number: 12822881.4
(22) Date of filing: 30.07.2012
(51) Int. Cl.: B29L 31/00, B29L 7/00, B29L 12/00, B29C 45/14, B32B 7/12, B32B 15/08, B29K 55/02, B29K 67/00, B32B 27/08, B29K 69/00, B32B 27/20, B29L 9/00, B32B 3/30, B29C 48/07, B29C 48/21, B60J 1/00, B32B 7/02, B32B 27/36, B32B 27/34, B29K 77/00, B29L 31/30

(54) **PANEL AND PANEL INSTALLATION STRUCTURE**
PLATTE UND PLATTENINSTALLATIONSSTRUKTUR
PANNEAU ET STRUCTURE D'INSTALLATION DE PANNEAU

(30) Priority: 05.08.2011 JP 2011171943; 17.10.2011 JP 2011228096
(43) Date of publication of application: 11.06.2014
(73) Proprietor: Mitsubishi Engineering-Plastics Corporation, Tokyo 105-0021 (JP)
(72) Inventor: IMAIZUMI, Hiroyuki, Hiratsuka-shi Kanagawa 254-0016 (JP); NAGANO, Fumisato, Hiratsuka-shi Kanagawa 254-0016 (JP); TAKAHASHI, Kazuyuki, Hiratsuka-shi Kanagawa 254-0016 (JP)
(74) Representative: Hoffmann Eitle
(86) International application number: PCT/JP2012/069343
(87) International publication number: WO 2013/021848

(56) References cited:
- WO-A1-2008/024612
- WO-A1-2010/098287
- WO-A1-2011/073305
- DE-A1- 4 331 816
- JP-A- 3 161 644
- JP-A- 11 333 991
- JP-A- 2007 099 799
- JP-U- 53 000 180
- US-A1- 2006 154 049
- US-A1- 2008 292 820

## Description

### Field of Invention

The present invention relates to a panel suitably used as a window member for automotive cars and the like, and particularly to a panel using a transparent panel body having near-infrared to infrared absorptivity, in which the problem of heat storage with near-infrared to infrared absorption of the panel body is reduced.

The present invention further relates to an installation structure of the panel.

### Background of Invention

In recent years, in the automotive field etc., various researches have been made of resin windows (glazing) alternative to glass for the purpose of reducing weights.

Glazing is generally composed of a transparent window portion (a panel body according to the present invention) and a peripheral window frame (a frame member according to the present invention) and is generally produced by integrally molding the window portion and the window frame by injection molding together including the window frame.

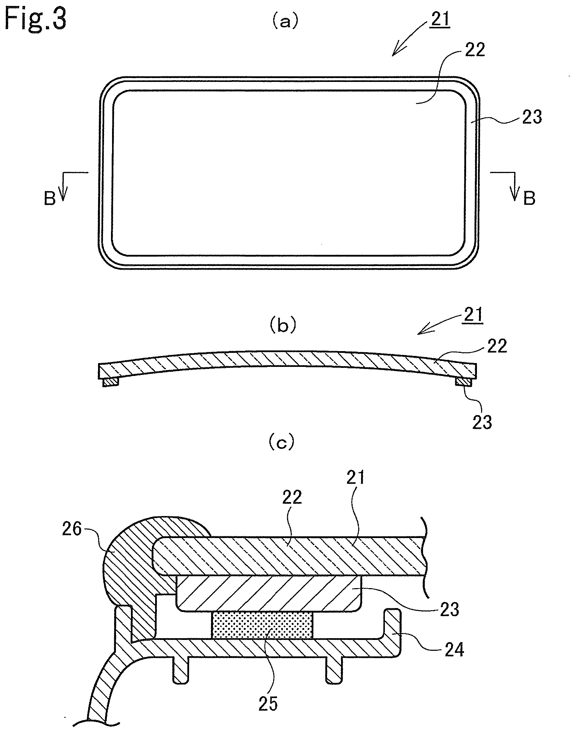

Fig. 3 is a drawing showing a glazing panel used for automotive panoramic roofs, in which Fig. 3(a) is a back (a rear or back surface on the vehicle interior side when attached to an automotive car) view, Fig. 3(b) is a sectional view taken along line B-B of Fig. 3(a), and Fig. 3(c) is a partial sectional view showing a structure in which the glazing is attached to an automotive roof.

A panel 21 includes a panel body 22 and a frame member 23 provided on a peripheral portion of the back surface of the panel body 22, and when the panel 21 is attached to an automotive roof, as shown in Fig. 3(c), the frame member 23 is bonded to a car body frame 24 with a urethane-based adhesive 25 or the like, and a rubber seal member (weather strip) 26 is fitted into a space between the panel 21 and the car body frame 24 and fixed.

In general, for the purpose of privacy protection, the visible light transmittance of a glazing panel body is appropriately adjusted depending on an attachment position in an automotive car. Also, because near-infrared to infrared light (abbreviated as "IR" hereinafter) which is transmitted through glazing causes an increase in interior temperature of a car, it is desired to decrease the total solar transmittance of a glazing panel body, and many polycarbonate resin compositions used for this application are proposed as decreasing the total solar transmittance and imparting a heat-ray shielding ability (for example, Patent Literatures 1 to 3).

Patent Literature 4 describes a light diffusing solar control glazing unit comprising a glass substrate; and a light diffusing solar control film disposed on the glass substrate, the light diffusing solar control film comprising a multilayer film that transmits visible light and reflects infrared light; and a light diffusing layer or surface adjacent to the multilayer film forming a diffusing solar control film; wherein the light diffusing solar control film has a haze value of 10 % or greater.

Patent Literature 5 describes a heat insulating laminated glass, comprising at least two glass plates; and an intermediate film member by which said at least two glass plates are laminated together, wherein the intermediate film member has two intermediate films and a functional plastic film sheet arranged between the two intermediate films and formed with an infrared reflecting layer and an infrared absorbing layer.

Patent Literature 6 describes a multilayer film article comprising an infrared light reflecting multilayer film having alternating layers of a first polymer type and a second polymer type; and an infrared light absorbing nanoparticle layer comprising a plurality of metal oxide nanoparticles dispesed in a cured polymeric binder, the infrared light absorbing nanoparticle layer being adjacent the multilayer film and the metaloxide comprising tin oxide or doped tin oxide, the infrared light absorbing nanoparticle layer having a thickness in a range from 1 to 20 micrometers.

Patent Literature 7 describes a solar control glazing laminate comprising a first glazing substrate; a first polyvinyl butyral layer disposed on the first glazing substrate; a solar control film disposed on the first polyvinyl butyral layer; a second polyvinyl butyral layer disposed on the solar control film; and a second glazing substrate disposed on the second polyvinyl butyral layer; wherein the solar control film comprises an infrared radiation reflecting polymeric film and a polymeric binder layer disposed on the infrared radiation relecting polymeric film, the polymeric binder layer comprising a polyester and cross-linked multi-functional acrylate segments and having infrared radiation absorbing nanoparticles dispersed therein.

Patent Literature 8 describes a thermoplastic composition, an article obtained by forming the composition and a window or door having a frame comprising the article. The thermoplastic composition comprises a thermoplastic composition comprising a thermoplastic polyamide, a thermoplastic polymer having a lower thermal conductivity than the thermoplastic polyamide, optionally one or more compatibilizers between the thermoplastic polyamide and the thermoplastic polymer, at least one of which comprises functional groups for compatibilization with the thermoplastic polyamide, hollow glass beads, and optionally reinforcing fillers or extenders.

Patent Literature 9 describes a window or door construction including frame profile and a reinforcing profile, in which a gap in the construction is filled with a material having low thermal conductivity, the thermal conductivity of materials used for the frame profile is at 0.2 W/m·K and the thermal conductivity of materials used for the reinforcing profile is exemplarily 58 W/m·K.

### List of Literatures

### Patent Literatures

Patent Literature 1: Japanese Patent Publication 2007-211213A
Patent Literature 2: Japanese Patent Publication 2007-326939A
Patent Literature 3: Japanese Patent Publication 2008-63402A
Patent Literature 4: US 2008/292820 A1
Patent Literature 5: WO 2010/098287 A1
Patent Literature 6: US 2006/154049 A1
Patent Literature 7: WO 2008/024612 A1
Patent Literature 8: WO 2011/073305 A1
Patent Literature 9: DE 43 31 816 A1

### Object and Summary of Invention

When polycarbonate resin compositions having low total solar transmittance and excellent heat-ray shielding ability proposed in Patent Literatures 1 to 3 etc. are used as molding materials for glazing panel bodies, an amount of IR transmitted through glazing and entering a car can be decreased, thereby preventing temperature rise due to IR entrance into a car. However, general IR-absorbing resin compositions prevent transmittance of light by converting light energy into heat and storing the heat therein, and thus the temperature of glazing is increased by heat storage. Therefore, direct increases in temperature by IR transmittance can be prevented, but the interior temperatures of cars are increased by radiant heat from glazing at temperatures increased by heat storage due to IR absorption. Glass with excellent thermal conductivity has the large effect of radiating heat outward from cars, while resins have low thermal conductivity and thus maintain the heat stored inside cabins due to IR absorption without radiating the heat over a long time, thereby causing the great problem of increasing the interior temperatures of cars due to radiant heat from glazing at high temperatures.

An object of the present invention is to provide a panel having a light-absorbing heat-storing panel body in which the problem of heat storage with light absorption by the panel body is reduced so that the interior temperature of a car can be prevented from increasing due to radiant heat from heat-ray shielding glazing which is increased in temperature by IR absorption.

As a result of repeated intensive researches for solving the problem, the inventors found that when a material having excellent thermal conductivity is used as a material for a panel frame so as to radiate the heat stored in a light-absorbing heat-storing panel body through the thermal-conductive frame member, the amount of heat stored in the panel body can be decreased and an increase in temperature due to radiant heat can be prevented.

Also, it was found that, when a light-absorbing heat-storing panel body has a laminated structure including at least two layers of a layer that contributes to IR absorption and a layer that serves as a heat-insulating layer so that radiation of the heat stored due to IR absorption by the layer contributing to IR absorption can be shielded by the heat-insulating layer, a temperature rise due to radiant heat from the panel body can be prevented.

Further, it was found that in this case, when a material having excellent thermal conductivity is used for a panel frame member so as to radiate the heat stored due to IR absorption by the layer contributing IR absorption through the thermal-conductive frame member, the amount of heat stored in the panel body can be decreased, and a temperature rise due to radiant heat can be prevented.

The present invention has been achieved based on the above findings and provides a panel as defined in claims 1 to 6 and a panel installation structure as defined in claims 7 to 10.

Hereinafter, a light-transmissive first layer constituting a panel body according to a first aspect not according to the claimed invention may be referred to as a "heat-insulating layer", and a light-transmissive second layer having a higher light-absorbing heat-storing property than the heat-insulating layer as the first layer may be referred to as an "IR absorbing layer".

### Advantageous Effects

A panel body of a panel according to a first aspect not according to the claimed invention includes a laminate of at least a light-transmissive and light-absorbing heat-storing IR-absorbing layer and a light-transmissive heat-insulating layer, and thus radiation of the heat stored due to IR absorption by the IR absorbing layer can be inhibited by the heat-insulating layer. Therefore, for example, in application to automotive glazing, when the panel is mounted so that the IR-absorbing layer is disposed on the outside of a car and the heat-insulating layer is disposed on the interior side, radiation of the heat of the IR-absorbing layer at a temperature increased by IR absorption is shielded by the heat-insulating layer, thereby preventing an increase in the interior temperature of a car.

In addition, the panel according to the first aspect not according to the claimed invention further exhibits effects described below.
(1) It is necessary to mix an IR absorber such as metal boride fine particles or the like with a thermoplastic resin composition used as a constituent material of the IR absorbing layer, and a molded product formed by molding the thermoplastic resin composition is inferior in characteristics, such as impact resistance, moisture-heat resistance, and the like, due to mixing of the IR absorber as compared with a molded product formed by molding a thermoplastic resin composition not containing the IR absorber. However, in the panel of the first aspect not according to the claimed invention, the problem of deterioration in the characteristics due to the IR-absorbing layer can be compensated for by the heat-insulating layer, and thus the panel body has characteristics superior to a panel body including only an IR-absorbing layer.
(2) A panel body including only an IR absorbing layer exhibits large elongation (linear expansion) due to heat generated by IR absorption and thus has the problem of producing cracks due to reaction stress and linear expansion stress in a panel attachment portion. However, the panel of the first aspect not according to the claimed invention relieves stress at a constraint point by the heat-insulating layer serving as a buffer layer, and thus cracking due to linear expansion can be prevented.
(3) In order to enhance the IR-absorbing performance of the IR-absorbing layer, it is necessary for the IR-absorbing layer to contain an expensive IR absorber at a high concentration. However, in the panel of the first aspect not according to the claimed invention, the thickness of the IR-absorbing layer can be decreased, and the IR absorber concentration in the IR-absorbing layer can be increased as compared with a thick IR-absorbing layer using the IR absorber in the same amount. On the other hand, the IR absorber is not required for the heat-insulating layer, and thus the total material cost can be decreased.
(4) A thermoplastic resin, particularly an aromatic polycarbonate resin, has the problem of weathering discoloration (yellowing), but the yellowing can be made unnoticeable because the IR-absorbing layer can be thinned and deepened in color.
(5) A resin composition containing an IR absorber is used as a thermoplastic resin material for the constituent material of the IR-absorbing layer, but a molded product has poor residence heat stability during injection molding as compared with a molded product formed by molding a thermoplastic resin material not containing the IR absorber. However, in the panel of the first aspect not according to the claimed invention, the molding cycle can be shortened because the IR-absorbing layer can be thinned, and deterioration in mechanical properties of the panel and detects in the appearance can be suppressed, thereby causing excellent characteristics as a panel as compared with a panel including only the IR-absorbing layer.

In addition, the IR-absorbing layer and the heat-insulating layer are made of the same type of thermoplastic resin, and thus a laminated molded product having excellent adhesion without the problem of delamination can be formed. For example, the panel body can be effectively produced by injection molding using two-component molding or insert molding, thereby causing substantially no disadvantage in a process for producing the panel body having a laminated structure.

Further, in the panel which includes the frame member using a material with excellent thermal conductivity and the IR-absorbing layer formed in contact with the frame member, the heat stored in the IR-absorbing layer can be radiated to the panel support side through the thermal-conductive frame member. That is, for example, in a glazing of an automotive car, the heat stored in the IR-absorbing layer is escaped to a car body frame serving as the panel support through the thermal-conductive frame member, so that the temperature of the IR-absorbing layer can be decreased, and the heat radiated to the interior side of the car from the IR-absorbing layer can be more securely prevented.

In addition, in the panel of the second aspect according to the claimed invention, the frame member uses a material with excellent thermal conductivity, and thus the heat stored in the light-absorbing heat-storing panel body can be radiated to the panel support side through the thermal-conductive frame member. That is, for example, in a glazing of an automotive car, the heat stored in the panel body is escaped to a car body frame serving as the panel support through the thermal-conductive frame member, so that the temperature of the panel body can be decreased, and an increase in interior temperature of the car due to the radiant heat from the panel body can be prevented.

Therefore, in the panel of the first aspect not according to the claimed invention, a temperature increase due to IR transmission can be prevented by IR absorption, and a temperature increase due to the heat stored by IR absorption can be effectively prevented, and thus the amount of energy required for cooling can be decreased, thereby causing an advantage for energy saving.

### Brief Description of Drawings

Fig. 1 is a sectional view of a panel end portion of a panel according to an embodiment of the aspect not according to the claimed invention.
Fig. 2 is a sectional view of a panel end portion of a panel according to another embodiment of the aspect not according to the claimed invention.
Fig. 3 is a drawing showing a panel for glazing used in a panoramic roof of a general automotive car, in which Fig. 3(a) is a back view, Fig. 3(b) is a sectional view taken along line B-B in Fig. 3(a), and Fig. 3(c) is a partial sectional view showing a structure in which the glazing is attached to an automotive roof.
Fig. 4 is a graph showing a relation between visible light transmittance T_{VIS} and total solar transmittance T_{SUN} of various polycarbonate resin compositions.
Fig. 5 is a schematic perspective view showing a test apparatus for a simulation of an automotive panoramic roof used in an example.
Fig. 6 is a sectional view taken along line a-a in Fig. 5.
Fig. 7a is a sectional view showing a panel end portion of an example of a panel according to an embodiment of the present invention.
Fig. 7b is a sectional view showing a panel end portion of another example of a panel according to an embodiment of the present invention.
Fig. 7c is a sectional view showing a panel end portion of a further example of a panel according to an embodiment of the present invention.
Fig. 7d is a sectional view showing a panel end portion of a further example of a panel according to an embodiment of the present invention.
Fig. 7e is a sectional view showing a panel end portion of a further example of a panel according to an embodiment of the present invention.
Fig. 7f is a sectional view showing a panel end portion of a further example of a panel according to an embodiment of the present invention.
Fig. 7g is a sectional view showing a panel end portion of a further example of a panel according to an embodiment of the present invention.
Fig. 8 is a sectional view showing an example of a panel installation structure according to an embodiment of the present invention.
Fig. 9 is a sectional view showing another example of a panel installation structure according to an embodiment of the present invention.
Fig. 10 is a sectional view showing a further example of a panel installation structure according to an embodiment of the present invention.
Fig. 11 is a sectional view showing a further example of a panel installation structure according to an embodiment of the present invention.
Fig. 12 is a sectional view showing a further example of a panel installation structure according to an embodiment of the present invention.
Fig. 13 is a sectional view showing a further example of a panel installation structure according to an embodiment of the present invention.
Fig. 14 is a sectional view showing a further example of a panel installation structure according to an embodiment of the present invention.
Fig. 15 is a sectional view showing a further example of a panel installation structure according to an embodiment of the present invention.
Fig. 16 is a sectional view showing a further example of a panel installation structure according to an embodiment of the present invention.
Fig. 17 is a sectional view showing a further example of a panel installation structure according to an embodiment of the present invention.
Fig. 18 is a sectional view showing a further example of a panel installation structure according to an embodiment of the present invention.
Fig. 19 is a schematic perspective view showing a test apparatus used in an example.
Fig. 20 is a sectional view taken along line a-a or line b-b in Fig. 19.
Fig. 21 is an enlarged sectional view showing a portion in which a metal plate is attached to a panel in the test apparatus shown in Fig. 19.

### Description of Embodiments

### [First aspect not according to the claimed Invention]

A panel according to an embodiment of a first aspect not according to the claimed invention is described below with reference to the drawings.

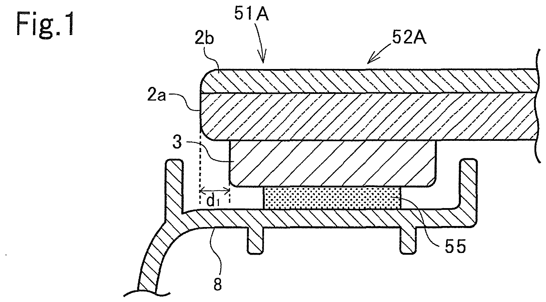

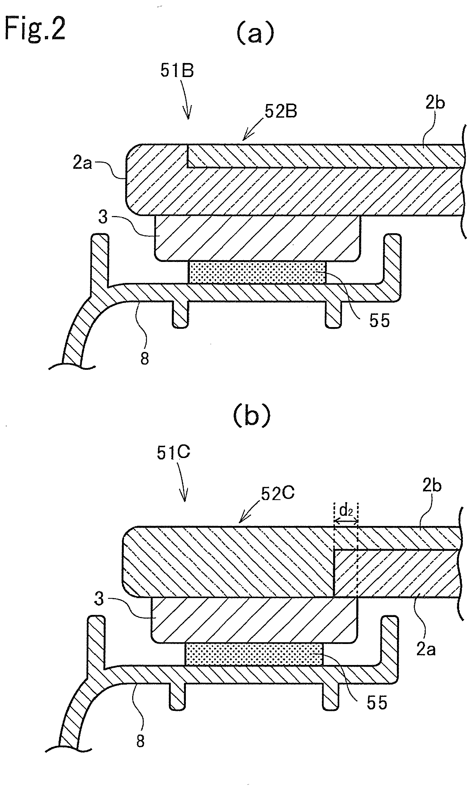

Figs. 1 and 2 are each a sectional view showing a panel end portion of a panel according to an embodiment of the first aspect not according to the claimed invention, and like in Fig. 3(c), a state where the panel is attached to an automotive roof is shown. However, Figs. 1 and 2 do not shown a member corresponding to a seal member 26 shown in Fig. 3(c).

The panel is described by giving an example in which a panel body having a two-layer laminated structure including a heat-insulating layer as a first layer and an IR-absorbing layer as a second layer. However, the panel body of the panel is not limited to the two-layer laminated structure, and another layer may be interposed between the first layer and the second layer, or many layers may be further laminated on the first layer side. However, in the laminated structure as the panel body, the IR-absorbing layer as the second layer preferably becomes the outermost layer, and the panel is used for various applications so that the IR-absorbing layer side is a solar light incident side.

A panel 51A shown in Fig. 1 includes a panel body 52A and a frame member 3 provided on a peripheral portion of the back surface of the panel body 52A, and the frame member 3 of the panel 51A is bonded to a support 8 such as a car body frame or the like with a urethane-based adhesive 55 or the like.

In the panel 51A shown in Fig. 1, the panel body 52A has a two-layer laminated structure including a heat-insulating layer 2a as a first layer and an IR-absorbing layer 2b as a second layer.

A panel 51B shown in Fig. 2(a) is different from the panel 51A shown in Fig. 1 in that the whole peripheral portion on the second layer as the IR-absorbing layer 2b side of a panel body 52B is also composed of the heat-insulating layer 2a as the first layer, and the other components are the same as in the panel 51A.

A panel 51C shown in Fig. 2(b) is different from the panel 51A shown in Fig. 1 in that the whole peripheral portion on the first heat-insulating layer 2a side of a panel body 52C is also composed of the second IR-absorbing layer 2b, a frame member 3 is provided in contact with the IR-absorbing layer 2b, and the other components are the same as in the panel 51A.

### [Panel body]

Although thermoplastic resin compositions constituting the IR-absorbing layer and the heat-insulating layer of the panel body are described later, the IR-absorbing layer, the heat-insulating layer, and the panel body constituting the panel preferably have the following characteristics or physical properties.

### {Optical characteristics}

A constituent material of the IR-absorbing layer satisfies characteristics (1) and (2) below, and a constituent material of the heat-insulating layer satisfies characteristics (1) and (3) below.
(1) Visible light transmittance T_{VIS} measured with a thickness of 5 mm according to ISO-9050 (simply referred to as "visible light transmittance T_{VIS}" hereinafter) is 5% or more and 98% or less.
(2) A difference (T_{S/V} - T_{SUN}) between reduced total solar transmittance T_{S/V} and total solar transmittance T_{SUN} measured with a thickness of 5 mm according to ISO-13837 (simply referred to as "total solar transmittance T_{SUN}" hereinafter) is more than 0%, the reduced total solar transmittance T_{S/V} being calculated by equation (i) below from visible light transmittance T_{VIS} and the total solar transmittance T_{SUN}.
(3) A difference (T_{S/V} - T_{SUN}) between reduced total solar transmittance T_{S/V} and total solar transmittance T_{SUN} is 5% or less and smaller than the difference (T_{S/V} - T_{SUN}) between reduced total solar transmittance T_{S/V} and total solar transmittance T_{SUN}, which is described above in (2), the reduced total solar transmittance T_{S/V} being calculated by equation (i) below from visible light transmittance T_{VIS} and total solar transmittance T_{SUN}. ${T}_{S / V} = \left(0.56\times {T}_{VIS}\right) + 38.8$

In the first aspect not according to the claimed invention, the difference (T_{S/V} - T_{SUN}) between reduced total solar transmittance T_{S/V} and total solar transmittance T_{SUN} described above in (3) is more preferably 0% or less.

### <Visible light transmittance T_{VIS}>

Visible light transmittance T_{VIS} is used as an index for transmissivity, and constituent materials of the IR-absorbing layer and the heat-insulating layer preferably have a visible light transmittance T_{VIS} of 5 to 98% measured with a thickness of 5 mm according to ISO-9050. When the constituent materials of the IR-absorbing layer and the heat-insulating layer have a visible light transmittance T_{VIS} of less than 5%, satisfactory visibility cannot be secured. The higher the visible light transmittance T_{VIS}, the more excellent visibility is, but the visible light transmittance T_{VIS} is generally 98% or less. Also, in view of visibility, the panel body preferably has a visible light transmittance T_{VIS} of 5 to 98% and more preferably 10 to 90%.

In these layers, the constituent material of the IR-absorbing layer preferably has a visible light transmittance T_{VIS} of 5% to 85%, particularly 10 to 70%, depending on required IR absorptivity and privacy protection effect.

On the other hand, with respect to the heat-insulating layer, a color pigment or the like can be mixed in a thermoplastic resin composition used as the constituent material of the heat-insulating layer, but the thermoplastic resin composition is preferably colorless transparent without containing a color pigment or the like or very lightly colored transparent in order to enhance the mechanical strength and moisture-heat resistance of the heat-insulating layer. Therefore, the heat-insulating layer is preferably a colorless transparent layer with high transmissivity, and thus the constituent material of the heat-insulating layer preferably has a visible light transmittance T_{VIS} of 10 to 98%, particularly preferably 70 to 98%, and most preferably 80 to 98%.

In the first aspect not according to the claimed invention, preferably, the IR-absorbing layer is imparted with IR absorptivity and coloring property required for the panel body, and the heat-insulating layer is made colorless transparent or light-blue transparent. Therefore, a difference (T_{VIS1} - T_{VIS2}) between visible light transmittance T_{VIS1} of the constituent material of the heat-insulating layer and visible light transmittance T_{VIS2} of the constituent material of the IR-absorbing layer is preferably 20 to 90%, particularly 40 to 90%, that is, the difference is preferably relatively large for discriminating between the functions of the layers.

### <Relation between visible light transmittance T_{VIS} and total solar transmittance T_{SUN}>

The IR-absorbing layer has light transmissivity and the light-absorbing heat-storing property of absorbing light (IR), converting the light to heat, and storing the heat therein. The degrees of light transmissivity and IR absorptivity can be represented by visible light transmittance T_{VIS} and total solar transmittance T_{SUN}, and the IR-absorbing layer is preferably composed of a material satisfying the above-described characteristics (1) and (2).

In the characteristic (2), the equation (i) is determined as follows and is used as an index for a degree of IR absorptivity.

### {(i) Method for determining equation (i)}

Polycarbonate resin composition Nos. 1 to 8 having formulations shown in Table 1 below were prepared as colored light-transmissive resin compositions not imparted with the light-absorbing heat-storing property, and each of the polycarbonate resin compositions was molded into a specimen of 150 mm × 100 mm × 5 mm in thickness using an injection molding machine described below under molding conditions below.

Injection molding machine: "J220EVP" (mold clamping force 220 t) manufactured by Japan Steel Works, Ltd.

| | |
|---|---|
| Molding conditions: | Resin temperature during molding: 300°C |
| | Mold temperature: 80°C |
| | Filling time: 2.5 seconds |
| | Holding pressure: 50% of peak pressure during injection for 15 seconds |
| | Cooling time: 20 seconds |

Pellets of each of the polycarbonate resin compositions were used after being hot-air dried at 120°C for 5 hours before injection molding. The resultant molded product was measured with respect to visible light transmittance T_{VIS} and total solar transmittance T_{SUN} according to ISO-9050. The results are shown in Table 1.

The specifications of raw materials of the resin compositions used in the formulations shown in Table 1 are as follows.

Polycarbonate resin 1: trade name "Iupilon (registered trade name) E-2000FN" (viscosity-average molecular weight 28,000) manufactured by Mitsubishi Engineering-Plastics Corporation
Polycarbonate resin 2: trade name "Iupilon (registered trade name) S-3000FN" (viscosity-average molecular weight 21,500) manufactured by Mitsubishi Engineering-Plastics Corporation
Heat stabilizer 1: trade name "Adeka Stab AS2112" (tris(2,4-di-tert-butylphenyl)phosphite) manufactured by Adeka Corp.

Heat stabilizer 2: trade name "Irganox 1010" pentaerythritol tetrakis[3-(3,5-di-tert-butyl-4-hydroxyphenyl) propionate] manufactured by BASF Corporation

Mold release agent: trade name "VPG861" (pentaerythritol tetrastearate) manufactured by Cognis Japan Ltd.

Ultraviolet absorber: trade name "Seesorb 709" (2-(2'-hydroxy-5'-tert-octylphenyl)-2H-benzotriazole) manufactured by Shipro Kasei Co., Ltd.

Red dye 1: trade name "Plast Red 8370" (perinone-based) manufactured by Arimoto Chemical Co., Ltd.

Red dye 2: trade name "Kayaset Red A-2G" (perinone-based) manufactured by Nippon Kayaku Co., Ltd.

Blue dye 1: trade name "Plast Blue 8580" (anthraquinone-based) manufactured by Arimoto Chemical Co., Ltd.

Blue dye 2: trade name "Macrolex Blue RR" (anthraquinone-based) manufactured by Lanxess Co., Ltd.

Green dye: trade name "Sumiplast Green G" (anthraquinone-based) manufactured by Sumika Chemtex Co., Ltd.

Yellow dye: trade name "KP Plast Yellow MK" (anthraquinone-based) manufactured by Kiwa Chemical Industry Co., Ltd.

Carbon black: trade name "Monarch 800" manufactured by Cabot Corporation

In Table 1, the unit of numeral values of the polycarbonate resin 1, polycarbonate resin 2, heat stabilizer 1, heat stabilizer 2, mold release agent, and ultraviolet absorber is "% by mass", and a total of these values is 100% by mass.

The unit of numerical values of the other components such as the dyes and carbon black is "parts by mass", and each numeral value represents parts by mass mixed relative to a total of 100 parts by mass of the polycarbonate resin 1, polycarbonate resin 2, heat stabilizer 1, heat stabilizer 2, mold release agent, and ultraviolet absorber.

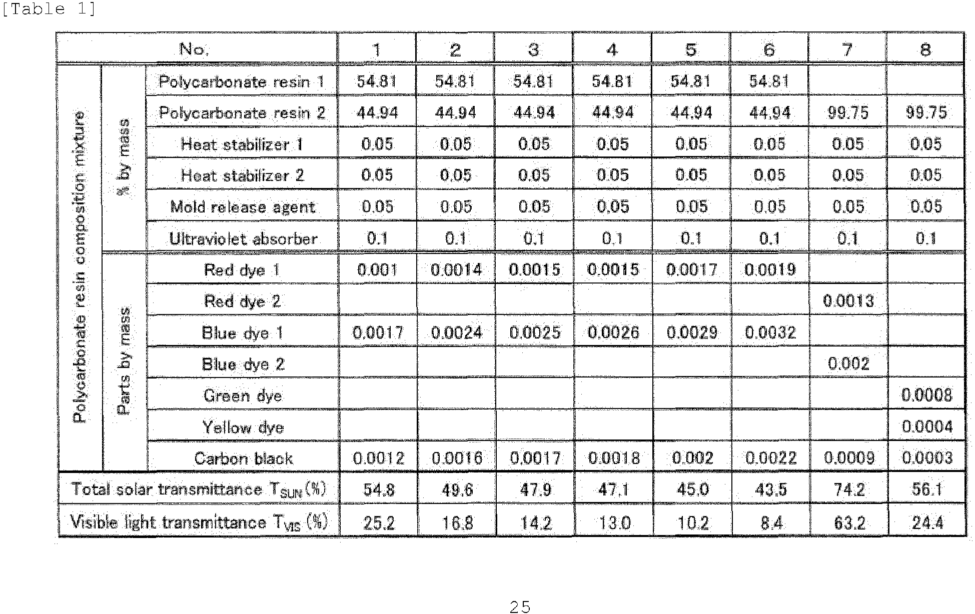

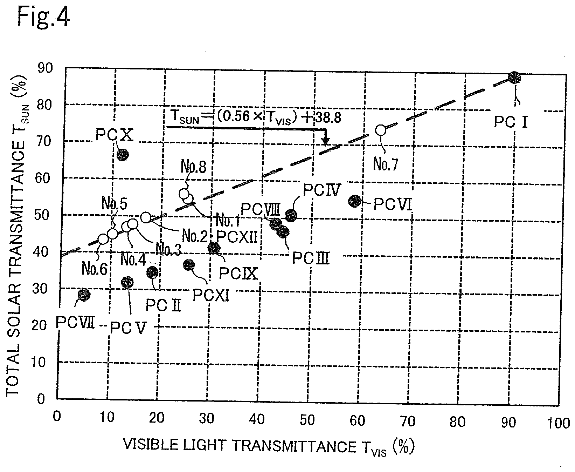

Fig. 4 is a graph showing the measurement results of visible light transmittance T_{VIS} and total solar transmittance T_{SUN} described in Table 1.

In Fig. 4, two plots with low T_{SUN} are selected from the plots of Nos. 1 to 8, and a relational equation below is determined from a line connecting the two plots. ${T}_{SUN} = \left(0.56\times {T}_{VIS}\right) + 38.8$

The above reveals that polycarbonate resin composition Nos. 1 to 8 are colored light-transmissive polycarbonate resin compositions used for general glazing not imparted with IR absorptivity (light-absorbing heat-storing property), and the colored light-transmissive polycarbonate resin compositions have the relation T_{SUN} = (0.56 × T_{VIS}) + 38.8 between the visible light transmittance T_{VIS} and total solar transmittance T_{SUN}.

Therefore, a value of T_{SUN} calculated by T_{SUN} = (0.56 × T_{VIS}) + 38.8 is regarded as reduced total solar transmittance T_{S/V}, and when the measured total solar transmittance T_{SUN} is smaller than the calculated T_{S/V}, a resin composition is considered to have IR absorptivity. In the first aspect not according to the claimed invention, when a difference (T_{S/V} - T_{SUN}) between reduced total solar transmittance T_{S/V} calculated by the equation (i) and the measured total solar transmittance T_{SUN} is more than 0% in terms of IR absorptivity of a light-transmissive and light-absorbing heat-storing resin composition, a material is defined to have IR absorptivity and the light-absorbing heat-storing property.

The larger the difference (T_{S/V} - T_{SUN}) between reduced total solar transmittance T_{S/V} calculated by the equation (i) and total solar transmittance T_{SUN} is, the more excellent the IR absorptivity is. However, when visible light transmittance is maintained equivalent, in view of the limit of composition design of a resin composition, the difference (T_{S/V} - T_{SUN}) is generally 0.1 to 25% and preferably 0.5 to 25%.

On the other hand, the heat-insulating layer has substantially no IR absorptivity, and a difference (T_{S/V} - T_{SUN}) between reduced total solar transmittance T_{S/V} calculated by the equation (i) and total solar transmittance T_{SUN} of the constituent material of the heat-insulating layer is 5% or less and smaller than the difference (T_{S/V} - T_{SUN}) between reduced total solar transmittance T_{S/V} and total solar transmittance T_{SUN} of the above-described IR-absorbing layer, preferably 0% or less, more preferably -25 to 0%, and still more preferably -10 to 0%.

### <Color difference ΔE>

In the panel body, the heat-insulating layer can be formed as a colored transparent layer, but is preferably a colorless transparent or light blue transparent layer. Therefore, the degree of coloring of the panel body is preferably determined by coloring of the IR-absorbing layer. Therefore, a color difference ΔE between the IR-absorbing layer and the entire panel body is preferably 10 or less and particularly preferably 5 or less. When ΔE exceeds 10, the panel body tends to be difficult to give a required color tone. In the first aspect not according to the claimed invention, a color difference ΔE between the IR-absorbing layer and the panel body is measured by a method described in the paragraphs of examples below.

### <Thickness>

In the panel body, in view of the material cost of the panel body, physical properties of the panel body, and the like, it is preferred to decrease the thickness of the IR-absorbing layer and increase the thickness of the heat-insulating layer after securing required IR absorptivity because strength and moisture-heat resistance of the panel body can be compensated by the heat-insulating layer, the heat insulating property of the heat-insulating layer can be enhance to suppress cracking due to linear expansion and appearance defects, and the amount of the resin material used in the IR-absorbing layer to which the IR absorber is added can be decreased.

Therefore, a ratio (D₂/D) of the thickness D₂ of the IR-absorbing layer to the thickness D of the panel body is preferably 0.9 or less, for example, 0.01 to 0.9. The thickness D₂ of the IR-absorbing layer is preferably 0.01 to 5 mm and more preferably 0.1 to 5 mm. With the IR-absorbing layer having a thickness larger than the upper limit, the satisfactory heat-insulating property cannot be exhibited, and there is the tendency to cause difficulty in satisfactorily achieving the effect of improving impact resistant strength and moisture-heat resistance by the heat-insulating layer and the effect of decreasing cracking due to linear expansion and the material cost. The IR-absorbing layer having a thickness smaller than the lower limit may not satisfy the required IR absorptivity or may not constitute a panel body in which surface smoothness and uniformity of transparent performance required for a glass component, graphical design function, and the like are secured.

### <Thermal conductivity>

In the panel body, the heat-insulating layer preferably has the high heat-insulating property, but the thermal conductivity is preferably not much different from the thermal conductivity of the IR-absorbing layer. Therefore, a ratio T₂/T₁ of thermal conductivity T₂ of the IR-absorbing layer to thermal conductivity T₁ of the heat-insulating layer is preferably 0.5 to 1.5, particularly 0.7 to 1.4. The thermal conductivity ratio T₂/T₁ higher than the upper limit has difficulty in maintaining transparency of the panel body, and the thermal conductivity ratio T₂/T₁ lower than the lower limit may cause no heat-insulating effect by providing the heat-insulating layer. The thermal conductivity T₂ of the IR-absorbing layer is preferably 0.1 to 0.4 W/m·K and more preferably 0.2 to 0.35 W/m·K. The thermal conductivity T₁ of the heat-insulating layer is preferably 0.1 to 0.4 W/m·K and more preferably 0.2 to 0.35 W/m·K.

In addition, the thermal conductivity of each of the heat-insulating layer and the IR-absorbing layer is measured by a method described in the paragraphs of examples below.

### <Dimensions, shape etc.>

When in the panel body, at least a portion of the peripheral portion of the IR-absorbing layer is composed of the heat-insulating layer as shown in Fig. 2(a), radiation of the heat stored by light absorption by the IR-absorbing layer can be more securely suppressed by the heat-insulating layer. In this case, the thickness of the heat-insulating layer that covers the peripheral portion of the IR-absorbing layer, that is, the thickness from the peripheral edge of the IR-absorbing layer to the peripheral edge of the panel body, is preferably 0.5 to 3 mm and more preferably 0.5 to 2 mm. The heat-insulating layer having a thickness smaller than the lower limit has the small heat-insulating effect exhibited by proving the heat-insulating layer, and the heat-insulating layer having a thickness larger than the upper limit has the tendency to impair IR absorptivity in the peripheral portion and degrade the whole appearance of the panel.

On the other hand, when as shown in Fig. 2(b), at least a portion of the peripheral portion of the heat-insulating layer is composed of the IR-absorbing layer, and the highly thermal conductive frame member described below is provided in contact with the IR-absorbing layer, the heat stored by light absorption by the IR-absorbing layer can be radiated through the highly thermal conductive frame member. In this case, the thickness of the IR-absorbing layer that covers the peripheral portion of the heat-insulating layer, that is, the thickness from the peripheral edge of the heat-insulating layer to the peripheral edge of the panel body, is preferably 5 to 160 mm, more preferably 30 to 150 mm, still more preferably 50 to 100 mm. The IR-absorbing layer having a thickness smaller than the lower limit has the tendency to decrease the area of contact between the IR-absorbing layer and the highly thermal conductive frame member, thereby degrading the transfer of heat of the IR-absorbing layer to the frame member. The IR-absorbing layer having a thickness larger than the upper limit has the possibility of producing a difference in linear expansion deformation between the IR-absorbing layer and the heat-insulating layer, leading to deformation or stress concentration of the panel body.

In the panel body, the frame member is generally formed on the peripheral portion of the heat-insulating layer forming-side surface.

In the panel, the dimensions and shapes of the frame member and the panel body are appropriately designed according to application.

In general, the thickness of the panel body is about 2 to 10 mm and preferably 3 to 8 mm, and the thickness of the frame member is about 0.5 to 5 mm and preferably 1 to 4 mm. Also, the ratio between the thickness of the panel body and the thickness of the frame member is preferably 0.75 to 5.0 and particularly preferably about 1.5 to 4.0.

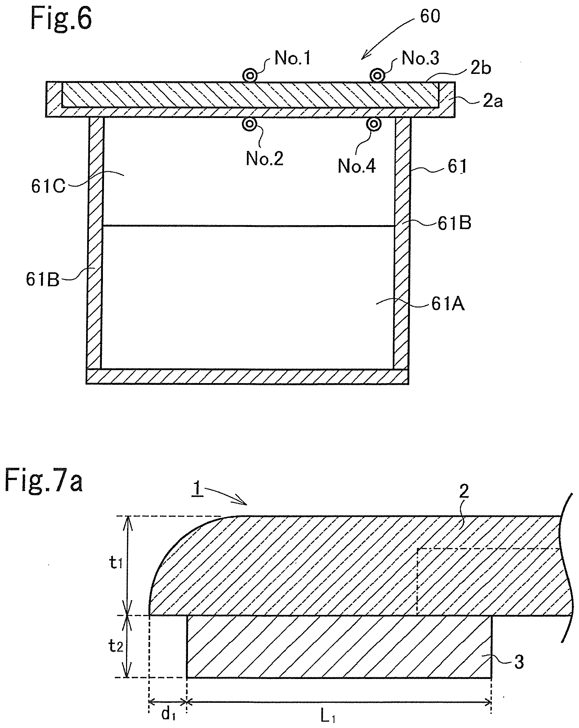

In general, the outer edge of the frame member is retreated from the outer edge of the panel body toward the plate center side of the panel body. In this way, when the outer edge of the frame member is retreated from the outer edge of the panel body toward the plate center side of the panel body, there is the tendency of preventing the resin from flowing to the back side during molding of the frame member. However, when the retreat width is excessively large, graphical design function and solvent resistance are impaired. Therefore, the retreat width (d₁ shown in Fig. 1 and Fig. 7a described below) of the frame member from the outer edge of the panel body is preferably about 0.1 to 10 mm, particularly preferably 0.5 to 5 mm, and most preferably 0.5 to 2 mm.

Also, in the case where the peripheral portion of the heat-insulating layer is composed of the IR-absorbing layer as shown in Fig. 2(b), when the IR-absorbing layer is formed to have an exposed portion without an overlap between the frame member and the heat-insulating layer, the heat stored by light absorption in the IR-absorbing layer leaks, and thus the frame member preferably partially overlaps with the heat-insulating layer side. The overlap (d₂ shown in Fig. 1(b)) is preferably 0.1 to 50 mm, more preferably 1 to 40 mm, particularly 3 to 30 mm, and most preferably 5 to 20 mm. Without the overlap, as described above, the heat-insulating property is undesirably impaired, while with the excessive overlap, heat is not easily transferred from the IR-absorbing layer to the frame member.

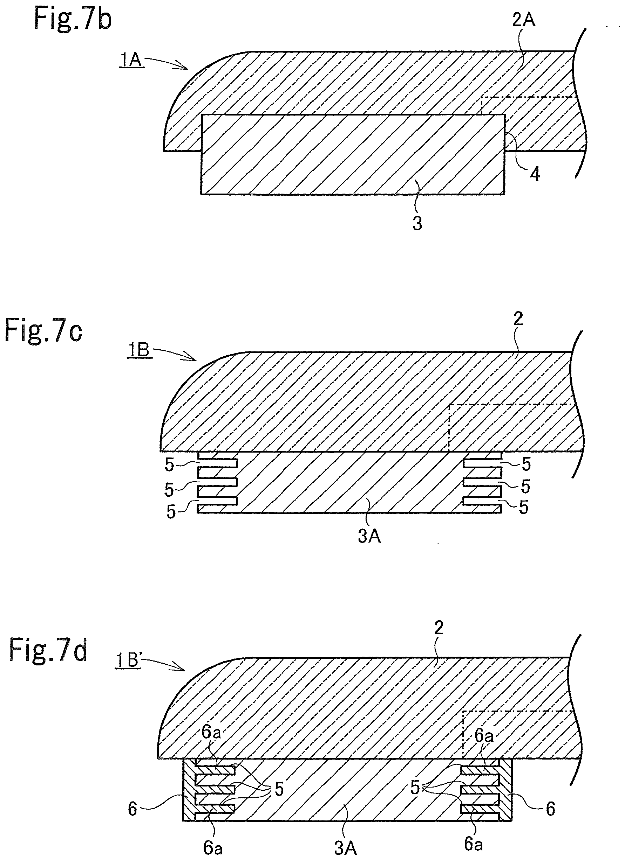

In addition, as shown in Fig. 7b described below, a groove may be provided in the frame member-forming surface of the panel body so that the frame member is fitted into the groove. In this case, the depth of the groove is preferably about 1 to 50%, more preferably 10 to 50%, and still more preferably 10 to 40% of the thickness of the frame member.

The panel body may have a plate-like shape, and as shown in Fig. 3, the surface (IR-absorbing layer forming side) opposite to the frame member-forming surface may be convexly curved.

Also, the panel generally has a substantially rectangular shape, but the shape is not limited to a substantially rectangular shape.

For example, when the panel has a substantially rectangular shape, the dimensions are not particularly limited and are appropriately selected and determined according to application. However, in general, in use for application to an automotive window material, the area of the panel body inside the frame member is about 400 cm² to 2 m², and the width of the frame member is about 30 to 200 mm. In particular, the area of the panel body inside the frame member is preferably about 800 cm² to 1 m², and the width of the frame member is preferably about 30 to 150 mm.

When the panel body has a substantially rectangular shape and is convexly curved on the front surface side, the height of the most convexly curved portion of the front surface may be appropriately selected and determined according to application, but in general, the height is preferably a value such that R in the long-side direction (longitudinal direction) of the panel body is preferably 5000R to 20000R, particularly about 10000R to 20000R, and R in the short-side direction (lateral direction) is preferably 1000R to 15000R, particularly about 5000R to 10000R.

In addition, a concave-convex portion may be formed in the interface (bonded surface) between the back surface of the panel body and the frame member in order to enhance the bonding strength between the panel body and the frame member by virtue of a concave-convex fitting structure. Also, an attachment piece for attaching another component may be provided in a protruding form on the frame member.

Also, as described below, the frame member may be formed so that the thickness of at least a peripheral portion on the plate center side of the panel body decreases toward the plate center side.

The panel is produced by, for example, the following methods.
(1) The IR-absorbing layer, the heat-insulating layer, and the frame member are integrally formed by multi-compomemt injection molding.
(2) Any one or two of the IR-absorbing layer, the heat-insulating layer, and the frame member are previously formed by injection molding and used for integrally molding the panel by insert injection molding.
(3) Any one of the IR-absorbing layer and the heat-insulating layer is previously formed into a sheet by extrusion molding and used for inserting injection molding to form the panel body, and further the frame member is integrally formed by multi-component molding.

In particular, when any one of the IR-absorbing layer and the heat-insulating layer constituting the panel body has a sheet shape, for example, having a thickness of 0.05 to 2 mm, preferably 0.1 to 1 mm, the method (3) is preferably used.

### [Constituent material of IR-absorbing layer]

The constituent material of the IR-absorbing layer of the panel body is not particularly limited as long as it satisfies the above-described conditions (1) and (2). An example of the material is a light-transmissive, light-absorbing, heat-storing polycarbonate resin composition prepared by adding 0.0001 to 0.5 parts by mass of metal boride fine particles of at least one metal selected from the group consisting of La, Ce, Pr, Nd, Tb, Dy, Ho, Y, Sm, Eu, Er, Tm, Yb, Lu, Sr, and Ca relative to 100 parts by mass of an aromatic polycarbonate resin having a water content of 500 ppm or more (Japanese Unexamined Patent Application Publication No. 2007-211213).

The light-transmissive, light-absorbing, heat-storing polycarbonate resin composition (hereinafter, may be referred to as the "light-transmissive, light-absorbing heat-storing polycarbonate resin composition of the first aspect not according to the claimed invention") is described below.

### (1) Aromatic polycarbonate resin

The aromatic polycarbonate resin is an aromatic polycarbonate polymer produced by reacting an aromatic hydroxyl compound with phosgene or carbonic acid diester. A method for producing the aromatic polycarbonate resin is not particularly limited, and usual methods such as a phosgene method (interfacial polymerization method), a melting method (ester exchange method), and the like can be used.

Typical examples of an aromatic dihydroxy compound used as a raw material of the aromatic polycarbonate resin include bis(4-hydroxyphenyl)methane, 2,2-bis(4-hydroxyphenyl)propane, 2,2-bis(4-hydroxy-3-methylphenyl)propane, 2,2-bis(4-hydroxy-3-tert-butylphenyl)propane, 2,2-bis(4-hydroxy-3,5-dimethylphenyl)propane, 2,2-bis(4-hydroxy-3,5-dibromophenyl)propane, 4,4-bis(4-hydroxyphenyl)heptane, 1,1-bis(4-hydroxyphenyl)cyclohexane, 4,4'-dihydroxybiphenyl, 3,3',5,5'tetramethyl-4,4'-dihydroxybiphenyl, bis(4-hydroxyphenyl) sulfone, bis(4-hydroxyphenyl) sulfide, bis(4-hydroxyphenyl) ether, bis(4-hydroxyphenyl) ketone, and the like. These aromatic dihydroxy compounds can be used alone or as a mixture of two or more. Further, polyhydric phenol or the like, which contains 3 or more hydroxyl groups in its molecule, such as 1,1,1-tris(4-hydroxyphenyl)ethane (THPE), 1,3,5-tris(4-hydroxyphenyl)benzene, or the like, can be used as a branching agent in a small amount in combination with the aromatic dihydroxy compound. Among these aromatic dihydroxy compounds, 2,2-bis(4-hydroxyphenyl)propane (may be referred to as "bisphenol A" and abbreviated as "BPA" hereinafter) is preferred.

In polymerization by the ester exchange method, a carbonic acid diester is used as a monomer in place of phosgene. Typical examples of the carbonic acid diester include diaryl carbonates such as diphenyl carbonate, ditolyl carbonate, and the like, and dialkyl carbonates such as dimethyl carbonate, diethyl carbonate, di-tert-butyl carbonate, and the like. These carbonic acid diesters can be used alone or as a mixture of two or more. Among these, diphenyl carbonate (may be abbreviated as "DPC" hereinafter) and substituted diphenyl carbonate are preferred.

The carbonic acid diester may be substituted, in an amount of preferably 50 mol% or less, more preferably 30 mol% or less, by dicarboxylic acid or dicarboxylic acid ester. Typical examples of the dicarboxylic acid or dicarboxylic acid ester include terephthalic acid, isophthalic acid, diphenyl terephthalate, diphenyl isophthalate, and the like. Substitution by the dicarboxylic acid or dicarboxylic acid ester produces polyester carbonate.

When the aromatic polycarbonate resin is produced by the ester exchange method, a catalyst is generally used. The catalyst type is not limited, but a basic compound such as an alkali metal compound, an alkaline-earth metal compound, a basic boron compound, a basic phosphorus compound, a basic ammonium compound, an amine-based compound, or the like is generally used. Among these, an alkali metal compound and/or an alkaline-earth metal compound is particularly preferred. These may be used alone or in combination of two or more. In the ester exchange method, the polymerization catalyst is generally deactivated with p-toluenesulfonic acid ester or the like.

The aromatic polycarbonate resin is preferably polycarbonate derived from 2,2-bis(4-hydroxyphenyl)propane or a polycarbonate copolymer derived from 2,2-bis(4-hydroxyphenyl)propane and another aromatic dihydroxy compound. Further, for the purpose of imparting flame retardancy or the like, a polymer or oligomer having a siloxane structure can be copolymerized. The aromatic polycarbonate resin may be a mixture of two or more polymers and/or copolymers produced from different raw materials and may have up to 0.5 mol% of a branch structure. The content of terminal OH groups in the aromatic polycarbonate resin is, on a mass basis, generally 10 to 2,000 ppm, preferably 10 to 1,500 ppm, and more preferably 20 to 1,000 ppm, and a terminal sealed with p-tert-butylphenol, phenol, cumylphenol, p-long-chain-alkyl-substituted phenol, or the like can be used as a sealed terminal. The concentration of terminal hydroxyl groups refers to a ratio of the mass of terminal hydroxyl groups to the mass of the aromatic polycarbonate resin, and a measurement method is colorimetry by a titanium tetrachloride/acetic acid method (method described in Macromol. Chem. 88 215 (1965)). The amount of the aromatic dihydroxy compound remaining as a monomer in the aromatic polycarbonate resin is, on a mass basis, 150 ppm or less, preferably 100 ppm or less, and more preferably 50 ppm or less. In the case of synthesis by the ester exchange method, the residual amount of carbonic acid diester is, on a mass basis, 300 ppm or less, preferably 200 ppm or less, and more preferably 150 ppm or less.

The molecular weight of the aromatic polycarbonate resin is not particularly limited, but the viscosity-average molecular weight calculated from solution viscosity is in a range of 10,000 to 50,000, preferably 11,000 to 40,000, particularly preferably in a range of 14,000 to 30,000. The viscosity-average molecular weight of less than 10,000 may cause insufficient mechanical strength, and the viscosity-average molecular weight exceeding 50,000 tends to easily cause difficulty in molding.

The viscosity-average molecular weight (M_{V}) represents a value calculated by the Schnell viscosity formula ([η] = 1.23 × 10⁻⁴ M_{V}^{0.83}) from limiting viscosity [η] (unit dl/g) determined at a temperature 20°C with an Ubbellohde viscometer using methylene chloride as a solvent.

The water content of the aromatic polycarbonate resin at room temperature in air is, on a mass basis, generally about 1,5000 to 2,000 ppm in terms of water amount in the resin, but the water content varies depending on humidity in the air. Therefore, the water content of the aromatic polycarbonate resin is actually determined by the influences of ambient temperature-humidity environments including the influences of regional differences and season. For example, the water content of a BPA polycarbonate resin is about 1,500 ppm at room temperature and a relative humidity of 50%, but the water content is decreased to about 500 ppm under the condition of a relative humidity of less than 30%.

In general, it is necessary to decrease the water content of a BPA polycarbonate resin to 200 ppm on a mass basis in order to suppress a decrease in molecular weight due to hydrolysis during molding, and thus drying is performed at 120°C for 4 hours or more. However, in melt-kneading an aromatic polycarbonate resin and metal boride fine particles with an extruder or the like, in order to improve dispersibility of the metal boride fine particles and decrease haze, it is effective to use the aromatic polycarbonate resin having a water content of 500 ppm or more.

When the aromatic polycarbonate resin stored under dry conditions including a relative humidity of 30% or less is used, in order to achieve the effect of the first aspect not according to the claimed invention, it is necessary to control the water content of the aromatic polycarbonate resin to 500 ppm or more, preferably 1,000 ppm or more, more preferably 1,500 ppm or more.

In order to control the water content of the aromatic polycarbonate resin to 500 ppm by mass or more, the resin may be stored in an environment where the relative humidity is kept at 50% or more at room temperature, but humidity controlling can also be performed by dipping in water, steam treatment, or the like. However, contact with water at a high temperature over a time longer than necessary is undesired because the contact causes a decrease in the molecular weight of the aromatic polycarbonate resin due to hydrolysis. Since the water content of the aromatic polycarbonate resin reaches a saturated state by dipping for over 200 hours, the treatment time required for dipping in water, steam treatment, or the like is preferably 200 hours or less.

### (2) Metal boride fine particles

The metal boride used in the light-transmissive, light-absorbing heat-storing polycarbonate resin composition of the first aspect not according to the claimed invention is required to be composed of fine particles of a boride of at least one metal selected from the group consisting of La, Ce, Pr, Nd, Tb, Dy, Ho, Y, Sm, Eu, Er, Tm, Yb, Lu, Sr, and Ca. The metal boride fine particles preferably have unoxidized surfaces, but even when the metal boride fine particles are slightly oxidized, they can be used without changing effectiveness of the heat-ray shielding effect. The metal boride fine particles are composed of colored powder of grayish black, brownish black, greenish black, or the like, but in a state in which the fine particles are ground to a particle diameter sufficiently smaller than a visible light wavelength and dispersed in a resin molded product, the resultant resin molded product having the heat-ray shielding ability is imparted with visible light transmissivity and can sufficiently maintain the strong infrared light shielding ability. In addition, the particle diameter of the metal boride fine particles is 1,000 nm or less and preferably 200 nm or less. The resin molded product containing fine particles having a particle diameter larger than 1,000 nm or coarse particles including aggregated fine particles is undesired because transparency is decreased due to higher haze.

The metal boride fine particles having surfaces coated with a silane compound, a titanium compound, a zirconia compound, or the like can be used in the light-transmissive, light-absorbing heat-storing polycarbonate resin composition of the first aspect not according to the claimed invention, and surface coating of the fine particles with such a compound can improve water resistance of the metal boride fine particles.

Also, the metal boride fine particles in the light-transmissive, light-absorbing heat-storing polycarbonate resin composition of the first aspect not according to the claimed invention are preferably dispersed in a polymer-based dispersant in order to improve uniform dispersibility and workability. The polymer-based dispersant having high transparency and high light transmittance within the visible light region can be used. Examples of the polymer-based dispersant include a polyacrylate-based dispersant, a polyurethane-based dispersant, a polyether-based dispersant, a polyester-based dispersant, a polyester urethane-based dispersant, and the like, and a polyacrylate-based dispersant, a polyether-based dispersant, and a polyester-based dispersant are preferred. The mixing ratio of the polymer-based dispersant to the metal boride fine particles is generally 0.3 parts by mass or more and less than 50 parts by mass, preferably 1 part by mass or more and less than 15 parts by mass, relative to 1 part by mass of the metal boride fine particles.

A method for dispersing the metal boride fine particles in the polymer-based dispersant includes, for example, mixing appropriate amounts of the boride fine particles, an organic solvent, and the polymer-based dispersant by a beads mill using zirconia beads having a diameter of 0.3 mm for 5 hours to prepare a dispersion of the metal boride fine particles (concentration of the metal boride fine particles: 6.5% by mass). Further, an appropriate amount of the polymer-based dispersant is added to the resultant dispersion, and then the organic solvent is removed under stirring at 60°C and reduced pressure, preparing a dispersion of the metal boride fine particles.

With respect to the mixing ratio between the aromatic polycarbonate resin and the metal boride fine particles, the ratio of the metal boride fine particles is generally 0.0001 to 0.5 parts by mass, more preferably 0.0005 to 0.1 parts by mass, and still more preferably 0.001 to 0.05 parts by mass relative to 100 parts by mass of the aromatic polycarbonate resin. The mixing ratio of the metal boride fine particles of less than 0.0001 parts by mass causes the small heat-ray shielding effect, while the mixing ratio of the metal boride fine particles of over 0.5 parts by mass undesirably decreases transparency due to higher haze and causes a disadvantage in view of cost.

### (3) Other additives

Besides the aromatic polycarbonate resin and the metal boride fine particles, a weather resistance improver, a heat stabilizer, an antioxidant, a mold release agent, and a dye/pigment are preferably mixed in the light-transmissive, light-absorbing heat-storing polycarbonate resin composition of the first aspect not according to the claimed invention because hue stability is improved for molding or use as a window or a window component.

### (3-1) Weather resistance improver

Examples of the weather resistance improver include inorganic ultraviolet absorbers such as titanium oxide, cerium oxide, zinc oxide, the like, and organic ultraviolet absorbers such as benzotriazole compounds, benzophenone compounds, triazine compounds, and the like. Among these, the organic ultraviolet absorbers are preferred, and at least one selected from benzotriazole compounds, 2-(4,6-diphenyl-1,3,5-triazin-2-yl)-5-[(hexyl)oxy]-phenol, 2-[4,6-bis(2,4-dimethylphenyl)-1,3,5-triazin-2-yl]-5-(octyloxy)phenol, 2,2'-(1,4-phenylene) bis[4H-3,1-benzoxazin-4-one], and [(4-methoxyphenyl)-methylene]-propanedioic acid-dimethyl ester is particularly preferred.

Examples of the benzotriazole compounds include 2-(2'-hydroxy-5'-methylphenyl) benzotriazole, 2-(2'-hydroxy-3',5'-di-tert-butylphenyl) benzotriazole, 2-(2'-hydroxy-3',5'-di-tert-butylphenyl)-5-chlorobenzotriazole, 2-(2'-hydroxy-3'-tert-butyl-5'-methylphenyl)-5-chlorobenzotriazole, 2-(2'-hydroxy-5'-tert-octylphenyl)-2H-benzotriazole, 2-(2'-hydroxy-5'-tert-butylphenyl) benzotriazole, 2-(2'-hydroxy-5'-methacryloxyphenyl)-2H-benzotriazole, 2-(2'-hydroxy-3',5'-di-tert-amylphenyl) benzotriazole, 2-[2'-hydroxy-3',5'-bis(a,a-dimethylbenzyl)phenyl]-2H-benzotriazole, 2-[2'-hydroxy-3'-(3",4",5",6"-tetrahydrophthalimidomethyl)-5'-methylphenyl] benzotriazole, 2,2'-methylenebis[4-(1,1,3,3-tetramethylbutyl)-6-2H-benzotriazol-2-yl)phenol], a condensate of methyl-3-[3-tert-butyl-5-(2H-benzotriazol-2-yl)-4-hydroxyphenyl] propionate and polyethylene glycol, and the like.

Among these, 2-(2'-hydroxy-5'-tert-octylphenyl)-2H-benzotriazole, 2-[2'-hydroxy-3',5'-bis(α,α-dimethylbenzyl)phenyl]-2H-benzotriazole, 2,2'-methylenebis[4-(1,1,3,3-tetramethylbutyl)-6-2H-benzotriazol-2-yl)phenol], and a condensate of methyl-3-[3-tert-butyl-5-(2H-benzotriazol-2-yl)-4-hydroxyphenyl] propionate and polyethylene glycol are preferred.

The mixing ratio of the weather resistance improver such as the organic ultraviolet absorber or the like is generally 0.01 to 5 parts by mass relative to 100 parts by mass of the aromatic polycarbonate resin. With the mixing ratio exceeding 5 parts by mass, the problem of mold deposit or the like may occur, while with the mixing ratio of less than 0.01 parts by mass, the effect of improving weather resistance tends to become unsatisfactory. The weather resistance improvers can be used alone or in combination of a plurality of types.

### (3-2) Heat stabilizer

The heat stabilizer is, for example, at least one selected from phosphite ester compounds in which at least one ester in a molecule is esterified with phenol and/or phenol having at least one alkyl group having 1 to 25 carbon atoms, phosphorous acid, and tetrakis(2,4-di-tert-butylphenyl)-4,4'-biphenylene-di-phosphonite.

Examples of the phosphorous acid ester compounds include trioctyl phosphite, tridecyl phosphite, trilauryl phosphite, tristearyl phosphite, triisooctyl phosphite, tris(nonylphenyl) phosphite, tris(2,4-dinonylphenyl) phosphite, tris(2,4-di-tert-butylphenyl) phosphite, triphenyl phosphite, tris(octylphenyl) phosphite, diphenylisooctyl phosphite, diphenylisodecyl phosphite, octyldiphenyl phosphite, dilaurylphenyl phosphite, diisodecylphenyl phosphite, bis(nonylphenyl)phenyl phosphite, diisooctylphenyl phosphite, diisodecylpentaerythritol diphosphite, dilaurylpentaerythritol diphosphite, distearylpentaerythritol diphosphite, (phenyl)(1,3-propanediol) phosphite, (4-methylphenyl)(1,3-propanediol) phosphite, (2,6-dimethylphenyl)(1,3-propanediol) phosphite, (4-tert-butylphenyl)(1,3-propanediol) phosphite, (2,4-di-tert-butylphenyl)(1,3-propanediol) phosphite, (2,6-di-tert-butylphenyl)(1,3-propanediol) phosphite, (2,6-di-tert-butyl-4-methylphenyl)(1,3-propanediol) phosphite, (phenyl)(1,2-ethanediol) phosphite, (4-methylphenyl)(1,2-ethanediol) phosphite, (2,6-dimethylphenyl)(1,2-ethanediol) phosphite, (4-tert-butylphenyl)(1,2-ethanediol) phosphite, (2,4-di-tert-butylphenyl)(1,2-ethanediol) phosphite, (2,6-di-tert-butylphenyl)(1,2-ethanediol) phosphite, (2,6-di-tert-butyl-4-methylphenyl)(1,2-ethanediol) phosphite, (2,6-di-tert-butyl-4-methylphenyl)(1,4-butanediol) phosphite, diphenylpentaerythritol diphosphite, bis(2-methylphenyl)pentaerythritol diphosphite, bis(3-methylphenyl)pentaerythritol diphosphite, bis(4-methylphenyl)pentaerythritol diphosphite, bis(2,4-dimethylphenyl)pentaerythritol diphosphite, bis(2,6-dimethylphenyl)pentaerythritol diphosphite, bis(2,3,6-trimethylphenyl)pentaerythritol diphosphite, bis(2-tert-butylphenyl)pentaerythritol diphosphite, bis(3-tert-butylphenyl)pentaerythritol diphosphite, bis(4-tert-butylphenyl)pentaerythritol diphosphite, bis(2,4-di-tert-butylphenyl)pentaerythritol diphosphite, bis(2,6-di-tert-butylphenyl)pentaerythritol diphosphite, bis(2,6-di-tert-butyl-4-methylphenyl)pentaerythritol diphosphite, bis(2,6-di-tert-butyl-4-ethylphenyl)pentaerythritol diphosphite, bis(nonylphenyl)pentaerythritol diphosphite, bis(biphenyl)pentaerythritol diphosphite, dinaphthylpentaerythritol diphosphite, and the like.

In the first aspect not according to the claimed invention, a phosphine compound can also be used as the heat stabilizer. The phosphine compound is not particularly limited and includes all organic derivatives of phosphine and salts thereof, and various phosphine compounds, phosphine oxide, phosphonium salts with halogen ions or the like, diphosphine, and the like can be used. In particular, aliphatic or aromatic phosphine compounds can be preferably used. Although any one of primary, secondary, and tertiary phosphine compounds can be used, tertiary phosphine compounds are particularly preferred, and tertiary aromatic phosphine compounds are more preferred.

The tertiary phosphine compounds are represented by general formula R₃P (wherein R is an aliphatic or aromatic hydrocarbon group which may contain a substituent, and R may be different from each other). R is preferably a phenyl group. Examples of a substituent of R include alkyl groups such as a methyl group, an ethyl group, a n-propyl group, an isopropyl group, a n-butyl group, an isobutyl group, a tert-butyl group, a n-amyl group, an isoamyl group, a n-hexyl group, an isohexyl group, a cyclopentyl group, a cyclohexyl group, and the like, and alkoxy groups such as a methoxy group, an ethoxy group, and the like.

Examples of tertiary aromatic phosphine compounds include triphenylphosphine, tri-m-tolylphosphine, tri-o-tolylphosphine, tri-p-tolylphosphine, tris-p-methoxyphenylphosphine, and the like. More specifically, triphenylphosphine is preferably used, but may be combined with another phosphine compound.

Further, phosphate compounds and phosphonate compounds can also be used as the heat stabilizer. Examples thereof include trimethyl phosphate, triethyl phosphate, tributyl phosphate, triphenyl phosphate, dioctyl phosphate, di(2-ethylhexyl) phosphate, diisooctyl phosphate, dinonyl phosphate, diisonoyl phosphate, didecyl phosphate, diisodecyl phosphate, dilauryl phosphate, ditridecyl phosphate, dimethylphenyl phosphate, 1,3-phenylene-bis(dixylenyl) phosphate, and the like.

The mixing ratio of the heat stabilizer is generally 0.001 to 1 part by mass and preferably 0.4 parts by mass or less relative to 100 parts by mass of the aromatic polycarbonate resin. When the mixing ratio of the heat stabilizer exceeds 1 part by mass, the problem of degrading hydrolysis resistance or the like may occur.

### (3-3) Antioxidant

A hindered phenol-based antioxidant is preferred as the antioxidant.

Examples thereof include pentaerythritol tetrakis[3-(3,5-di-tert-butyl-4-hydroxyphenyl) propionate], octadecyl-3-(3,5-di-tert-butyl-4-hydroxyphenyl) propionate, thiodiethylene bis[3-(3,5-di-tert-butyl-4-hydroxyphenyl) propionate], N,N'-hexane-1,6-diyl bis[3-(3,5-di-tert-butyl-4-hydroxyphenyl propionamide), 2,4-dimethyl-6-(1-methylpentadecyl)phenol, diethyl[[3,5-bis(1,1-dimethylethyl)-4-hydroxyphenyl]methyl] phosphoate, 3,3',3",5,5',5"-hexa-tert-butyl-a,a',a"-(mesitylene-2,4,6-triyl) tri-p-cresol, 4,6-bis(octylthiomethyl)-o-cresol, ethylenebis(oxyethylene) bis[3-(5-tert-butyl-4-hydroxy-m-tolyl) propionate], hexamethylenebis[3-(3,5-di-tert-butyl-4-hydroxyphenyl) propionate], 1,3,5-tris(3,5-di-tert-butyl-4-hydroxybenzyl)-1,3,5-triazine-2,4,6(1H,3H,5H)-trione, 2,6-di-tert-butyl-4-(4,6-bis(octylthio)-1,3,5-triazin-2-ylamino)phenol, and the like. Among the above, pentaerythritol tetrakis[3-(3,5-di-tert-butyl-4-hydroxyphenyl) propionate] and octadecyl-3-(3,5-di-tert-butyl-4-hydroxyphenyl) propionate are particularly preferred. The two phenol-based antioxidants are commercially available as the names of Irganox 1010 and Irganox 1076 from BASF Corporation.

The mixing ratio of the antioxidant is preferably 0.01 to 1 part by mass relative to 100 parts by mass of the aromatic polycarbonate resin. When the mixing ratio of the antioxidant is less than 0.01 parts by mass, the effect as an antioxidant tends to be unsatisfactory, while even when the mixing ratio exceeds 1 part by mass, the further effect as an antioxidant cannot be obtained in many cases.

### (3-4) Mold release agent

At least one compound selected from aliphatic carboxylic acids, esters of aliphatic carboxylic acids and alcohols, aliphatic hydrocarbon compounds having a number-average molecular weight of 200 to 15,000, and polysiloxane-based silicone oil can be used as the mold release agent.

The aliphatic carboxylic acids include saturated or unsaturated mono-, di-, or tri-hydric carboxylic acids. In this case, the aliphatic carboxylic acids also include alicyclic carboxylic acids. Among these, aliphatic mono- or di-hydric carboxylic acids having 6 to 36 carbon atoms are preferred, and aliphatic saturated monohydric carboxylic acids having 6 to 36 carbon atoms are more preferred. Examples of such aliphatic carboxylic acids include palmitic acid, stearic acid, caproic acid, capric acid, lauric acid, arachidic acid, behenic acid, lignoceric acid, cerotic acid, melissic acid, tetratriacontanoic acid, montanic acid, adipic acid, azelaic acid, and the like.

The same aliphatic carboxylic acids as described above can be used as aliphatic carboxylic acids in esters of aliphatic carboxylic acids and alcohols. Saturated or unsaturated monohydric alcohols, saturated or unsaturated polyhydric alcohols, and the like can be used as the alcohols for forming esters by reacting with the aliphatic carboxylic acids. These alcohols may have a substituent such as a fluorine atom, an aryl group, or the like. Among these alcohols, monohydric or polyhydric saturated alcohols having 30 or less carbon atoms are preferred, and aliphatic saturated monohydric alcohols or polyhydric alcohols having 30 or less carbon atoms are more preferred. In this case, aliphatic compounds include alicyclic compounds. Examples of the alcohols include octanol, decanol, dodecanol, stearyl alcohol, behenyl alcohol, ethylene glycol, diethylene glycol, glycerin, pentaerythritol, 2,2-dihydroxyperfluoropropanol, neopentylene glycol, ditrimethylolpropane, dipentaerythritol, and the like. The ester compounds of the aliphatic carboxylic acids and alcohols may contain aliphatic carboxylic acids and/or alcohols as impurities, and may be a mixture of plurality of compounds.

Examples of the esters of the aliphatic carboxylic acids and alcohols include beeswax (mixture containing myricyl palmitate as a main compound), stearyl stearate, behenyl behenate, stearyl behenate, glycerin monopalmitate, glycerin monostearate, glycerin distearate, glycerin tristearate, pentaerythritol monopalmitate, pentaerythritol monostearate, pentaerythritol distearate, pentaerythritol tristearate, and pentaerythritol tetrastearate.

The aliphatic hydrocarbon compounds having a number-average molecular weight of 200 to 15,000 include liquid paraffin, paraffin wax, micro wax, polyethylene wax, Fischer-Tropsch wax, α-olefin oligomers having 3 to 12 carbon atoms, and the like. In this case, the aliphatic hydrocarbons include alicyclic hydrocarbons. Also, the hydrocarbon compounds may be partially oxidized. Among these, paraffin wax, polyethylene wax, and partial oxides of polyethylene wax are preferred, and paraffin wax and polyethylene wax are more preferred. The number-average molecular weight of the aliphatic hydrocarbons is 200 to 15,000 and preferably 200 to 5,000. The aliphatic hydrocarbons may be single substances or mixtures of various components with different molecular weights as long as the main component falls within the above-described range.

Examples of the polysiloxane-based silicone oil include dimethyl silicone oil, phenylmethyl silicone oil, diphenyl silicone oil, fluorinated alkyl silicone oil, and the like. These may be used alone or as a mixture of two or more.

The mixing ratio of the mold release agent is generally 0.01 to 1 part by mass relative to 100 parts by mass of the aromatic polycarbonate resin. When the mixing ratio of the mold release agent exceeds 1 part by mass, the problem of degrading hydrolysis resistance, contaminating a mold during injection molding, or the like may occur. A type of the mold release agent or combination of a plurality of types may be used.

### (3-5) Dye/pigment

Dyes and pigments include inorganic pigments, organic pigments, organic dyes, and the like.

Examples of the inorganic pigments include carbon black; sulfide-based pigments such as cadmium red, cadmium yellow, and the like; silicate-based pigments such as ultramarine blue and the like; oxide-based pigments such as titanium oxide, zinc white, iron oxide red, chromium oxide, iron black, titanium yellow, zinc-iron-based brown, titanium-cobalt-based green, cobalt green, cobalt blue, copper-chromium-based black, copper-iron-based black, and the like; chromate-based pigments such as chrome yellow, molybdate orange, and the like; ferrocyanide-based pigments such as iron blue and the like.

The organic pigments and organic dyes include phthalocyanine-based dyes and pigments such as copper phthalocyanine blue, copper phthalocyanine green, and the like, azo-based dyes and pigments such as nickel azoyellow and the like, fused polycyclic dyes and pigments such as thioindigo-based, perinone-based, perylene-based, quinacridone-based, dioxazine-based, isoindolinone-based, and quinophthalone-based dyes and pigments, and the like; anthraquinone-based, heterocyclic, and methyl-based dyes and pigments, and the like.

Among these, in view of heat stability, carbon black, cyanine-based, quinoline-based, anthraquinone-based, phthalocyanine-based, and perinone-based compounds, and the like are preferred, and carbon black, anthraquinone-based compounds, phthalocyanine-based compounds, and perinone-based compounds are more preferred.

Examples of these include MACROLEX Blue RR, MACROLEX Violet 3R, MACROLEX Violet B, and MACROLEX Red 5B (manufactured by Bayer Corporation), Sumiplast Violet RR, Sumiplast Violet B, and Sumiplast Blue OR (manufactured by Sumitomo Chemical Co., Ltd.), Sumiplast Green G and Sumiplast RED HL5B (manufactured by Sumika Chemtex Co., Ltd.), Diaresin Violet D, Diaresin Blue G, Diaresin Blue N, and D-RED-HS (manufactured by Mitsubishi Chemical Co., Ltd.), Plast Red 8370 and Plast Blue 8580 (manufactured by Arimoto Chemical Co., Ltd.), Kayaset Red A-2G (manufactured by Nippon Kayaku Co., Ltd.), KP Plast Yellow MK (manufactured by Kiwa Chemical Industry Co., Ltd.), and the like.

The mixing ratio of the dye/pigment is generally 1 part by mass or less, preferably 0.3 parts by mass or less, and more preferably 0.1 parts by mass or less relative to 100 parts by mass of the aromatic polycarbonate resin. A type of the dye/pigment or combination of a plurality of types can be used.

In the first aspect not according to the claimed invention, the dye/pigment is essentially mixed for adjusting visibility with transmitted light. That is, when the amount of the metal boride fine particles mixed is increased, visibility tends to be decreased due to a change in hue of a molded product (specifically, a L value is decreased, and an absolute value of an a value and b value are increased), and thus the type and/or ratio of the dye/pigment mixed is selected so as to generate a proper hue, thereby improving visibility with transmitted light. Of course, according to application of the panel of the first aspect not according to the claimed invention, for example, in a sunroof or the like, the L value can be intentionally decreased by mixing a black pigment such as carbon black or the like within a range in which the hot-ray shielding property is not impaired.

### (3-6) Infrared absorber

If required, for the purpose of further improving the heat-ray shielding performance, antimony-doped tin oxide fine particles, zinc oxide fine particles containing at least one element selected from the group consisting of In, Ga, Al, and Sb, tin-doped indium oxide fine particles, or another organic or inorganic infrared absorber based on phthalocyanine, naphthalocyanine, copper sulfide, copper ions, or the like can be further mixed in the light-transmissive, light-absorbing heat-storing polycarbonate resin composition of the first aspect not according to the claimed invention. In particular, when it is necessary to impart absorption properties up to a long-wavelength-side region, the metal boride fine particles are preferably combined with the above-described metal oxide semiconductor.

### (3-7) Other additives

Further, within a range where the object of the first aspect not according to the claimed invention is not impaired, the light-transmissive, light-absorbing heat-storing polycarbonate resin composition of the first aspect not according to the claimed invention can be mixed with additives such as another thermoplastic resin such as ABS, PMMA, polystyrene, polyethylene, polypropylene, polyester, or the like, a phosphorus-based, metal salt-based, or silicone-based flame retardant or the like, an impact resistance improver, an antistatic agent, a slip agent, an anti-blocking agent, a lubricant, a mold release agent, an anti-fogging agent, natural oil, synthetic oil, wax, an organic filler, a fibrous reinforcement such as glass fibers, carbon fibers, or the like, a plate-shaped reinforcement such as mica, talc, glass flakes, or the like, an inorganic filler such as potassium titanate, aluminum borate, whiskers of wollastonite or the like, and the like.

### [Constituent material of heat-insulating layer]

The constituent material of the heat-insulating layer of the panel body of the first aspect not according to the claimed invention is not particularly limited as long as it preferably satisfies the above-described conditions (1) and (3), and a transparent thermoplastic resin composition described below can be used.

The term "transparent" represents that total solar transmittance measured for a plate-shaped molded product having a smooth surface and a thickness of 3 mm according to JIS K7105 is generally 10% or more, preferably 15% or more, and more preferably 20% or more, and a haze value is generally 10% or less, preferably 5% or less, and more preferably 3% or less. The content of a dye or pigment in the transparent thermoplastic resin composition containing a dye or pigment is generally 0.001 to 2 parts by mass, preferably 0.005 to 1 part by mass, and more preferably 0.005 to 0.5 parts by mass relative to 100 parts by mass of the transparent thermoplastic resin.

Examples of the transparent thermoplastic resin include polystyrene resins, high-impact polystyrene resins, hydrogenated polystyrene resins, polyacrylstyrene resins, transparent ABS resins, AS resins, AES resins, ASA resins, SMA resins, polyalkyl methacrylate resins, polymethacryl methacrylate resins, polyphenyl ether resins, polycarbonate resins, amorphous polyalkylene terephthalate resins, polyester resins, amorphous polyamide resins, poly-4-methylpentene-1, amorphous polyarylate resins, and polyether sulfone. Among these, in view of impact resistance and heat resistance, polycarbonate resins, particularly resins containing aromatic polycarbonate resins as main constituent resins, are preferred. The term "main constituent resin" represents that the ratio of the aromatic polycarbonate resin in all resin components is generally 50% by mass or more, preferably 60% by mass or more, and more preferably 70% by mass or more.

Examples of a resin used in combination with the polycarbonate resin used as the main constituent resin include polystyrene resins, ABS resins, AS resins, AES resins, ASA resins, polyphenylene ether resins, polymethyl methacrylate resins, polyester resins, and the like. The form of the resin may be either an alloy or a copolymer as long as it maintains transparency.

A transparent polycarbonate resin composition preferred as the constituent material of the heat-insulating layer according to the first aspect not according to the claimed invention (may be referred to as a "transparent polycarbonate resin composition of the first aspect not according to the claimed invention" hereinafter) is described below.

The polycarbonate resin is a linear or branched thermoplastic polymer or copolymer produced by, for example, reacting an aromatic dihydroxy compound with a carbonate precursor, or reacting these compounds in combination with a small amount of a polyhydroxy compound. The polycarbonate resin can be produced by a known method, and examples of the production method include an interfacial polymerization method, a melting ester exchange method, a pyridine method, a method of ring-opening polymerization of a cyclic carbonate compound, a prepolymer solid-phase ester exchange method, and the like.

Examples of the aromatic dihydroxy compound used as a raw material include bis(hydroxyaryl)alkanes such as 2,2-bis(4-hydroxyphenyl)propane (also know as "bisphenol A"), 2,2-bis(3,5-dibromo-4-hydroxyphenyl)propane (also known as "tetrabromobisphenol A"), bis(4-hydroxyphenyl)methane, 1,1-bis(4-hydroxyphenyl)ethane, 2,2-bis(4-hydroxyphenyl)butane, 2,2-bis(4-hydroxyphenyl)octane, 2,2-bis(4-hydroxy-3-methylphenyl)propane, 1,1-bis(3-tert-butyl-4-hydroxyphenyl)propane, 2,2-bis(4-hydroxy-3,5-dimethylphenyl)propane, 2,2-bis(3-bromo-4-hydroxyphenyl)propane, 2,2-bis(3,5-dichloro-4-hydroxyphenyl)propane, 2,2-bis(3-phenyl-4-hydroxyphenyl)propane, 2,2-bis(3-cyclohexyl-4-hydroxyphenyl)propane, 1,1-bis(4-hydroxyphenyl)-1-phenylethane, bis(4-hydroxyphenyl)diphenylmethane, 2,2-bis(4-hydroxyphenyl)-1,1,1-trichloropropane, 2,2-bis(4-hydroxyphenyl)-1,1,1,3,3,3-hexachloropropane, 2,2-bis(4-hydroxyphenyl)-1,1,1,3,3,3-hexafluoropropane, and the like; bis(hydroxyaryl)cycloalkanes such as 1,1-bis(4-hydroxyphenyl)cyclopentane, 1,1-bis(4-hydroxyphenyl)cyclohexane, 1,1-bis(4-hydroxyphenyl)-3,3,5-trimethylcyclohexane, and the like; cardo-structure-containing bisphenols such as 9,9-bis(4-hydroxyphenyl)fluorene, 9,9-bis(4-hydroxy-3-methylphenyl)fluorine, and the like; dihydroxydiaryl ethers such as 4,4'-dihydroxydiphenyl ether, 4,4'-dihydroxy-3,3'-dimethyldiphenyl ether, and the like; dihydroxydiaryl sulfides such as 4,4'-dihydroxydiphenyl sulfide, 4,4'-dihydroxy-3,3'-dimethyldiphenyl sulfide, and the like; dihydroxydiaryl sulfoxides such as 4,4'-dihydroxydiphenyl sulfoxide, 4,4'-dihydroxy-3,3'-dimethyldiphenyl sulfoxide, and the like; dihydroxydiaryl sulfones such as 4,4'-dihydroxydiphenyl sulfone, 4,4'-dihydroxy-3,3'-dimethyldiphenyl sulfone, and the like; hydroquinone; resorcin; 4,4'-dihydroxydiphenyl; and the like.

Among the above, bis(4-hydroxyphenyl)alkanes are preferred, and 2,2-bis(4-hydroxyphenyl)propane (also known as "bisphenol A") is particularly preferred in view of impact resistance. These aromatic dihydroxy compounds may be used in combination of two or more.

As the carbonate precursor to be reacted with the aromatic dihydroxy compound, carbonyl halides, carbonate esters, haloformates, and the like can be used. Examples thereof include phosgene; diaryl carbonates such as diphenyl carbonate, ditolyl carbonate, and the like; dialkyl carbonates such as dimethyl carbonate, diethyl carbonate, and the like; dihaloformate of dihydric phenol; and the like. These carbonate precursors may be used in combination of two or more.

Also, the polycarbonate resin may be a branched aromatic polycarbonate resin produced by copolymerizing a tri- or more poly-functional aromatic compound. Examples of the tri- or more poly-functional aromatic compound include polyhydroxy compounds such as phloroglucin, 4,6-dimethyl-2,4,6-tri(4-hydroxyphenyl)heptene-2, 4,6-dimethyl-2,4,6-tri(4-hydroxyphenyl)heptane, 2,6-dimethyl-2,4,6-tri(4-hydroxyphenyl)heptene-3, 1,3,5-tri(4-hydroxyphenyl)benzene, 1,1,1-tri(4-hydroxyphenyl)ethane, and the like; 3,3-bis(4-hydroxyaryl)oxyindole (also known as "isatin bisphenol"), 5-chloroisatin; 5,7-dichloroisatin, 5-bromoisatin; and the like. Among these, 1,1,1-tri(4-hydroxyphenyl)ethane is preferred. The polyfunctional aromatic compound is used by being partially substituted for the aromatic dihydroxy compound, and the amount of use is generally 0.01 to 10 mol% and preferably 0.1 to 2 mol% relative to the aromatic dihydroxy compound.

The molecular weight of the polycarbonate resin is not particularly limited, but viscosity-average molecular weight (M_{V}) calculated from limiting viscosity which is measured at a temperature of 20°C with an Ubbellohde viscometer using methylene chloride as a solvent is generally 10,000 to 40,000. The viscosity-average molecular weight of 10,000 or more improves mechanical strength and is thus preferred for application which requires high mechanical strength. On the other hand, the viscosity-average molecular weight of 40,000 or less facilitates molding due to decrease in fluidity. When a hard coating film such as a hard coat is formed in a subsequent step, the viscosity-average molecular weight is preferably 18,000 to 35,000 and more preferably 20,000 to 30,000. The viscosity-average molecular weight of 18,000 or more can suppress a decrease in impact strength when a hard coating film is formed on a surface. The viscosity-average molecular weight of 35,000 or less desirably little decreases moldability. Also, two or more types of polycarbonate resins having different viscosity-average molecular weights may be mixed.

The viscosity-average molecular weight (M_{V}) represents a value calculated by the Schnell viscosity formula ([η] = 1.23 × 10⁻⁴ M_{V}^{0.83}) from limiting viscosity [η] (unit dl/g) determined at a temperature 20°C with an Ubbellohde viscometer using methylene chloride as a solvent.

The concentration of terminal hydroxyl groups in the polycarbonate resin is generally 2,000 ppm by mass or less, preferably 1,500 ppm by mass or less, more preferably 1,000 ppm by mass or less, and particularly preferably 600 ppm by mass or less. The lower limit is generally 10 ppm by mass, particularly, for the polycarbonate resin produced by the ester exchange method.

When the concentration of terminal hydroxyl groups is 10 ppm by mass or more, a decrease in molecular weight can be suppressed, and the mechanical properties of the resin composition tend to be further improved. When the concentration of terminal hydroxyl groups is 2,000 ppm by mass or less, the residence heat stability and color tone of the resin composition tend to be further improved. When a hard coating film such as a hard coat is formed, the polycarbonate resin with a high concentration of terminal hydroxyl groups of 10 to 2,000 ppm by mass, preferably 10 to 1,000 ppm by mass, and more preferably 10 to 1,000 ppm by mass is used for improving adhesion and durability. The concentration of terminal hydroxyl groups refers to a ratio of the mass of terminal hydroxyl groups to the mass of the aromatic polycarbonate resin, and a measurement method is colorimetry by a titanium tetrachloride/acetic acid method (method described in Macromol. Chem. 88 215 (1965)).

Also, in order to attempt to improve the appearance of a molded product and fluidity, the transparent polycarbonate resin composition of the first aspect not according to the claimed invention may contain a polycarbonate oligomer. The viscosity-average molecular weight of the polycarbonate oligomer is generally 1,500 to 9,500 and preferably 2,000 to 9,000. The amount of the polycarbonate oligomer used is generally 30% by mass or less relative to the polycarbonate resin.

Further, the polycarbonate resin used in the transparent polycarbonate resin composition of the first aspect not according to the claimed invention may contain not only a virgin polycarbonate resin but also a polycarbonate resin regenerated from used products, that is, a polycarbonate resin undergoing so-called material recycling. The used products include optical recording media such as an optical disk and the like, optical waveguides, vehicle transparent members such as automotive window glass, an automotive head lamp lens, a windshield, and the like, vessels such as a water bottle and the like, a glass lens, building components such as a sound barrier, a glass window, a corrugated plate, and the like. Also, ground materials produced by grinding nonconforming products, sprues, runners, and the like or pellets produced by melting these products can also be used. The ratio of the regenerated polycarbonate resin used is generally 80% by mass or less and preferably 50% by mass or less relative to the virgin polycarbonate resin.

Besides the dye or pigment, any of generally known additives can be added to the transparent polycarbonate resin composition of the first aspect not according to the claimed invention. Examples of the additives include a mold release agent, a heat stabilizer, an antioxidant, a weather resistance improver, an alkali soap, a metallic soap, a plasticizer, a fluidity improver, a nucleating agent, a flame retardant, an anti-dripping agent, and the like. The amount of any one of these additives used is appropriately selected within a known range.

### [Constituent material of frame member]

The constituent material of the frame member is not particularly limited, and a thermoplastic resin composition containing as a main component a thermoplastic resin selected from the group consisting of polycarbonate resins such as aromatic polycarbonate resins, and the like, polyester resins, aromatic polyamide resins, and ABS resins is generally used. Specifically, a polycarbonate/polyethylene terephthalate composite resin composition below is used.

The polycarbonate/polyethylene terephthalate composite resin composition contains 100 parts by mass of resin components including 95 to 30% by mass of a polycarbonate resin and 5 to 70% by mass of a polyethylene terephthalate resin, 0.01 to 0.5 parts by mass of a phosphorus-based heat stabilizer and/or 0.01 to 1 part by mass of a hindered phenol-based heat stabilizer, 1 to 10 parts by mass of elastomer, and 1 to 20 parts by mass of an inorganic filler, the polyethylene terephthalate resin being a polyethylene terephthalate resin undergoing deactivation of a polycondensation catalyst (Japanese Unexamined Patent Application Publication No. 2010-261018).

The polycarbonate/polyethylene terephthalate composite resin composition (may be referred to as the "PC/PET composite resin composition of the first aspect not according to the claimed invention" hereinafter) is described below.

### <Polycarbonate resin>

Examples of the polycarbonate resin used in the PC/PET composite resin composition of the first aspect not according to the claimed invention include aromatic polycarbonate resins, aliphatic polycarbonate resins, and aromatic-aliphatic polycarbonate resins, and aromatic polycarbonate resins are preferred.

The aromatic polycarbonate resins described above for the aromatic polycarbonate resin contained in the light-transmissive, light-absorbing heat-storing polycarbonate resin composition of the first aspect not according to the claimed invention can be used as the aromatic polycarbonate resin.

The aromatic polycarbonate resin is preferably a polycarbonate resin derived from 2,2-bis(4-hydroxyphenyl)propane or a polycarbonate copolymer derived from 2,2-bis(4-hydroxyphenyl)propane and another aromatic dihydroxy compound. Further, for the purpose of imparting flame retardancy or the like, a polymer or oligomer having a siloxane structure can be copolymerized. The aromatic polycarbonate resin may be a mixture of two or more polymers and/or copolymers produced from different raw materials and may have up to 0.5 mol% of a branch structure.

The content of terminal hydroxyl groups of the polycarbonate resin greatly influences heat stability, hydrolysis stability, color tone, etc. of a molded product. In order to impart practical physical properties, the content of terminal hydroxyl groups is generally 10 to 2,000 ppm by mass, preferably 10 to 1,500 ppm by mass, and more preferably 20 to 1,000 ppm by mass, and p-tert-butylphenol, phenol, cumylphenol, p-long-chain-alkyl-substituted phenol, or the like can be used as a terminal sealing agent which controls the content of terminal hydroxyl groups.

The amount of the aromatic dihydroxy compound remaining as a monomer in the polycarbonate resin is 150 ppm by mass or less, preferably 100 ppm by mass or less, and more preferably 50 ppm by mass or less. In the case of synthesis by the ester exchange method, the amount of remaining carbonic acid diester is 300 ppm by mass or less, preferably 200 ppm by mass or less, and more preferably 150 ppm by mass or less.

The molecular weight of the polycarbonate resin is not particularly limited, but the viscosity-average molecular weight (Mv) calculated from limiting viscosity measured at a temperature of 20°C by an Ubbellohde viscometer using methylene chloride as a solvent is generally in a range of 10,000 to 50,000, preferably 11,000 to 40,000, and more preferably in a range of 14,000 to 30,000. The viscosity-average molecular weight of 10,000 or more causes mechanical properties to be more effectively exhibited, and the viscosity-average molecular weight of 50,000 or less makes molding easier. Also, two types of polycarbonate resins having different viscosity-average molecular weights may be mixed, or a polycarbonate resin having a viscosity-average molecular weight out of the above-described preferred range may be mixed so as to obtain a molecular weight within the above-described range.

### <Polyethylene terephthalate resin>

The polyethylene terephthalate resin is a polyethylene terephthalate resin preferably having an oxyethylene-oxyterephthaloyl unit (may be referred to as an "ET unit" hereinafter), which is composed of terephthalic acid and ethylene glycol, at a ratio (may be referred to as an "ET ratio" hereinafter) of 90 equivalent % or more relative to all constitutional repeat units, and the polyethylene terephthalate resin in the PC/PET composite resin composition of the first aspect not according to the claimed invention may contain, in a range of less than 10 equivalent %, constitutional repeat units other than the ET unit. The polyethylene terephthalate resin is produced by using terephthalic acid or a lower alkyl ester thereof and ethylene glycol as main raw materials, but another acid component and/or another glycol component may also be used as raw materials.

Examples of an acid component other than terephthalic acid include dicarboxylic acids such as phthalic acid, isophthalic acid, naphthalene dicarboxylic acid, 4,4'-diphenylsulfone dicarboxylic acid, 4,4'-biphenyl dicarboxylic acid, 1,4-cyclohexane dicarboxylic acid, 1,3-phenylene dioxydiacetic acid, and structural isomers thereof, malonic acid, succinic acid, adipic acid, and the like, and derivatives thereof, oxyacids such as p-hydroxybenzoic acid, glycolic acid, and derivates thereof, and the like.

Examples of a diol component other than ethylene glycol include aliphatic glycols such as 1,2-propane diol, 1,3-propane diol, 1,4-butane diol, pentamethylene glycol, hexamethylene glycol, neopentyl glycol and the like, alicyclic glycols such as cyclohexane dimethanol and the like, aromatic dihydroxy compound derivatives such as bisphenol A, bisphenol S, and the like.

The raw materials including the above-described terephthalic acid or an ester forming derivative thereof and ethylene glycol form bis(β-hydroxyethyl) terephthalate and/or an oligomer thereof by esterification reaction or ester exchange reaction in the presence of an esterification catalyst or an ester exchange catalyst, and then a polymer is formed by melting polycondensation at a high temperature and reduced pressure in the presence of a polycondensation catalyst and a stabilizer.

The esterification catalyst is not particularly required to be used because terephthalic acid serves as an autocatalyst of esterification reaction. Also, the esterification reaction can be carried out in the coexistence of the esterification catalyst with a polycondensation catalyst described below and also can be carried out in the presence of a small amount of an inorganic acid or the like. An alkali metal salt of sodium, lithium or the like, an alkaline-earth metal salt of magnesium, potassium, or the like, or a metallic compound of zinc, manganese, or the like is preferably used as the ester exchange catalyst. Among these, a manganese compound is particularly preferred in view of the appearance of the resultant polyethylene terephthalate resin.

As the polycondensation catalyst, compounds which are soluble in the reaction system, such as germanium compounds, antimony compounds, titanium compounds, cobalt compounds, tin compounds, and the like, are used alone or in combination of two or more. In particular, germanium dioxide is preferred as the polycondensation catalyst from the viewpoint of color tone, transparency, etc. The polycondensation catalyst may be combined with a stabilizer for suppressing decomposition reaction during polymerization. At least one of phosphate esters such as trimethyl phosphate, triethyl phosphate, triphenyl phosphate, and the like, phosphite esters such as triphenyl phosphite, trisdodecyl phosphite, and the like, and phosphorus compounds such as methyl acid phosphate, dibutyl phosphate, monobutyl phosphate acid phosphoric acid esters, phosphoric acid, phosphorous acid, hypophosphorous acid, polyphosphoric acid, and the like is preferred as the stabilizer.

The ratio of the catalyst used is generally in a range of 1 to 2,000 ppm and preferably in a range of 3 to 500 ppm in terms of mass of a metal in the catalyst in all of the polymerization raw materials, and the ratio of the stabilizer used is generally in a range of 10 to 1,000 ppm and preferably in a range of 20 to 200 ppm in terms of mass of phosphorus atoms in the catalyst in all of the polymerization raw materials. The catalyst and the stabilizer can be supplied at the time of preparation of raw material slurry or at any desired step in esterification reaction or ester exchange reaction. Also, the catalyst and the stabilizer can be supplied in an early stage of the polycondensation reaction step.

The reaction temperature of esterification reaction or ester exchange reaction is generally 240°C to 280°C, and the reaction pressure is generally 0.2 to 3 kg/cm² G (20 to 300 kPa) in terms of relative pressure to the atmosphere. The reaction temperature of polycondensation is generally 250°C to 300°C, and the reaction pressure is generally 500 to 0.1 mmHg (67 to 0.013 kPa) in terms of absolute pressure. The esterification or ester exchange reaction and polycondensation reaction may be performed in a single stage or a plurality of divided stages. The polyethylene terephthalate resin produced as a result generally has a limiting viscosity of 0.45 to 0.70 dl/g and is formed into chips by a usual method. The average particle diameter of the chips is generally in a range of 2.0 to 5.5 mm and preferably in a range of 2.2 to 4.0 mm.

Next, the polymer produced by the above-described melting polycondensation is generally used in solid-phase polymerization. The polymer chips used in solid phase polymerization may be used in solid phase polymerization after being pre-crystallized by heating at a temperature lower than the temperature of solid phase polymerization. The pre-crystallization can be performed by (a) a method of heating the dry polymer chips generally at a temperature of 120°C to 200°C, preferably 130°C to 180°C, for 1 minute to 4 hours, (b) a method of heating the dry polymer chips generally at a temperature of 120°C to 200°C for 1 minute or more in steam or a steam-containing inert gas atmosphere, (c) a method of heating, generally at a temperature of 120°C to 200°C for 1 minute or more, the polymer chips with humidity controlled by moisture absorption in water, steam, or steam-containing inert gas atmosphere, or the like. The humidity of the polymer chips is controlled so that the water content is generally in a range of 100 to 10,000 ppm by mass and preferably in a range of 1,000 to 5,000 ppm by mass. The polymer chips with controlled humidity are subjected to crystallization and solid phase polymerization, and thereby the amount of acetaldehyde and the trace amount of impurities contained in PET can be further decreased.

The solid phase polymerization process includes at least one stage and is carried out under conditions in which a polymerization temperature is generally 190°C to 230°C, preferably 195°C to 225°C, and a polymerization pressure is generally 1 kg/cm²G to 10 mmHg (absolute pressure of 200 to 1.3 kPa), preferably 0.5 kg/cm²G to 100 mmHg (absolute pressure of 150 to 13 kPa), in a stream of inert gas such as nitrogen, argon, carbon dioxide, or the like. The solid phase polymerization time shortens as the temperature increases, but is generally 1 to 50 hours, preferably 5 to 30 hours, and more preferably 10 to 25 hours. The polymer produced by solid phase polymerization generally has a limiting viscosity in a range of 0.70 to 1.2 dl/g and preferably in a range of 0.70 to 1 dl/g.

The limiting viscosity of the polyethylene terephthalate resin may be appropriately selected and determined, but is generally 0.5 to 2 dl/g, preferably 0.6 to 1.5 dl/g, and particularly preferably 0.7 to 1.0 dl/g. The limiting viscosity of 0.5 dl/g or more, particularly 0.7 dl/g or more, is preferred because mechanical properties, residence heat stability, chemical resistance, moisture-heat resistance of the PC/PET composite resin composition of the first aspect not according to the claimed invention tend to be improved. Conversely, the limiting viscosity of less than 2 dl/g, particularly less than 1 dl/g, is preferred because fluidity of the resin composition tends to be improved.

The limiting viscosity of the polyethylene terephthalate resin refers to a value measured at 30°C using a mixed solvent of phenol/tetrachloroethane (mass ratio: 1/1) .

The concentration of terminal carboxyl groups in the polyethylene terephthalate resin is generally 1 to 60 µeq/g, preferably 3 to 50 µeq/g, and more preferably 5 to 40 µeq/g. When the concentration of terminal carboxyl groups is 60 µeq/g or less, mechanical properties of the resin composition tend to be improved, and conversely when the concentration of carboxyl groups is 1 µeq/g or more, heat resistance, residence heat stability of the resin composition, and hue tend to be improved.

The concentration of terminal carboxyl groups in the polyethylene terephthalate resin can be determined by titrating a solution prepared by dissolving 0.5 g of the polyethylene terephthalate resin in 25 mL of benzyl alcohol with a 0.01 mol/L benzyl alcohol solution of sodium hydroxide.

The polyethylene terephthalate resin used in the PC/PET composite resin composition of the first aspect not according to the claimed invention is the above-described polyethylene terephthalate resin which is subjected to deactivation treatment of the polycondensation catalyst. The method for deactivation treatment of the polycondensation catalyst in the polyethylene terephthalate resin is not particularly limited, and general known deactivation treatment can be performed according to the polycondensation catalyst used. Examples of the method for deactivation treatment include methods below.

Method 1 for deactivation treatment of polycondensation catalyst: treatment of germanium catalyst with hot water (steam)

A method of deactivating a germanium catalyst in the polyethylene terephthalate resin by treating the polyethylene terephthalate resin with hot water (steam)

Specifically, a container is filled with the polyethylene terephthalate resin, and the polyethylene terephthalate resin is treated with steam by passing water vapor at 70°C to 150°C, for example, about 100°C, in an amount of 1 to 100% by mass per hour for 5 to 6000 minutes, and then dried.

In a container, the polyethylene terephthalate resin is immersed in distilled water in an amount of 0.3 to 100 times by mass the amount of the polyethylene terephthalate resin, and then the polyethylene terephthalate resin is treated with hot water by heating the container containing the polyethylene terephthalate resin and distilled water from the outside and maintaining it for 3 to 3,000 minutes while the inside temperature is controlled to 70°C to 110°C, and then dehydrated and dried.

The drying is generally performed in an inert gas such as nitrogen or the like at 120°C to 180°C for 3 to 8 hours.

Method 2 for deactivation treatment of polycondensation catalyst: addition of phosphorous compound to titanium catalyst

A titanium catalyst in the polyethylene terephthalate resin is deactivated by adding a phosphorous compound to the polyethylene terephthalate resin. In this case, the amount of the phosphorous atoms added is preferably in a range of 7 to 145 ppm based on the mass of the polyethylene terephthalate resin. When the amount of the phosphorus compound added is less than 7 ppm, the catalyst is not sufficiently deactivated, and thus the intended effect of the first aspect not according to the claimed invention may not be achieved. When the amount of the phosphorus atoms added exceeds 145 ppm, the phosphorus compound forms coarse aggregated particles, thereby causing the problem of degrading the appearance and decreasing impact resistance.

Examples of the phosphorous compound to be added include generally known phosphate compounds and phosphite compounds, and phosphonate compounds. Among these, phosphonate compounds represented by general formula (a) below are preferred.

R¹¹OC(O)ZP(O)(OR¹²)₂ ... (a)

(wherein R¹¹ and R¹² each represent an alkyl group having 1 to 4 carbon atoms, Z represents -CH₂- or -CH(Y)- (Y represents a phenyl group), and R¹¹ and R¹² may be the same or different).

Among the phosphonate compounds represented by general formula (a), alkylphosphonate compounds are preferably exemplified, and triethylphosphonoacetic acid is particularly preferred. These compounds may be used alone or in combination of two or more.

The above-described method for deactivating the polycondensation catalyst in the polyethylene terephthalate resin is an example of applicable deactivation treatment, and the deactivation treatment method of the first aspect not according to the claimed invention is not limited to the above-described method.

Hereinafter, the polyethylene terephthalate resin subjected to deactivation of the polycondensation catalyst is referred to as the "deactivated PET", and the untreated polyethylene terephthalate resin is referred to as the "untreated PET".

The deactivated PET used in the PC/PET composite resin composition of the first aspect not according to the claimed invention preferably has a solid phase polymerization rate Ks of 0.006 (dl/g·hr) or less, particularly preferably 0.005 (dl/g·hr) or less, and most preferably about 0.001 to 0.004 (dl/g·hr) due to the above-described deactivation of the polycondensation catalyst in the polyethylene terephthalate resin, the solid phase polymerization rate Ks being calculated by general formula (b) below. $Solid phase polymerization rate Ks = \left(\left[η\right]s-\left[η\right]m\right) / T$

In this formula, [η]s is the intrinsic viscosity (dl/g) of the polyethylene terephthalate resin after the polyethylene terephthalate resin is held in a nitrogen stream at 210°C for 3 hours, [η]m is the intrinsic viscosity (dl/g) of the polyethylene terephthalate resin after the polyethylene terephthalate resin is held in a nitrogen stream at 210°C for 2 hours, and T is 1 (hour). That is, the solid phase polymerization ratio Ks calculated by the above formula (b) using the values of intrinsic viscosity [η]s after holding in a nitrogen stream at 210°C for 3 hours and intrinsic viscosity [η]m after holding under the same conditions for 2 hours is used as solid phase polymerization rate Ks.

The deactivated PET having a solid phase polymerization rate Ks exceeding 0.006 (dl/g·hr) is unsatisfactory in deactivation of the polycondensation catalyst, and thus the effect of suppressing residence heat deterioration cannot be satisfactorily achieved by using the deactivated PET. However, it is difficult to excessively decrease the solid phase polymerization rate Ks, and Ks is generally 0.001 (dl/g·hr) or more.

### <Resin component>

The resin components of the PC/PET composite resin composition of the first aspect not according to the claimed invention include 95% to 30% by mass of at least one of the polycarbonate resins and 5% to 70% by mass of at least one of the deactivated PETs.

When the ratio of the polycarbonate resin in the resin components is larger than the above-described upper limit, and the ratio of the deactivated PET is smaller than the above-described lower limit, the effect of improving chemical resistance cannot be satisfactorily achieved by using PET, and conversely when the ratio of the polycarbonate resin is smaller than the above-described lower limit, and the ratio of the deactivated PET is larger than the above-described upper limit, the inherent characteristics of the polycarbonate resin are impaired, and impact resistance and heat resistance are undesirably degraded.

The ratios of the polycarbonate resin and the deactivated PET are preferably 90% to 40% by mass and 10% to 60% by mass, and more preferably 85% to 60% by mass and 15% to 40% by mass, respectively.

### <Heat stabilizer>

The PC/PET composite resin composition of the first aspect not according to the claimed invention essentially contains a phosphorus-based heat stabilizer and/or a hindered phenol-based heat stabilizer for the resin components, and the specified heat stabilizer contained can significantly enhance the effect of suppressing residence heat deterioration by using the deactivated PET as the polyethylene terephthalate resin, thereby realizing the resin composition excellent in deterioration of residence heat resistance. That is, the phosphorus-based heat stabilizer and the hindered phenol-based heat stabilizer can suppress heat deterioration by the function of decomposing a peroxide and the function of capturing peroxide radicals, respectively.

Examples of the phosphorus-based heat stabilizer include phosphorus-based heat stabilizers such as phosphite esters, and phosphate esters, and the like.

Examples of the phosphite esters include phosphorous acid triesters, diesters, monoesters, and the like, such as triphenyl phosphite, trisnonylphenyl phosphite, tris(2,4-di-tert-butylphenyl) phosphite, trinonyl phosphite, tridecyl phosphite, trioctyl phosphite, trioctadecyl phosphite, distearyl pentaerythritol diphosphite, tricyclohexyl phosphite, monobutyldiphenyl phosphite, monooctyldiphenyl phosphite, distearyl pentaerythritol diphosphite, bis(2,4-di-tert-butylphenyl)pentaerythritol phosphite, bis(2,6-di-tert-butyl-4-methylphenyl)pentaerythritol phosphite, 2,2-methylenebis(4,6-di-tert-butylphenyl)octyl phosphite, and the like.

Examples of the phosphate esters include trimethyl phosphate, triethyl phosphate, tributyl phosphate, trioctyl phosphate, triphenyl phosphate, tricresyl phosphate, tris(nonylphenyl) phosphate, 2-ethylphenyldiphenyl phosphate, and the like.

Preferred examples also include phosphonite compounds such as tetrakis(2,4-di-tert-butylphenyl)-4,4-diphenyl phosphonite, and the like.

Among the phosphorus-based heat stabilizers, the phosphite esters such as distearyl pentaerythritol diphosphite, bis(2,4-di-tert-butylphenyl)pentaerythritol phosphite, bis(2,6-di-tert-butyl-4-methylphenyl)pentaerythritol phosphite, tris(2,4-di-tert-butylphenyl) phosphite, and the like are preferred, and bis(2,6-di-tert-butyl-4-methylphenyl)pentaerythritol phosphite and tris(2,4-di-tert-butylphenyl) phosphite are particularly preferred.

Examples of the hindered phenol-based heat stabilizer include pentaerythritol tetrakis[3-(3,5-di-tert-butyl-4-hydroxyphenyl) propionate], octadecyl-3-(3,5-di-tert-butyl-4-hydroxyphenyl) propionate, thiodiethylene bis[3-(3,5-di-tert-butyl-4-hydroxyphenyl) propionate], N,N'-hexane-1,6-diyl bis[3-(3,5-di-tert-butyl-4-hydroxyphenyl propionamide), 2,4-dimethyl-6-(1-methylpentadecyl)phenol, diethyl[[3,5-bis(1,1-dimethylethyl)-4-hydroxyphenyl]methyl] phosphoate, 3,3',3",5,5',5"-hexa-tert-butyl-a,a',a"-(mesitylene-2,4,6-triyl) tri-p-cresol, 4,6-bis(octylthiomethyl)-o-cresol, ethylenebis(oxyethylene) bis[3-(5-tert-butyl-4-hydroxy-m-tolyl) propionate], hexamethylenebis[3-(3,5-di-tert-butyl-4-hydroxyphenyl) propionate], 1,3,5-tris(3,5-di-tert-butyl-4-hydroxybenzyl)-1,3,5-triazine-2,4,6(1H,3H,5H)-trione, 2,6-di-tert-butyl-4-(4,6-bis(octylthio)-1,3,5-triazin-2-ylamino)phenol, and the like.

Among the above, pentaerythritol tetrakis[3-(3,5-di-tert-butyl-4-hydroxyphenyl) propionate] and octadecyl-3-(3,5-di-tert-butyl-4-hydroxyphenyl) propionate are particularly preferred. The two phenol-based heat stabilizers are commercially available as the names of "Irganox 1010" and "Irganox 1076" from BASF Corporation.

The phosphorus-based heat stabilizers may be used alone or in combination of two or more. Also, the hindered phenol-based heat stabilizers may be used alone or in combination of two or more. In addition, both the phosphorus-based heat stabilizer and the hindered phenol-based heat stabilizer may be used.

The phosphorus-based heat stabilizer is used in an amount of 0.01 to 0.5 parts by mass and preferably 0.02 to 0.2 parts by mass relative to 100 parts by mass of the resin components including the polycarbonate resin and the deactivated PET. The hindered phenol-based heat stabilizer is used in an amount of 0.01 to 1 part by mass and preferably 0.05 to 0.2 parts by mass relative to 100 parts by mass of the resin components including the polycarbonate resin and the deactivated PET. With the heat stabilizer used in an excessively small amount, the effect of suppressing residence heat deterioration cannot be satisfactorily achieved by mixing the heat stabilizer, while an excessively large amount is uneconomical because the effect reaches the peak. When both the phosphorus-based heat stabilizer and the hindered phenol-based heat stabilizer are used, both heat stabilizers are preferably used so that the mixing amount of each of the heat stabilizers is adjusted within the above-described range to control a total mixing ratio to 0.07 to 0.4 parts by mass relative to 100 parts by mass of the resin components including the polycarbonate resin and the deactivated PET.

### <Elastomer>

One of the characteristics of the PC/PET composite resin composition of the first aspect not according to the claimed invention is that the PC/PET composite resin composition contains 1 to 10 parts by mass of elastomer and 1 to 2 parts by mass of an inorganic filler relative to 100 parts by mass of the resin components including the polycarbonate resin and the deactivated PET, and thickening of the resin composition during heat residence is suppressed by mixing a specified amount of elastomer. That is, by using a specified amount of elastomer and preferably using the specified elastomer, aggregation of the elastomer during heat resistance can be suppressed to suppress thickening due to aggregation of the elastomer, and as a result, molding stability of the PC/PET composite resin composition of the first aspect not according to the claimed invention can be improved.

The elastomer used in the PC/PET composite resin composition of the first aspect not according to the claimed invention is a rubber polymer having a glass transition temperature of 0°C or less, particularly -20°C or less, or a copolymer produced by copolymerizing the polymer with a monomer component copolymerizable with the polymer. Any known elastomer which is generally mixed in a polycarbonate resin or the like and can improve the mechanical properties thereof can be used.

Examples of the elastomer include polybutadiene, polyisoprene, diene copolymers (styrene-butadiene copolymer, acrylonitrile-butadiene copolymer, acrylic-butadiene rubber, and the like), ethylene-α-olefin copolymers (ethylenepropylene copolymer, ethylene-butene copolymer, ethylene-octene copolymer, and the like), copolymers of ethylene and unsaturated carboxylic acid esters (ethylene-methacrylate copolymer, ethylene-butyl acrylate copolymer, and the like), copolymers of ethylene and aliphatic vinyl compounds, terpolymers of ethylene, propylene, and nonconjugated dienes, acrylic rubber (polybutyl acrylate, poly(2-ethylhexyl acrylate), butyl acrylate-2-ethylhexyl acrylate copolymer, and the like), silicone rubber (polyorganosiloxane rubber, IPN-type composite rubber composed of polyorganosiloxane rubber and polyalkyl (meth)acrylate rubber, and the like), and the like. These may be used alone or in combination of two or more. The term "(meth)acrylate" represents "acrylate" and "methacrylate", and the term "(meth)acrylic acid" described below represents "acrylic acid" and "methacrylic acid".

If required, the elastomer may be copolymerized with another monomer component. Examples of the monomer component copolymerized according to demand include aromatic vinyl compounds, vinyl cyanide compounds, (meth)acrylic acid ester compounds, (meth)acrylic acid compounds, and the like. Other examples of the monomer component include epoxy group-containing (meth)acrylic acid ester compounds such as glycidyl (meth)acrylate and the like; maleimide compounds such as maleimide, N-methylmaleimide, N-phenylmaleimide, and the like; α,β-unsaturated carboxylic acid compounds such as maleic acid, phthalic acid, itaconic acid, and the like, and anhydrides thereof, for example, maleic anhydride and the like. These monomer components may be used alone or in combination of two or more.

In order to improve molding stability of the PC/PET composite resin composition of the first aspect not according to the claimed invention, in particular, a core/shell graft copolymer-type elastomer is preferably used as the elastomer. In particular, a core/shell graft copolymer including a core layer and a shell layer formed around the core layer is preferred, the core layer being composed of at least one rubber polymer selected from butadiene-containing rubber, butyl acrylate-containing rubber, 2-ethylhexyl acrylate-containing rubber, and silicone rubber, and the shell layer being formed by copolymerization with at least one monomer component selected from acrylic acid esters, methacrylic acid esters, and aromatic vinyl compounds. More specifically, the elastomer is the core/shell-type elastomer including a shell layer composed of a polymethyl methacrylate (PMMA)-based polymer or copolymer block, such as a methyl methacrylate-butadiene-styrene polymer (MBS), a methyl methacrylate-acrylonitrile-butadiene-styrene polymer (MABS), a methyl methacrylate-butadiene polymer (MB), a methyl methacrylate-acrylic rubber polymer (MA), a methyl methacrylate-acrylic butadiene rubber copolymer, a methyl methacrylate-acrylic butadiene rubber-styrene copolymer, a methyl methacrylate (acryl silicone IPN (interpenetrating polymer network) rubber) polymer, or the like.

Examples of the core/shell-type elastomer include Paraloid EXL series such as EXL2315, EXL2602, EXL2603, and the like, and KM series such as KM330, KM336P, and the like, and KCZ series such as KCZ201 and the like, which are manufactured by Rohm And Haas Japan K. K., Metablen S-2001 and SRK-200 manufactured by Mitsubishi Rayon Co., Ltd., and the like.

Other examples of the rubber polymer produced by copolymerizing the rubber polymer with a monomer component copolymerizable with the polymer include polybutadiene rubber, styrene-butadiene copolymers (SBR), styrene-butadiene-styrene block copolymers (SBS), styrene-ethylene/butylene-styrene block copolymers (SEBS), styrene-ethylene/propylene-styrene block copolymers (SEPS), ethylene-ethyl acrylate copolymers (EEA), ethylene-methyl acrylate copolymers (EMA), and the like.

These elastomers may be used alone or in combination of two or more.

The content of the elastomer in the PC/PET composite resin composition of the first aspect not according to the claimed invention is 1 to 10 parts by mass, preferably 2 to 9 parts by mass, and more preferably 3 to 8 parts by mass relative to 100 parts by mass of the resin components including the polycarbonate resin and the deactivated PET.

The elastomer content smaller than the lower limit cannot satisfactorily cause the impact improving effect and the molding stability improving effect by mixing the elastomer, and the content exceeding the upper limit causes deterioration in heat stability and rigidity.

### <Inorganic filler>

The PC/PET composite resin composition of the first aspect not according to the claimed invention is characterized by containing 1 to 10 parts by mass of the elastomer and 1 to 20 parts by mass of an inorganic filler relative to 100 parts by mass of the resin components including the polycarbonate resin and the deactivated PET, and one of the characteristics is that thickening of the resin composition during heat residence is suppressed by mixing a specified amount of the inorganic filler. The inorganic filler used in the first aspect not according to the claimed invention is more preferably further surface-treated to improve adhesion to the resin components because dispersion failure of the inorganic filler during heat residence can be suppressed, thickening due to aggregation can be suppressed, and molding stability of the PC/PET composite resin composition can be improved.

Examples of the inorganic filler include fibrous inorganic fillers such as glass fibers, carbon fibers, metal fibers, ceramic fibers, milled fibers thereof, slag fibers, rock wool, wollastonite, xonotlite, potassium titanate whiskers, aluminum borate whiskers, boron whiskers, basic magnesium sulfate whiskers, and the like; silicate compounds such as glass flakes, glass beads, graphite, talc, mica, kaolinite, sepiolite, attapulgite, montmorillonite, bentonite, spectite, and the like; and inorganic fillers such as silica, alumina, calcium carbonate, and the like. The inorganic filler surface-coated with a different material, for example, metal-coated glass fibers, metal-coated carbon fibers, or the like, may be used. These inorganic fillers may be used alone or in combination of two or more.

Among these, glass fibers, carbon fibers, and milled fibers thereof are advantageous for improving molding stability, and in particular, glass fibers and milled fibers thereof are advantageous for achieving strong adhesion to the resin components including the polycarbonate resin and the deactivated PET. The glass fibers are particularly preferred as the inorganic filler.

The composition of glass fibers is not particularly limited to A glass, C glass, E glass, or the like, and may contain a component such as TiO₂, SO₃, P₂O₅, or the like according to circumferences. However, E glass (non-alkali glass) is more preferred.

Also, the average fiber diameter of the glass fibers is not particularly limited, but the average fiber diameter of 1 to 25µ m is generally used, and the average fiber diameter is preferably 3 to 17 µm. The glass fibers having an average fiber diameter within this range satisfactorily satisfy both a coefficient of thermal expansion and resistance to peeling force. The smaller fiber diameter has the good effect of improving molding stability because of an increase in an interface area between the fibers and the resin components, but the undesirable influence of the interfaces on the peeling force is increased. When interfacial adhesion is regarded as important, a possible method is to use thicker glass fibers.

The fiber length of the glass fibers is preferably 50 to 1,000 µm, more preferably 100 to 500 µm, and particularly preferably 120 300 µm, in terms of number-average fiber length in the resin composition pellets or the molded product. The number-average fiber length of the glass fibers refers to a value calculated from an image with an image analyzer, the image being obtained by observing, with an optical microscope, residual glass fibers collected after dissolution of the molded product in a solvent or decomposition of the resin with a basic compound. In calculation of the number-average fiber length, glass fibers with a length equal to or smaller than the fiber diameter are not counted. Also, the proper number-average fiber lengths of other fibrous fillers are 1,000 µm or less.

The inorganic filler such as the glass fibers or the lie is preferably surface-treated with a silane coupling agent or the like in order to achieve strong adhesion to the resin components including the polycarbonate resin and the deactivated PET. Reactive groups in the silane coupling agent include an epoxy group, an amino group, a vinyl group, a methacryloxy group, and the like, and an epoxy group and an amino group are preferred.

Also, the glass fibers and the carbon fibers are generally surface-coated for convergence treatment of fibers. Because the adhesion to the resin components is greatly influenced by a surface coating agent, the selection of the coating agent is important. The surface coating agent composed to an epoxy group-containing compound is preferred from the viewpoint of securing strong bonding with the resin components and improving molding stability. The epoxy group-containing compound is rich in reactivity to the resin components including the polycarbonate resin and the deactivated PET and has good adhesion and good moisture-heat resistance of adhesion.

Various epoxy group-containing compounds can be used as the surface treatment agent for the inorganic filler such as the glass fibers or the like, and the epoxy group-containing compound preferably has a polymer structure having a molecular weight of 500 or more and more preferably contains a plurality of epoxy groups per molecule. From the viewpoint of heat resistance, a structure mainly composed of an aromatic ring is preferred.

Preferred examples of the epoxy group-containing compound include epoxy resins, particularly phenol novolac-type epoxy resins and linear cresol novolac-type epoxy resins, and phenol novolac-type epoxy resins are particularly preferred.

In order that the effect of the first aspect not according to the claimed invention becomes remarkable, the glass fibers preferably used as the inorganic filler are preferably treated with the silane coupling agent having epoxy groups and the surface coating agent composed of the epoxy group-containing compound so as to have glycidyl groups on the surfaces.

The ratio of the inorganic filler contained in the PC/PET composite resin composition of the first aspect not according to the claimed invention is 1 to 20 parts by mass, preferably 2 to 15 parts by mass, and more preferably 3 to 10 parts by mass relative to 100 parts by mass of the resin components including the polycarbonate resin and the deactivated PET.

The inorganic filler contained at a ratio lower than the above-described lower limit value cannot satisfactorily achieve the effect of improving dimensional stability and rigidity by mixing the inorganic filler, while a ratio exceeding the upper limit value causes deterioration in impact resistance.

### <Combination of elastomer and inorganic filler>

As described above, the PC/PET composite resin composition of the first aspect not according to the claimed invention uses combination of 1 to 10 parts by mass of the elastomer, and 1 to 20 parts by mass of the inorganic filler relative to 100 parts by mass of the resin components including the polycarbonate resin and the deactivated PET. In order to more effectively achieve the effect of improving molding stability, the elastomer and the inorganic filler are preferably used at a ratio by mass of elastomer : the inorganic filler = 1:0.1 to 20, particularly 1:0.2 to 10, and the elastomer and the inorganic filler are preferably used in a total of 2 to 30 parts by mass, particularly 5 to 20 parts by mass, relative to 100 parts by mass of the resin components including the polycarbonate resin and the deactivated PET.

### <Other components>

Besides the polycarbonate resin, the deactivated PET, the heat stabilizer, the elastomer, and the inorganic filler, the PC/PET composite resin composition of the first aspect not according to the claimed invention may contain other various additives generally contained in a polycarbonate resin composition within a range where the effect of the first aspect not according to the claimed invention is not impaired.

Various additives which can be contained include an antioxidant, a mold release agent, an ultraviolet absorber, a dye/pigment, a reinforcement, a flame retardant, an impact resistance improver, an antistatic agent, an anti-fogging agent, a lubricant, an anti-blocking agent, a fluidity improver, a plasticizer, a dispersant, an antifungal agent, and the like. These may be used in combination of two or more. Examples of the additives preferred for PC/PET composite resin composition are specifically described below.

The mold release agent is, for example, at least one compound selected from the group consisting of aliphatic carboxylic acids, esters of aliphatic carboxylic acids and alcohols, aliphatic hydrocarbon compounds having a number-average molecular weight of 200 to 15,000, and polysiloxane-based silicone oil.

The aliphatic carboxylic acids include saturated or unsaturated mono-, di-, or tri-hydric carboxylic acids. In this case, the aliphatic carboxylic acids include alicyclic carboxylic acids. Among these, aliphatic mono- or di-hydric carboxylic acids having 6 to 36 carbon atoms are preferred, and aliphatic saturated monohydric carboxylic acids having 6 to 36 carbon atoms are more preferred. Examples of such aliphatic carboxylic acids include palmitic acid, stearic acid, caproic acid, capric acid, lauric acid, arachidic acid, behenic acid, lignoceric acid, cerotic acid, melissic acid, tetratriacontanoic acid, montanic acid, adipic acid, azelaic acid, and the like.

The same aliphatic carboxylic acids as described above can be used as aliphatic carboxylic acids in esters of aliphatic carboxylic acids and alcohols. On the other hand, saturated or unsaturated mono- or poly-hydric alcohols can be used as the alcohols. These alcohols may have a substituent such as a fluorine atom, an aryl group, or the like. Among these alcohols, monohydric or polyhydric saturated alcohols having 30 or less carbon atoms are preferred, and aliphatic saturated monohydric alcohols or polyhydric alcohols having 30 or less carbon atoms are more preferred. In this case, aliphatic compounds include alicyclic compounds. Examples of the alcohols include octanol, decanol, dodecanol, stearyl alcohol, behenyl alcohol, ethylene glycol, diethylene glycol, glycerin, pentaerythritol, 2,2-dihydroxyperfluoropropanol, neopentylene glycol, ditrimethylolpropane, dipentaerythritol, and the like.

The ester compounds may contain aliphatic carboxylic acids and/or alcohols as impurities, and may be a mixture of plurality of compounds.

Examples of the esters of the aliphatic carboxylic acids and alcohols include beeswax (a mixture containing myricyl palmitate as a main compound), stearyl stearate, behenyl behenate, stearyl behenate, glycerin monopalmitate, glycerin monostearate, glycerin distearate, glycerin tristearate, pentaerythritol monopalmitate, pentaerythritol monostearate, pentaerythritol distearate, pentaerythritol tristearate, pentaerythritol tetrastearate, and the like.

The aliphatic hydrocarbons having a number-average molecular weight of 200 to 15,000 include liquid paraffin, paraffin wax, micro wax, polyethylene wax, Fischer-Tropsch wax, α-olefin oligomers having 3 to 12 carbon atoms, and the like. In this case, the aliphatic hydrocarbons include alicyclic hydrocarbons. Also, the hydrocarbon compounds may be partially oxidized. Among these, paraffin wax, polyethylene wax, and partial oxides of polyethylene wax are preferred, and paraffin wax and polyethylene wax are more preferred. The number-average molecular weight of the aliphatic hydrocarbons is preferably 200 to 5,000. The aliphatic hydrocarbons may be single substances or mixtures of various components with different molecular weights as long as the main components fall within the above-described range.

Examples of the polysiloxane-based silicone oil include dimethyl silicone oil, phenylmethyl silicone oil, diphenyl silicone oil, fluorinated alkyl silicone, and the like. These may be used in combination of two or more.

The content of the mold release agent is generally 0.001 to 2 parts by mass and preferably 0.01 to 1 part by mass relative to a total of 100 parts by mass of the polycarbonate resin and the deactivated PET. When the content of the mold release agent is less than 0.001 part by mass, the effect of the mold release agent may be unsatisfactory, while when the content exceeds 2 parts by mass, the problem of degrading hydrolysis resistance, contaminating a mold during injection molding, or the like may occur.

Examples of the ultraviolet absorber include inorganic ultraviolet absorbers such as cerium oxide, zinc oxide, the like, and organic ultraviolet absorbers such as benzotriazole compounds, benzophenone compounds, triazine compounds, and the like. Among these, the organic ultraviolet absorbers are preferred. In particular, it is preferred to use at least one selected from the group consisting of benzotriazole compounds, 2-(4,6-diphenyl-1,3,5-triazin-2-yl)-5-[(hexyl)oxy]-phenol, 2-[4,6-bis(2,4-dimethylphenyl)-1,3,5-triazin-2-yl]-5-(octyloxy)phenol, 2,2'-(1,4-phenylene)bis[4H-3,1-benzoxazin-4-one], and [(4-methoxyphenyl)-methylene]-propanedioic acid-dimethyl ester.

Examples of the benzotriazole compounds include a condensate of methyl-3-[3-tert-butyl-5-(2H-benzotriazol-2-yl)-4-hydroxyphenyl] propionate and polyethylene glycol. Other examples of the benzotriazole compounds include 2-bis(5-methyl-2-hydroxyphenyl) benzotriazole, 2-(3,5-di-tert-butyl-2-hydroxyphenyl) benzotriazole, 2-(3',5'-di-tert-butyl-2'-hydroxyphenyl)-5-chlorobenzotriazole, 2-(3-tert-butyl-5-methyl-2-hydroxyphenyl)-5-chlorobenzotriazole, 2-(2'-hydroxy-5'-tert-octylphenyl) benzotriazole, 2-(3,5-di-tert-amyl-2-hydroxyphenyl) benzotriazole, 2-[2-hydroxy-3,5-bis(α,α-dimethylbenzyl)phenyl]-2H-benzotriazole, a condensate of 2,2'-methylene-bis[4-(1,1,3,3-tetramethylbutyl)-6-2N-benzotriazol-2-yl)phenol] [methyl-3-[3-tert-butyl-5-(2H-benzotriazol-2-yl)-4-hydroxyphenyl]propionate and polyethylene glycol, and the like.

Among these, 2-(2'-hydroxy-5'-tert-octylphenyl) benzotriazole, 2-[2-hydroxy-3,5-bis(α,α-dimethylbenzyl)phenyl]-2H-benzotriazole, 2-(4,6-diphenyl-1,3,5-triazin-2-yl)-5-[(hexyl)oxy]-phenol, 2-[4,6-bis(2,4-dimethylphenyl)-1,3,5-triazin-2-yl]-5-(octyloxy)phenol, and 2,2'-methylene-bis[4-(1,1,3,3-tetramethylbutyl)-6-2N-benzotriazol-2-yl)phenol] are preferred.

The content of the ultraviolet absorber is generally 0.01 to 3 parts by mass and preferably 0.1 to 1 part by mass relative to a total of 100 parts by mass of the polycarbonate resin and the deactivated PET. With the content of the ultraviolet absorber of less than 0.01 parts by mass, the effect of improving weather resistance may be unsatisfactory, while with content exceeding 3 parts by mass, the problem of mold deposit or the like may occur.

Dyes and pigments include inorganic pigments, organic pigments, organic dyes, and the like. Examples of the inorganic pigments include carbon black, sulfide-based pigments such as cadmium red, cadmium yellow, and the like; silicate-based pigments such as ultramarine blue and the like; oxide-based pigments such as zinc white, iron oxide red, chromium oxide, titanium oxide, iron black, titanium yellow, zinc-iron-based brown, titanium-cobalt-based green, cobalt green, cobalt blue, copper-chromium-based black, copper-iron-based black, and the like; chromate-based pigments such as chrome yellow, molybdate orange, and the like; ferrocyane-based pigments such as iron blue and the like. The organic pigments and organic dyes include phthalocyanine-based dyes and pigments such as copper phthalocyanine blue, copper phthalocyanine green, and the like, azo-based dyes and pigments such as nickel azo yellow and the like, fused polycyclic dyes and pigments such as thioindigo-based, perinone-based, perylene-based, quinacridone-based, dioxazine-based, isoindolinone-based, and quinophthalone-based dyes and pigments, and the like; anthraquinone-based, heterocyclic, and methyl-based dyes and pigments, and the like. These may be used in combination of two or more. Among these, in view of heat stability, carbon black, titanium oxide, cyanine-based, quinoline-based, anthraquinone-based, and phthalocyanine-based compounds, and the like are preferred.

The content of the dye/pigment is generally 5 parts by mass or less, preferably 3 parts by mass or less, and more preferably 2 parts by mass or less relative to a total of 100 parts by mass of the polycarbonate resin and the deactivated PET. The dye/pigment at a content exceeding 5 parts by mass may cause unsatisfactory impact resistance.

Examples of the flame retardant include halogen-based flame retardants such as polycarbonate of halogenated bisphenol A, brominated bisphenol-based epoxy resins, brominated bisphenol-based phenoxy resins, brominated polystyrene, and the like, phosphate ester-based flame retardants, organic metal salt-based flame retardants such as dipotassium diphenylsulfone-3,3'-disulfonate, potassium diphenylsulfone-3-sulfonate, potassium perfluorobutanesulfonate, and the like, polyorganosiloxane-based flame retardants, and the like. The phosphate ester-based flame retardants are particularly preferred.

Examples of the phosphate ester-based flame retardants include triphenyl phosphate, resorcinol bis(dixylenyl phosphate), hydroquinone bis(dixylenyl phosphate), 4,4'-biphenol bis(dixylenyl phosphate), bisphenol A bis(dixylenyl phosphate), resorcinol bis(diphenyl phosphate), hydroquinone bis(diphenyl phosphate), 4,4'-biphenol bis(diphenyl phosphate), bisphenol A bis(diphenyl phosphate), and the like. Among these, resorcinol bis(dixylenyl phosphate) and bisphenol A bis(diphenyl phosphate) are preferred.

The content of the flame retardant is generally 1 to 30 parts by mass, preferably 3 to 25 parts by mass, and more preferably 5 to 20 parts by mass relative to a total of 100 parts by mass of the polycarbonate resin and the deactivated PET. The flame retardant at a content of less than 1 part by mass may cause unsatisfactory flame retardancy, while the fame retardant at a content exceeding 30 parts by mass may decrease heat resistance.

Examples of the anti-dripping agent include fluorinated polyolefins such as polyfluoroethylene and the like, and polytetrafluoroethylene having a fibril forming ability is particularly preferred. This compound is easily dispersed in a polymer and shows the tendency to form a fibrous material by bonding polymers together. The polytetrafluoroethylene having a fibril forming ability is classified as type 3 according to the ASTM standards. The polytetrafluoroethylene can be used in either a solid form or an aqueous dispersion form. The polytetrafluoroethylene having a fibril forming ability is commercially available as, for example, "Teflon (registered trade name) 6J" or "Teflon (registered trade name) 30J" from Du Pont-Mitsui Fluorochemical Co., Ltd., and "Polyflon (trade name)" from Daikin Industries, Ltd.

The content of the anti-dripping agent is generally 0.02 to 4 parts by mass and preferably 0.03 to 3 parts by mass relative to a total of 100 parts by mass of the polycarbonate resin and the deactivated PET. The anti-dripping agent at a content exceeding 5 parts by mass may cause deterioration in the appearance of a molded product.

The PC/PET composite resin composition of the first aspect not according to the claimed invention may contain a resin component or a rubber component other than the polycarbonate resin, the deactivated PET, and the elastomer. In this case, examples of the other resin or rubber component include styrene-based resins such as acrylonitrile-styrene copolymers, acrylonitrile-butadienestyrene copolymers, polystyrene resins, and the like, polyolefin resins such as polyethylene resins, polypropylene resins, and the like, polyamide resins, polyimide resins, polyether imide resins, polyurethane resins, polyphenylene ether resins, polyphenylene sulfide resins, polysulfone resins, polymethacrylate resins, phenol resins, epoxy resins, and the like. In order to sufficiently secure the effect of combination of the polycarbonate resin and the deactivated PET, the content of the other resin or rubber component is preferably 20 parts by mass or less relative to a total of 100 parts by mass of the polycarbonate resin and the deactivated PET.

Also, in order to impart high thermal conductivity, the constituent material of the frame member of the first aspect not according to the claimed invention is preferably mixed with a highly thermal conductive filler within a range in which the effect of the first aspect not according to the claimed invention is not impaired. By imparting the high thermal conductive performance, the heat stored in the panel body can be efficiently radiated.

Examples of the highly thermal conductive filler include carbon fibers, thermal conductive powders of graphite, boron nitride, and the like, plate-shaped graphite, metal-coated carbon fibers, metal-coated graphite, metal-coated glass, aluminum oxide, aluminum nitride, boron carbide, silicon nitride, silicon carbide, zinc oxide, magnesium oxide, metal fibers, metal powders, and the like.

The content of the highly thermal conductive filler is preferably 5 to 40 parts by mass and more preferably 5 to 30 parts by mass relative to a total of 100 parts by mass of the polycarbonate resin and the deactivated PET. The highly thermal conductive filler at a content of less than 5 parts by mass may not impart satisfactory thermal conductivity, while the highly thermal conductive filler at a content exceeding 40 parts by mass may cause deterioration in moldability and impact resistance.

When the high thermal conductive performance is imparted to the constituent material of the frame member, thermal conductivity is preferably as high as possible, and is preferably 0.5 W/m·K or more, more preferably 1 W/m·K or more, still more preferably 3 W/m·K or more, and particularly preferably 5 W/m·K or more. With the thermal conductivity of less than 0.5 W/m·K, heat of the panel body cannot be efficiently radiated, and thus the satisfactory radiation efficiency may not be achieved. The upper limit of thermal conductivity is preferably 50 W/m·K, more preferably 40 W/m·K, and particularly preferably 30 W/m·K. With the thermal conductivity of more than 50 W/m·K, the resin composition is mixed with a large amount of the highly thermal conductive filler, thereby easily causing undesirable solidification of the resin composition during injection molding and defective filling.

In the first aspect not according to the claimed invention, the thermal conductivity of the constituent material of the frame member is measured by a method described below in the paragraphs of examples.

Even when the high thermal conductive performance is imparted to the frame member, the frame member can be disposed on the peripheral portion of the surface of the heat-insulating layer of the panel body. However, as shown in Fig. 2(b), a portion or the entire of the frame member is preferably disposed to communicate with the IR-absorbing layer in view of efficient heat radiation. This configuration is described later.

### <Method for producing PC/PET composite resin composition>

The PC/PET composite resin composition of the first aspect not according to the claimed invention can be produced by appropriately selecting any desired method from general known methods using the polycarbonate resin, the deactivated PET, the elastomer, the inorganic filler, and the phosphorus-based heat stabilizer and/or the hindered phenol-based heat stabilizer, and, if required, other additives to be added.

Specifically, the resin composition can be produced by previously mixing, using any one of various mixers such as a tumbler, a Henschel mixer, and the like, the polycarbonate resin, the deactivated PET, the elastomer, the inorganic filler, and the phosphorus-based heat stabilizer and/or the hindered phenol-based heat stabilizer, and, if required, other additives to be added, and then melt-kneading the resultant mixture using a Banbury mixer, a roll, Brabender, a uniaxial kneading extruder, a biaxial kneading extruder, a kneader, or the like. Also, the resin composition can be produced by supplying the components to an extruder using a feeder without previously mixing the components or after mixing only some of the components, and then melt-kneading the resultant mixture.

### [Panel using highly thermal conductive frame member (heat exhaust-type panel)]

Hereinafter, described is a panel of the first aspect not according to the claimed invention (may be referred to as a "heat exhaust-type panel") having a configuration in which as shown in Fig. 2(b), the IR-absorbing layer 2b is provided to form a peripheral portion of the heat-insulating layer 2a, and the highly thermal conductive frame member 3 is provided in contact with the IR-absorbing layer 2b so that transfer of the heat stored due to IR absorption by the IR-absorbing layer 2b can be shielded by the heat-insulating layer 2a and the heat is transferred to the highly thermal conductive frame member 3 side and radiated to the panel support side through the frame member 3.

With respect to the shapes, dimensions, etc. of the panel body and the frame member, the contents described above for the panel are true for the heat exhaust-type panel.

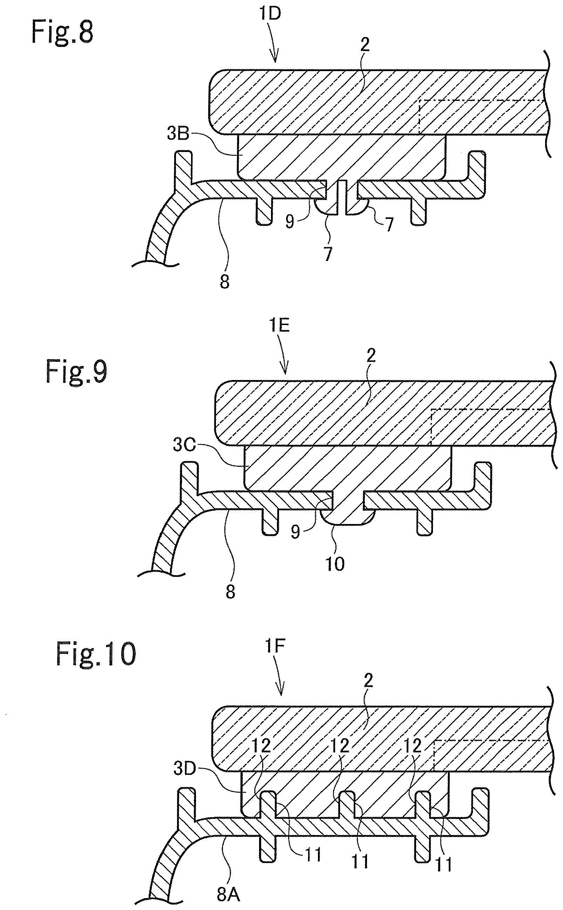

Fig. 7a to Fig. 7g are each a sectional view of a panel end portion of a heat exhaust-type panel according to an embodiment of the present invention, and Fig. 8 to Fig. 18 are each a sectional view showing a heat exhaust-type panel installation structure according to an embodiment of the present invention. In Fig. 8 to Fig. 18, a member corresponding to a seal member 26 shown in Fig. 3(c) is not shown. In these figures, the interface between the IR-absorbing layer and the heat-insulating layer in the panel body is shown by a one-dot chain line.

A panel 1 shown in Fig. 7a corresponds to the panel 51C shown in Fig. 2(b) and includes a panel body 2 and a frame member 3 provided on the entire peripheral portion of one (back) of the panel surfaces of the panel body 2 (corresponding to the panel body 52C). The frame member 3 is composed of a highly thermal conductive material, and thus the heat stored in the IR-absorbing layer of the panel body 2 can be radiated through the frame member 3.

In Fig. 7a, the panel body 2 has a flat surface on which the frame member 3 is formed and which is not provided with a groove.

A panel 1A shown in Fig. 7b includes a groove 4 provided in a frame member forming portion in the entire peripheral portion of one of the panel surfaces of a panel body 2A so that a frame member 3 is provided to be fitted to the groove 4. The depth of the groove 4 is preferably about 1 to 50%, more preferably 10 to 50%, and still more preferably 10 to 40% of the thickness of the frame member 3. With a shallow fitting depth, the effect of improving heat transfer by fitting may be decreased, while with a deep fitting depth, stress concentration occurs due to a difference in dimensional change between the panel body and the frame member with a change in thermal environments, or stress concentration occurs by deformation due to a difference of rigidity, thereby easily causing a defect such as fracture, deformation, or the like. The frame member 3 projects from the back surface of the panel body 2. The entire of the internal surface of the groove 4 is in contact with the frame member 3 without a space. The other components of the panel 1A are the same as in the panel 1.

A panel 1B shown in Fig. 7c includes concave streaks 5 provided in each of the outer and inner side surfaces of a frame member 3A, and thus the side surfaces of the frame member 3A have a heat radiating fin-like shape with an increased surface. In this embodiment, a plurality of concave streaks 5 (in the figure, three streaks) are provided in the thickness direction of the frame member 3, but one streak may be provided. The concave streaks 5 preferably extend continuously in the circumferential direction of the panel 1B, but may be provided to be intermitted in the direction of extension. Also, in place of the concave streaks, a plurality of projections (convex portions) may be provided. In the panel 1B, like in Fig. 7a, the panel body 2 has a flat peripheral portion in the frame member forming surface, but the groove 4 as in the panel 1A shown in Fig. 7b may be provided. The other components of the panel 1B are the same as in the panel 1.

A panel 1B' shown in Fig. 7d includes a highly thermal conductive attachment 6 composed of a metal and mounted on the side surfaces of the frame member 3. The attachment 6 includes leg pieces 6a provided on the back surface thereof to be fitted into grooves 5. By mounting the highly thermal conductive attachment 6, heat radiation from the frame member 3A is accelerated. The other components of the panel 1B' are the same as in the panel 1B.

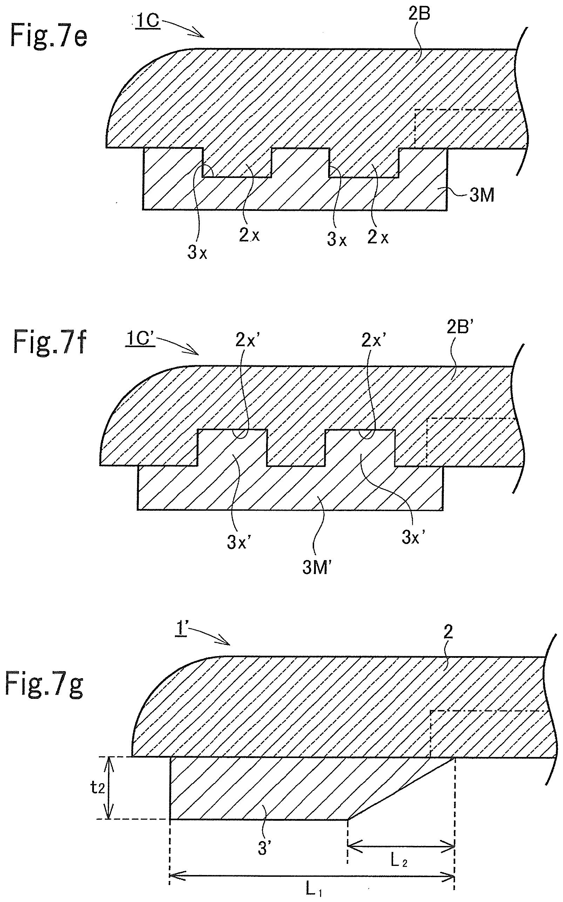

A panel 1C shown in Fig. 7e includes convex portions 2x provided on a frame member-forming portion in the entire peripheral portion of one of the panel surfaces of a panel body 2B, and on the other hand, concave portions 3x are provided on a frame member 3M so as to be fitted to the convex portions 2x. The other components of the panel 1C are the same as in the panel 1. A panel 1C' shown in Fig. 7f includes concave portions 2x' provided on a frame member-forming portion in the entire peripheral portion of one of the panel surfaces of a panel body 2B', and on the other hand, convex portions 3x' are provided on a frame member 3M' so as to be fitted to the concave portions 2x'. The other components of the panel 1C' are the same as in the panel 1. In the panels 1C and 1C', the efficiency of heat transfer is improved by a concave-convex structure of each of the contact surfaces between the panel bodies 2B and 2B' and the frame members 3M and 3M'. Also with respect to the fitting depth of the concave-convex portion of each of the contact surfaces between the panel bodies 2B and 2B' and the frame members 3M and 3M', for the same reason as in the fitting structure in the panel body 1A shown in Fig. 7b, the height of the convex portions 2x of the panel body 2B and the depth of the concave portions 3x of the frame member 3M of the panel 1C are preferably 1 to 50%, more preferably 10 to 50%, and still more preferably 10 to 40% of the thickness of the frame member 3M. Similarly, in the panel C', the depth of the concave portions 2x' of the panel body 2B' and the height of the convex portions 3x' of the frame member 3M' are preferably 1 to 50%, more preferably 10 to 50%, and still more preferably 10 to 40% of the thickness of the frame member 3M' including the convex portions 3x'.

The frame member may be further provided with an attachment piece as a projection for attaching another member. In addition, as shown in panel installation structures shown in Figs. 8 and 9 described below, a snap fitting may be provided as a projection or a resin rivet structure may be used. Further, a concave portion may be provided for fitting a bolt or a metal piece.

The dimensions and the shapes of the frame member and the panel body are as described above.

When as shown in Fig. 7b, the groove 4 is provided in the panel body 2A, and the frame member 3 is provided to be fitted to the groove 4, although not shown in the drawing, the corners of the frame member fitted into the panel body preferably have a R-shape in order to relieve stress concentration due to a difference between the linear expansion coefficients of the panel body and the frame member. The R-shape preferably has 0.5R to 10R, more preferably 0.5R to 5R, and still more preferably 1R to 3R. The small R-shape may not exhibit the effect of relieving stress concentration. The large R-shape decreases the contact area between the panel body and the frame member and thus may decrease adhesion between both and durability of the adhesion.

As described above, a concave-convex portion may be formed in the interface (bonded surface) between the back surface of the panel body and the frame member to form a concave-convex fitting structure which increases bonding strength between the panel body and the frame member. Also, an attachment piece may be provided as a projection for attaching another member to the frame member.

In addition, the frame member is not limited to that having a rectangular section and substantially the same thickness in the width direction (inside the outer edge of the panel (plate center side of the panel body)), and may be that in which the thickness continuously or stepwisely decreases to the inside (the plate center side of the panel body 2).

Such a panel is, for example, a panel 1' provided with a frame member 3' having a trapezoidal section shown in Fig. 7g. In the frame member of the panel shown in each of Figs. 1 and 2, Figs. 7a to 7f, and Figs. 8 to 18 described below, the thickness may be changed in the same manner as described above.

In this way, when the thickness of the frame member is decreased toward the plate center side of the panel body, contraction stress of the frame member is relieved during integral molding of the panel body and the frame member by injection molding, particularly during previous injection molding of the panel body and subsequent injection molding of the frame member, thereby easily preventing distortion of the panel body. In order to improve the effect of relieving contraction stress, in the panel 1' including a frame member 3' shown in Fig. 7g, the frame member 3' preferably has relations below between thickness t₂, the whole width L₁, and width L₂ of a portion where the thickness decreases. ${L}_{2} / {t}_{2} \geq 1.75$ $1 > {L}_{2} / {L}_{1} \geq 0.25$

### [Second aspect according to the claimed Invention]

A panel of a second aspect according to the claimed invention includes a panel body having a front surface and a back surface, and a frame member provided on a peripheral portion of the back surface of the panel body, the panel being supported by a panel support through the frame member and being made of a synthetic resin, wherein the panel body has light transmissivity and the light-absorbing heat-storing property of absorbing light, converting the light to heat, and storing the heat therein, and the frame member has a coefficient of thermal conductivity of 0.5 W/m·K or more. The panel of the second aspect according to the claimed invention is different from the above-described heat exhaust-type panel of the first aspect not according to the claimed invention in that the panel body preferably has a single-layer structure composed of a constituent material which satisfies specified characteristics, and the other components are the same as in the above-described heat exhaust-type panel of the first aspect not according to the claimed invention.

Therefore, with respect to the shapes, the dimensional structures, etc. of the panel body and the frame member, the contents described above for the panel of the first aspect not according to the claimed invention are true for the panel of the second aspect according to the claimed invention. Fig. 7a to Fig. 7g are also each a sectional view of a panel end portion of a panel according to an embodiment of the second aspect according to the claimed invention, and Fig. 8 to Fig. 18 are also each a sectional view showing a panel installation structure according to an embodiment of the second aspect according to the claimed invention. However, the panel body of the panel of the second aspect according to the claimed invention has a single-layer structure, and thus the interface between the IR-absorbing layer and the heat-insulating layer of the panel body shown in each of the drawings is omitted.

The panel of the second aspect according to the claimed invention can also be produced by integrally molding the panel body and the frame member by injection molding according to a usual method.

Although molding materials of the light-absorbing heat-storing panel body and the thermal conductive frame member according to the second aspect according to the claimed invention are described later, a light-transmissive and light-absorbing heat-storing resin composition preferred as a molding material of the light-absorbing heat-storing panel body is as described below.

The panel body according to the second aspect according to the claimed invention has light transmissivity and the light-absorbing heat-storing property of absorbing light (IR), converting the light into heat, and storing the heat therein. The degrees of light transmissivity and IR absorptivity can be represented by visible light transmittance T_{VIS} and total solar transmittance T_{SUN}, and the panel body according to the second aspect according to the claimed invention is preferably composed of a material satisfying characteristics (1) and (2) described below.
(1) Visible light transmittance T_{VIS} measured with a thickness of 5 mm according to ISO-9050 (simply referred to as "visible light transmittance T_{VIS}" hereinafter) is 5% or more and 98% or less.
(2) A difference (T_{S/V} - T_{SUN}) between reduced total solar transmittance T_{S/V} and total solar transmittance T_{SUN} measured with a thickness of 5 mm according to ISO-13837 (simply referred to as "total solar transmittance T_{SUN}" hereinafter) is more than 0%, the reduced total solar transmittance T_{S/V} being calculated by equation (i) below from visible light transmittance T_{VIS} and the total solar transmittance T_{SUN}. Here, the unit of any one of T_{VIS}, T_{SUN}, and T_{S/V} is "%". ${T}_{S / V} = \left(0.56\times {T}_{VIS}\right) + 38.8$

When the constituent material of the panel body according to the second aspect according to the claimed invention has a visible light transmittance T_{VIS} of less than 5%, satisfactory visibility cannot be secured. The higher the visible light transmittance T_{VIS}, the more excellent visibility is, but T_{VIS} is generally 98% or less. The more preferred visible light transmittance T_{VIS} is generally 5 to 98%, particularly 10 to 70%, depending on the required total solar transmittance T_{SUN}.

The above-described equation (i) has the same meaning as the equation (i) in the first aspect not according to the claimed invention and is determined by the same method as in the first aspect not according to the claimed invention.

A light-transmissive, light-absorbing heat-storing polycarbonate resin composition constituting the panel body of the panel according to the second aspect according to the claimed invention is made of a polycarbonate resin composition prepared by adding 0.0001 to 0.5 parts by mass of metal boride fine particles of at least one metal selected from the group consisting of La, Ce, Pr, Nd, Tb, Dy, Ho, Y, Sm, Eu, Er, Tm, Yb, Lu, Sr, and Ca relative to 100 parts by mass of an aromatic polycarbonate resin having a water content of 500 ppm by mass or more (Japanese Unexamined Patent Application Publication No. 2007-211213). The same constituent materials described as the constituent material of the IR-absorbing layer of the panel of the first aspect not according to the claimed invention can be used as the light-transmissive, light-absorbing heat-storing polycarbonate resin composition.

### [Panel installation structure]

Next, examples of an installation structure for the heat exhaust-type panel of the first aspect not according to the claimed invention and the panel of the second aspect according to the claimed invention are described with reference to Figs. 8 to 18.

Figs. 8 to 18 each show a structure in which each of the heat exhaust-type panel of the first aspect not according to the claimed invention and the panel of the second aspect according to the claimed invention is attached to a support such as a car body window frame or the like, but a panel installation structure of the present invention is not limited to an installation structure for the car body window frame.

A panel 1D shown in Fig. 8 includes a panel body 2 and a frame member 3B provided on the entire peripheral portion of one (back) of the panel surfaces of the panel body 2. Snap fittings 7 are provided on the surface of the frame member 3B opposite to the panel body 2 so that the panel 1D is attached to a support 8 by engaging the snap fittings 7 with an attachment hole 9 provided in the support 8. The snap fittings 7 include a pair of projecting pieces having a L-shaped sectional shape, and hook portions provided at the tips of a pair of snap fittings 7 in the projection direction are opposed to each other at a distance therebetween. The hook portions are engaged with the edge of the attachment hole 9 to fix the panel 1D to the support 8 through the snap fittings 7.

Also, the frame member 3B may be connected to the support 8 by not only engagement between the snap fittings 7 and the attachment hole 9 but also bonding with an adhesive. When an adhesive is used, the adhesive is preferably imparted with thermal conductivity so as not to inhibit heat transfer from the thermal conductive frame member 3B to the support 8. In addition, the thermal conductivity of the adhesive is preferably higher than the frame member, and therefore, the adhesive having higher thermal conductivity than the frame member is preferably selected and used.

In Fig. 9, a frame member 3C of a panel 1E is attached to a support 8 through a resin rivet 10. The resin rivet 10 has a mushroom-like shape having a substantially T-shaped sectional form having an enlarged top. The resin rivet 10 is generally formed by providing a boss with a projecting shape on the frame member 3C, melting a portion projecting from the attachment hole 9 by heat or ultrasonic waves, and caulking the portion to form a substantially T-shaped sectional form. In Fig. 9, the other components are the same as in Fig. 8.

In Fig. 10, projections 11 are provided to project from a support 8A to a panel 1F. The projections 11 may have a pin-like shape or a plate-like shape. In the case of the plate-like shape, the projections 11 may be extended in the circumferential direction of the panel 1F. The panel 1F includes a panel body 2 and a frame member 3D provided on the entire peripheral portion of one of the panel surfaces of the panel body 2. Concave portions 12 are provided in the frame member 3D so as to engage with the projections 11. The panel 1F is attached to the support 8A by fitting the projections 11 to the concave portions 12, but an adhesive may be further used. When the adhesive is used, the adhesive is preferably imparted with thermal conductivity so as not to inhibit heat transfer from the thermal conductive frame member 3D to the support 8A. In addition, the thermal conductivity of the adhesive is preferably higher than the frame member, and therefore, the adhesive having higher thermal conductivity than the frame member is preferably selected and used.

In Fig. 10, the projections 11 are brought into contact with the inner surfaces of the respective concave portions 12, thereby increasing the contact area between the frame member 3D and the support 8A and increasing the amount of heat transfer from the frame member 3D to the support 8A.

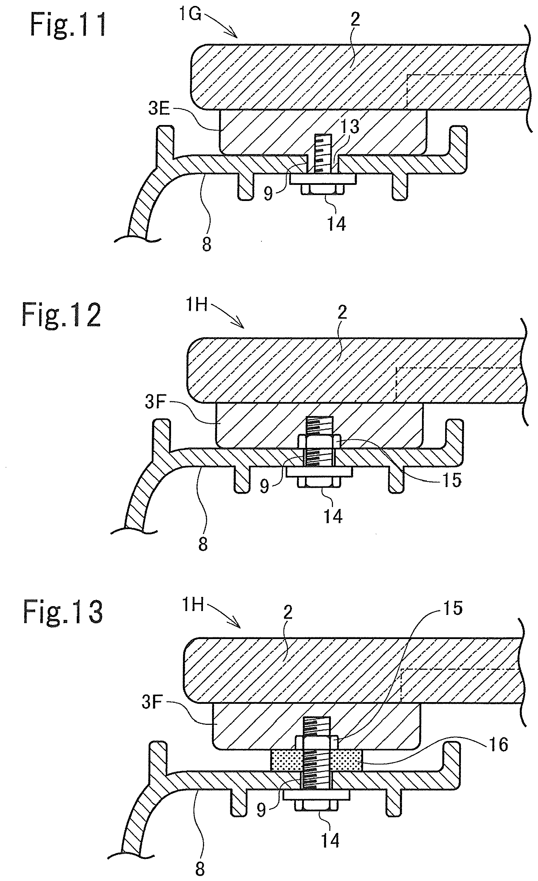

In Fig. 11, a panel 1G is attached to a support 8 through a bolt 14. The panel 1G includes a frame member 3E provided on the entire peripheral portion of one of the panel surfaces of a panel body 2. A boss portion 13 is provided on the frame member 3E, and the boss portion 13 is inserted into an attachment hole 9 of the support 8. The projection height of the boss portion 13 is substantially the same as or slightly smaller than the thickness of the support 8. The boss portion 13 is provided with a circular concave hole so that the bolt 14 with a flange is screwed into the circular concave hole to fix the panel 1G to the support 8. In addition, the inner peripheral surface of the circular concave hole may be provided with internal threads.

A panel 1H shown in Fig. 12 includes an insert nut 15 provided in a frame member 3F. The panel 1H is attached to a support 8 by screwing a bolt 14 into the insert nut 15. In Fig. 12, the other components are the same in Fig. 11.

In Figs. 11 and 12, each of the frame members 3E and 3F may be attached to the support 8 through only the bolt 14 or combination with the adhesive. Fig. 13 shows an example in which the adhesive is also used. In Fig. 13, an auxiliary adhesive 16 is interposed between the frame member 3F and the support 8. In Fig. 13, the other components are the same as in Fig. 12.

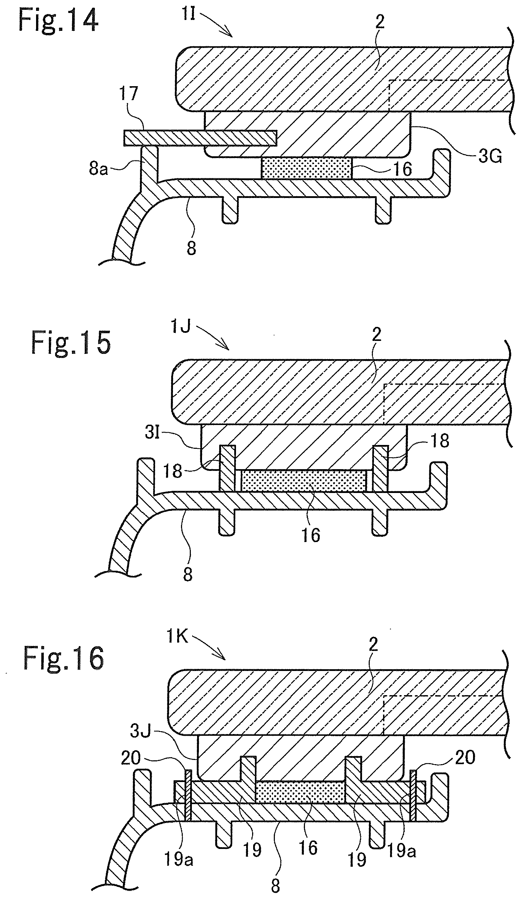

In Fig. 14, a panel 11 includes a panel body 2 and a frame member 3G, and the frame member 3G is bonded to a support 8 through an auxiliary adhesive 16. A metal piece 17 is inserted into the frame member 3G. The metal piece 17 is projected outward from the side surface of the frame member 3G and in contact with a rib portion 8a of the support 8. Since the metal piece 17 is in contact with the rib portion 8a, the amount of heat transfer from the frame member 3G to the support is increased.

A panel 1J shown in Fig. 15 includes a panel body 2 and a frame member 31. The frame member 3I is bonded to a support 8 through an auxiliary adhesive 16. Metal pieces 18 are inserted into the frame member 3I so as to project from the surface of the frame member 3I opposite to the panel body 2. The tips of the metal pieces 18 are in contact with the support 8, thereby increasing the amount of heat transfer from the frame member 3I to the support 8.

A panel 1K shown in Fig. 16 includes a panel body 2 and a frame member 3J. The frame member 3J is bonded to a support 8 through an auxiliary adhesive 16. A pair of metal pieces 19 with a L-shaped sectional form are inserted into the frame member 3J. Each of the metal pieces 19 extends along the surface of the frame member 3J opposite to the panel body 2. The metal piece 19 on the outer peripheral side of the frame member 3J projects to the outside of the frame member 3J and the metal piece 19 on the inner peripheral side of the frame member 3J projects to the inside of the frame member 3J. A small hole 19a is provided in each of the metal pieces 19 so that a pin 20 projecting from the support 8 is inserted into the small hole 19a.

In the structures of the examples shown in Figs, 14 to 16, a metal portion extending from the frame member communicates with the support and induces high heat transfer, and thus the auxiliary adhesive 16 is not necessarily imparted with thermal conductivity. However, the auxiliary adhesive is also preferably imparted with thermal conductivity in order to further improve heat transfer from the frame member to the support. In this case, the auxiliary adhesive preferably has higher thermal conductivity than the frame member, and therefore, the auxiliary adhesive having higher thermal conductivity than the frame member is preferably selected and used.

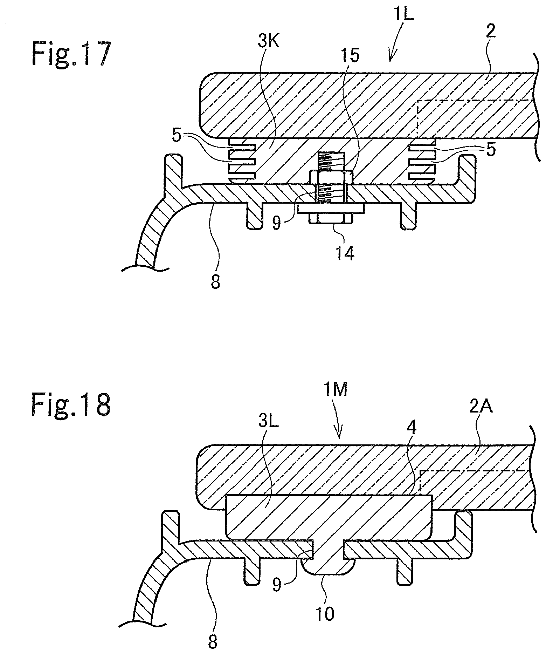

Each of the frame members 3B to 3J shown in Fig. 8 to Fig. 16 is not provided with the concave streaks as in the frame member 3A shown in Fig. 7c, but may be provided with the same concave streaks as in the frame member 3A. An example thereof is shown in Fig. 17, in which a frame member 3K of a panel 1L shown in Fig. 17 corresponds to a configuration in which the concave streaks 5 are provided on the side surfaces of the frame member 3F of the panel 1H shown in Fig. 12. The other components shown in Fig. 17 are the same as in Fig. 12. Although not shown in the drawing, an attachment 6 as shown in Fig. 7d may be mounted by using the concave streaks 5.

Also, like in Fig. 14 to Fig. 16, the metal portion extending from the attachment 6 shown in Fig. 7d may be put into contact with the panel support 8.

Although, in Figs. 8 to 17, the frame member-side panel surface of the panel body 2 is a flat surface, the groove 4 as shown in Fig. 7b may be provided. An example thereof is shown in Fig. 18. A panel 1M shown in Fig. 18 corresponds to a configuration in which the frame member 3L of the panel 1E shown in Fig. 9 is assembled by using a panel body 2A having the groove 4 in place of the panel body 2. The other components shown in Fig. 18 are the same as in Fig. 9.

In any one of the panel installation structures shown in Fig. 8 to Fig. 18, heat of the panel body is radiated to the support side directly through the thermal conductive frame member or further through the metal piece, the auxiliary adhesive, or the like. Further, although not shown in the drawings, the seal member 26 shown in Fig. 3 may be imparted with thermal conductivity so that heat can be radiated to the support through the seal member. This is more preferred because heat can also be radiated directly from the panel body to the support, and thus the efficiency of heat radiation can be enhanced. When the support is composed of a highly thermal conductive material, for example, a metal, the transferred heat is further transferred to the entire of the support, resulting in efficient heat radiation.

### [Molding material of highly thermal conductive frame member]

A highly thermal conductive resin composition suitable as a molding material of the highly thermal conductive frame member used in the heat exhaust-type panel of the first aspect not according to the claimed invention and the panel of the second aspect according to the claimed invention is described below.

The frame member of each of the heat exhaust-type panel of the first aspect not according to the claimed invention and the panel of the second aspect according to the claimed invention has a thermal conductivity of 3.0 W/m·K or more. When the frame member has a thermal conductivity of less than 0.5 W/m·K, the heat stored in the panel body or the IR-absorbing layer thereof cannot be efficiently radiated, thereby failing to achieve a satisfactory efficiency of heat radiation.

In the present invention, thermal conductivity refers to a value measured by the method described below in the paragraphs of examples.

The thermal conductivity of the frame member is preferably as high as possible, and is preferably 5 W/m·K or more. However, a highly thermal conductive resin composition prepared by mixing a resin with a highly thermal conductive filler as described below preferably has a thermal conductivity of 50 W/m·K or less, more preferably 40 W/m·K or less, and particularly preferably 30 W/m·K or less. The thermal conductivity of more than 50 W/m·K is undesired because a large amount of the highly thermal conductive filler is mixed in the resin composition, and thus the resin composition is easily solidified during injection molding, thereby easily causing failure in filling.

The highly thermal conductive resin composition according to the present invention is a polycarbonate resin composition containing at least a polycarbonate resin as a main component which is mixed with the highly thermal conductive filler. When two or more thermoplastic resin components are contained, the content of the polycarbonate resin is at least 5 parts by mass or more, preferably 10 parts by mass or more, and more preferably 15 parts by mass or more relative to 100 parts by mass of the thermoplastic resin components. With the content of the polycarbonate resin of less than 5 parts by mass, adhesion between the panel body and the frame member may be decreased, and thus a product may not be completed. The upper limit of the content of the polycarbonate resin is preferably 90 parts by mass and more preferably 80 parts by mass.

### {Highly thermal conductive polycarbonate resin composition}

The highly thermal conductive polycarbonate resin composition suitable as the molding material of the frame member of the present invention and prepared by mixing the highly thermal conductive filler is described below.

Usable polycarbonate resins include aromatic polycarbonate resins, aliphatic polycarbonate resins, and aromatic-aliphatic polycarbonate resins, but the aromatic polycarbonate resins are particularly preferred. The aromatic polycarbonate resins are thermoplastic aromatic polycarbonate polymers or copolymers produced by reacting aromatic dihydroxy compounds with phosgene or carbonic cid diesters.

The aromatic dihydroxy compounds include 2,2-bis(4-hydroxyphenyl)propane (= bisphenol A), tetramethyl bisphenol A, bis(4-hydroxyphenyl)-P-diisopropylbenzene, hydroquinone, resorcinol, 4,4-dihydroxybiphenyl, and the like, and bisphenol A is preferred. Further, a compound containing at least one tetraalkylphosphonium sulfonate bonded to an aromatic dihydroxy compound and a polymer or an oligomer containing phenolic OH groups at both ends and having a siloxane structure can be used for further enhancing flame retardancy.

The aromatic polycarbonate resin used in the present invention is preferably a polycarbonate resin derived from 2,2-bis(4-hydroxyphenyl)propane or a polycarbonate copolymer derived from 2,2-bis(4-hydroxyphenyl)propane and another aromatic dihydroxy compound. Further, combination of two or more polycarbonate resins may be used.

The molecular weight of the aromatic polycarbonate resin is in a range of 14,000 to 30,000, preferably 15,000 to 28,000, and more preferably 16,000 to 26,000 in terms of viscosity-average molecular weight calculated from solution viscosity measured at a temperature or 25°C using methylene chloride as a solvent. The viscosity-average molecular weight of less than 14,000 may cause insufficient mechanical strength, and the viscosity-average molecular weight exceeding 30,000 undesirably cause difficulty in molding.

A method for producing the aromatic polycarbonate resin is not particularly limited, and the aromatic polycarbonate resin can be produced by a phosgene method (interfacial polymerization method), a melting method (ester exchange method), or the like. Further, an aromatic polycarbonate resin produced by the melting method and having an adjusted amount of terminal OH groups can be used.

As the aromatic polycarbonate resin, not only a virgin raw material but also an aromatic polycarbonate resin regenerated from used products, that is an aromatic polycarbonate resin undergoing so-called material recycling can be used. The used products include optical recording media such as an optical disk and the like, optical waveguides, vehicle transparent members such as automotive window glass, an automotive head lamp lens, a windshield, and the like, vessels such as a water bottle and the like, a glass lens, building members such as a sound barrier, a glass window, a corrugated plate, and the like. Also, nonconforming products, crushed materials obtained from sprues, runners, or the like, or pellets produced by melting these materials can also be used as the regenerated aromatic polycarbonate resin.

On the other hand, examples of the highly thermal conductive filler include carbon fibers, thermal conductive powders of graphite, boron nitride, and the like, plate-shaped graphite, and the like.

The polycarbonate resin composition containing the highly thermal conductive filler used in the present invention is described below.

### <Highly thermal conductive polycarbonate resin composition 1>

A resin composition containing (A) a polycarbonate resin, and relative to 100 parts by mass of the polycarbonate resin (A), (B) 5 parts by mass or more and less than 40 parts by mass of graphitized carbon fibers having a thermal conductivity in the length direction of 100 W/m·K or more and an average fiber diameter of 5 to 20 µm, and (C) 5 parts by mass or more and 100 parts by mass or less of a graphite powder having an average particle diameter of 1 to 500 µm (Japanese Unexamined Patent Application Publication No. 2007-91985).

The graphitized carbon fibers (B) preferably have a thermal conductivity in the length direction of 400 W/m·K or more.

When the graphitized carbon fibers (B) have thermal conductivity out of the range described above, satisfactory thermal conductivity cannot be achieved at a low filling rate. The carbon fibers are a carbon short fiber bundle produced by bundling carbon short fibers (chopped strands) generally cut into 2 to 20 mm at a bulk density of 450 to 800 g/l, and then graphitizing the resultant bundle. The carbon short fiber bundle is produced by bundling carbon fibers with a sizing agent, cutting the carbon fibers into a predetermined length, and then graphitizing the resultant bundle so that the content of the sizing agent is 0.1% by mass or less. The graphitization is performed by a method of heating under conditions of 2800°C to 3300°C in an inert gas atmosphere. The average fiber diameter of the carbon fibers is 5 to 20 µm and can be measured with an image analyzer (for example, image processing R & D system TOSPIX-i manufactured by Toshiba Corporation) or the like. The average fiber diameter of less than 5 µm easily causes the problem of decreasing thermal conductivity when the carbon fibers are mixed and filled in the polycarbonate resin or increasing warping of a molded product. The average fiber diameter exceeding 20 µm causes deterioration of dimensional stability and thus causes difficulty in producing a good appearance. In addition, the sizing agent content of more than 0.1% by mass easily induces a decrease in thermal conductivity. The amount of the carbon fibers mixed is less than 40 parts by mass relative to 100 parts by mass of the polycarbonate resin, and with the mixing amount exceeding this value, moldability and dimensional stability are decreased, thereby increasing warping of a molded product. With the mixing amount of less than 5 parts by mass, satisfactory thermal conductivity cannot be achieved. The mixing amount is preferably 10 parts by mass or more and less than 40 parts by mass and more preferably 15 parts by mass or more and 35 parts by mass or less.

Further, long carbon fibers are preferably used as the carbon fibers (B). In the present invention, carbon fibers having a fiber length of 2 to 20 mm are used. Using the long fibers is effective for improving thermal conductivity and decreasing warping of a molded product, and the like.

The highly thermal conductive polycarbonate resin composition 1 is combined with (C) 5 parts by mass or more and 100 parts by mass or less of graphite powder having an average particle diameter of 1 to 500 µm in order to enhance thermal conductivity and moldability and decrease warping of a molded product. The average particle diameter of the graphite powder (C) refers to a value determined according to JIS Z8819-2 based on measurement by a laser diffraction method according to JIS Z8825-1. When the value exceeds 500 µm or the content exceeds 100 parts by mass, moldability is degraded. The graphite powder (C) having an average particle diameter of less than 1 µm is scattered during mixing and is thus difficult to handle and to uniformly disperse in the resin composition. Further, the content of less than 5 parts by mass cannot cause satisfactory thermal conductivity. The average particle diameter of the graphite powder (C) is preferably 5 to 100 µm. With the small amount of the carbon fibers (B), the amount of the graphite powder (C) is appropriately adjusted to be relatively large so as to attain predetermined thermal conductivity. For example, when the amount of the carbon fibers (B) is 5 parts by mass or more and 25 parts by mass or less, the amount of the graphite powder (C) is preferably 20 parts by mass or more and 100 parts by mass or less and more preferably 20 parts by mass or more and 80 parts by mass or less. When the amount of the carbon fibers (B) is 25 parts by mass or more and less than 40 parts by mass, the amount of the graphite powder (C) is preferably 5 parts by mass or more and 40 parts by mass or less and more preferably 5 parts by mass or more and 20 parts by mass or less.

### <Other components>

The highly thermal conductive polycarbonate resin composition used in the present invention (hereinafter may be referred to as the "highly thermal conductive polycarbonate resin composition of the present invention") may contain other components below within a range where the object of the present invention is not impaired.

### (1) Flame retardant

The highly thermal conductive polycarbonate resin composition of the present invention can be mixed with a flame retardant for imparting flame retardancy.

In many cases of application to glazing or the like, flame retardancy is required, and thus a flame retardant is preferably mixed.

The flame retardant is not particularly limited as long as it improves flame retardancy of the resin composition. Examples of the flame retardant include halogen-based flame retardants such as polycarbonate of halogenated bisphenol A, brominated bisphenol-based epoxy resins, brominated bisphenol-based phenoxy resins, brominated polystyrene, and the like, phosphate ester-based flame retardants, organic sulfonic acid metal salt-based flame retardants, silicone-based flame retardants, and the like.

These may be used alone or in combination of two or more at any desired ratio.

In particular, the phosphate ester-based flame retardants are preferred because they have a high flameproofing effect and a fluidity improving effect and little produce corrosion of a mold.

In particular, phosphate ester-based compounds represented by general formula (1) described below are preferred as the phosphate ester-based flame retardants. 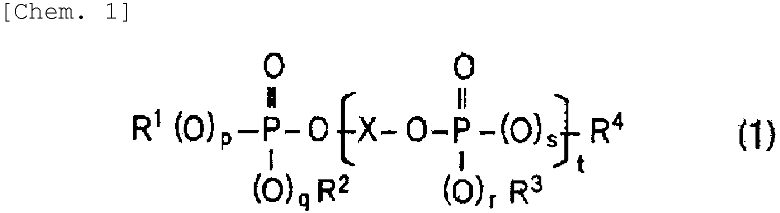 (wherein R¹, R², R³, and R⁴ each independently represent an alkyl group having 1 to 6 carbon atoms or an aryl group which may be substituted by an alkyl group and has 6 to 20 carbon atoms, p, q, r, and s each independently represent 0 or 1, t represents an integer of 0 to 5, and X represents an arylene group).

In the general formula (1), examples of an aryl group as R¹ to R⁴ include a phenyl group, a naphthyl group, and the like. In addition, examples of an arylene group as X include a phenylene group, a naphthylene group, and the like.

When t is 0, a compound represented by the general formula (1) is a phosphate ester, and when t is larger than 0, a compound is a condensed phosphate ester (including a mixture). For this flame-retardant purpose, a condensed phosphate ester is preferably used.

Examples of the phosphate ester-based flame retardants represented by the general formula (1) include various compounds such as trimethyl phosphate, triethyl phosphate, tributyl phosphate, trioctyl phosphate, tributoxyethyl phosphate, triphenyl phosphate, tricresyl phosphate, tricresylphenyl phosphate, octyldiphenyl phosphate, diisopropylphenyl phosphate, tris(chloroethyl) phosphate, tris(dichloropropyl) phosphate, tris(chloropropyl) phosphate, bis(2,3-dibromopropyl) phosphate, bis(2,3-dibromopropyl)-2,3-dichlorophosphate, bis(chloropropyl)monooctyl phosphate, bisphenol A tetraphenyl phosphate, bisphenol A tetracresyl diphosphate, bisphenol A tetraxylyl diphosphate, hydroquinone tetraphenyl diphosphate, hydroquinone tetracresyl phosphate, hydroquinone tetraxylyl diphosphate, and the like. Among these, triphenyl phosphate, bisphenol A tetraphenyl phosphate, resorcinol tetraphenyl phosphate, resorcinol tetra-2,6-xylenol phosphate and the like are preferred.

The phosphate ester-based flame retardants are preferred because mixing the flame retardants can improve flame retardancy of the composition, can decrease the viscosity, and can prevent the effect of imparting thermal conductivity by the graphite (B) from deteriorating due to changes in the aspect ratio and particle diameter of the graphite (B), for example, when the graphite (B) is fractured in a kneading step for preparing the above-described highly thermal conductive polycarbonate resin composition 4.

The amount of the flame retardant mixed may be appropriately selected and determined, but with an excessively small amount, the flame retardant effect may become unsatisfactory, while with an excessively large amount, heat resistance and mechanical physical properties may be degraded. Therefore, the content of the flame retardant in the highly thermal conductive polycarbonate resin composition of the present invention is, for example, 5 to 20% by mass for the phosphate ester-based flame retardant, 0.02 to 0.2% by mass for the organic sulfonic acid salt-based flame retardant, and 0.3 to 3% by mass for the silicone-based flame retardant.

Also, the flame retardant may be combined with an inorganic compound-based flame retardant auxiliary, and at least one of talc, mica, kaolin, clay, and silica powder, fumed silica, glass flakes, and the like can be used as the inorganic compound-based flame retardant auxiliary.

When the flame retardant is combined with the inorganic compound-based flame retardant auxiliary, the inorganic compound-based flame retardant auxiliary mixed in an excessively small amount cannot exhibit a satisfactory effect of mixing, while the inorganic compound-based flame retardant auxiliary mixed in an excessively large amount decreases heat resistance and mechanical physical properties. Therefore, the content of the inorganic compound-based flame retardant auxiliary in the highly thermal conductive polycarbonate resin composition of the present invention is preferably 1 to 20% by mass and more preferably 3 to 10% by mass.

### (2) Anti-dripping agent

The highly thermal conductive polycarbonate resin composition of the present invention can be mixed with an anti-dripping agent for preventing dripping at the time of burning. A fluorocarbon resin can be preferably used as the anti-dripping agent.

The fluorocarbon resin refers to a polymer or copolymer containing a fluoroethylene structure, and examples thereof include difluoroethylene polymers, tetrafluoroethylene polymers, tetrafluoroethylene-hexafluoropropylene copolymers, and copolymers of tetrafluoroethylene and ethylene monomers not containing fluorine. In particular, polytetrafluoroethylene (PTFE) is preferred, and the average molecular weight thereof is preferably 500,000 or more and particularly preferably 500,000 to 10,000,000.

In the present invention, all currently known types of polytetrafluoroethylene can be used as polytetrafluoroethylene, but use of polytetrafluoroethylene having a fibril forming ability can impart the higher property of preventing melt dripping. The polytetrafluoroethylene (PTFE) having a fibril forming ability is not particularly limited but is classified as, for example, type 3 according to the ASTM standards. Examples thereof include Teflon (registered trade name) 6-J (manufactured by Du Pont-Mitsui Fluorochemical Co., Ltd.), Polyflon D-1, Polyflon F-103, and Polyflon F201 (manufactured by Daikin Industries, Ltd.), CD076 (manufactured by Asahi ICI Fluoropolymers Co., Ltd.), and the like. Examples of polytetrafluoroethylene other than those classified as type 3 include Algoflon F5 (manufactured by Montefluos), Polyflon MPA and Polyflon A-100 (manufactured by Daikin Industries, Ltd.), and the like. These polytetrafluoroethylenes (PTFE) may be used alone or in combination or two or more. The polytetrafluoroethylene (PTFE) having a fibril forming ability can be produced by, for example, polymerizing tetrafluoroethylene in an aqueous solvent in the presence of sodium, potassium, or ammonium peroxydisulfide at a pressure of 1 to 100 psi and a temperature of 0°C to 200°C, preferably 20°C to 100°C. Also, a solvent dispersion of Teflon (registered trade name) 30-J (manufactured by Du Pont-Mitsui Fluorochemical Co., Ltd.) may be used.

The anti-dripping agent may include a polytetrafluoroethylene-containing mixed powder composed of polytetrafluoroethylene particles and organic polymer particles. Examples of a monomer used for producing the organic polymer particles include, but are not limited to, styrene monomers such as styrene, p-methylstyrene, o-methylstyrene, p-chlorostyrene, o-chlorostyrene, p-methoxystyrene, o-methoxystyrene, 2,4-dimethylstyrene, α-methylstyrene, and the like; (meth)acrylate ester monomers such as methyl acrylate, methyl methacrylate, ethyl acrylate, ethyl methacrylate, butyl acrylate, butyl methacrylate, 2-ethylhexyl acrylate, 2-ethylhexyl methacrylate, dodecyl acrylate, dodecyl methacrylate, tridodecyl acrylate, tridodecyl methacrylate, octadecyl acrylate, octadecyl methacrylate, cyclohexyl acrylate, cyclohexyl methacrylate, and the like; vinyl cyanide monomers such as acrylonitrile, methacrylonitrile, and the like; vinyl ether monomers such as vinyl methyl ether, vinyl ethyl ether, and the like; vinyl carboxylate monomers such as vinyl acetate, vinyl butyrate, and the like; olefin monomers such as ethylene propylene, isobutylene, and the like; diene monomers such as butadiene, isoprene, dimethylbutadiene, and the like. The organic polymer particles can be preferably produced by using two or more polymers or copolymers of these monomers.

The mixing amount of the anti-dripping agent is preferably 0.01 to 1% by mass and more preferably 0.1 to 0.5% by mass in terms of content in the highly thermal conductive polycarbonate resin composition of the present invention.

### (3) Impact resistance improver

The highly thermal conductive polycarbonate resin composition of the present invention can be mixed with an elastomer serving as an impact resistance improver for improving impact strength.

The elastomer is not particularly limited but is preferably a multilayered structure-polymer. The multilayered structure-polymer, for example, contains an alkyl (meth)acrylate polymer. An example of the multilayered structure-polymer is a polymer produced by continuous multistage seed polymerization in which a polymer in a previous stage is sequentially coated with polymers in subsequent stages. A basic polymer structure includes an inner core layer composed of a cross-linking component with a low glass transition temperature and an outermost core layer composed of a polymer compound which improves adhesion to a composition matrix. A rubber component having a glass transition temperature of 0°C or less is selected as the component that forms the innermost core layer of the multilayered structure-polymer. Examples of the rubber component include rubber components such as butadiene and the like, rubber components such as styrene/butadiene, and the like; rubber components such as alkyl (meth)acrylate polymers, and the like; rubber components each composed of a polyorganosiloxane polymer and alkyl (meth)acrylate polymer which are entangled with each other; and rubber components composed of combination of two or more of these rubber components. Further, an aromatic vinyl monomer, a non-aromatic monomer, or a copolymer of at least two of these monomers can be used as the component that forms the outermost core layer. Examples of the aromatic vinyl monomer include styrene, vinyltoluene, α-methylstyrene, monochlorostyrene, dichlorostyrene, bromostyrene, and the like. Among these, styrene is particularly preferably used. Examples of the non-aromatic monomer include alkyl (meth)acrylates such as ethyl (meth)acrylate, butyl (meth)acrylate, and the like; vinyl cyanides and vinylidene cyanides such as acrylonitrile, methacrylonitrile, and the like. These may be used alone or in combination of two or more.

The mixing amount of the impact resistance improver is preferably 1 to 10% by mass and more preferably 2 to 5% by mass in terms of content in the highly thermal conductive polycarbonate resin composition of the present invention.

### (4) Reinforcement

For improving elastic modulus, strength, and deflection temperature under load, a reinforcement can be added to the highly thermal conductive polycarbonate resin composition of the present invention.

Examples of the reinforcement include silica, diatomaceous earth, pumice powder, pumice balloons, aluminum hydroxide, magnesium hydroxide, basic magnesium carbonate, calcium sulfate, potassium titanate, barium sulfate, calcium sulfite, talc, clay, mica, glass fibers, glass flakes, glass beads, calcium silicate, montmorillonite, bentonite, molybdenum sulfide, boron fibers, silicon carbide fibers, polyester fiber, polyamide fibers, aluminum borate, and the like. These may be used alone or in combination of two or more. The reinforcement is not particularly limited, but is preferably glass fibers, glass flakes, talc, or mica.

The mixing amount of the reinforcement is preferably 1 to 100 parts by mass and more preferably 10 to 80 parts by mass relative to 100 parts by mass of the highly thermal conductive polycarbonate resin composition of the present invention.

### (5) Mold release agent

The highly thermal conductive polycarbonate resin composition of the present invention can be mixed with a mold release agent for improving mold release properties during injection molding.

Examples of the mold release agent include aliphatic carboxylic acids and alcohol esters thereof, aliphatic hydrocarbon compounds having a number-average molecular weight of 200 to 15,000, polysiloxane-based silicone oil, and the like.

The aliphatic carboxylic acids include saturated or unsaturated, chain or cyclic, mono- to tri-hydric aliphatic carboxylic acids. In particular, mono- or di-hydric carboxylic acids having 6 to 36 carbon atoms are preferred, and saturated monohydric aliphatic carboxylic acids having 6 to 36 carbon atoms are more preferred. Examples of such aliphatic carboxylic acids include palmitic acid, stearic acid, caproic acid, capric acid, lauric acid, arachidic acid, behenic acid, lignoceric acid, cerotic acid, melissic acid, tetratriacontanoic acid, montanic acid, adipic acid, azelaic acid, and the like.

The aliphatic carboxylic acid components in the aliphatic carboxylic acid esters represent the same meaning as the above-described aliphatic carboxylic acids. Examples of the alcohols of the aliphatic carboxylic acid esters include saturated or unsaturated, chain or cyclic, mono- or poly-hydric alcohols. These alcohols may have a substituent such as a fluorine atom, an aryl group, or the like. Among these alcohols, monohydric or polyhydric saturated alcohols having 30 or less carbon atoms are preferred, and aliphatic saturated monohydric or polyhydric alcohols having 30 or less carbon atoms are more preferred.

Examples of such alcohols include octanol, decanol, dodecanol, stearyl alcohol, behenyl alcohol, ethylene glycol, diethylene glycol, glycerin, pentaerythritol, 2,2-dihydroxyperfluoropropanol, neopentylene glycol, ditrimethylolpropane, dipentaerythritol, and the like. The aliphatic carboxylic acid esters may contain aliphatic carboxylic acids and/or alcohols as impurities, and may be a mixture of plurality of aliphatic carboxylic acid esters.

Examples of the aliphatic carboxylic acid esters include beeswax (mixture containing myricyl palmitate as a main compound), stearyl stearate, behenyl behenate, stearyl behenate, glycerin monopalmitate, glycerin monostearate, glycerin distearate, glycerin tristearate, pentaerythritol monopalmitate, pentaerythritol monostearate, pentaerythritol distearate, pentaerythritol tristearate, pentaerythritol tetrastearate, and the like.

The aliphatic hydrocarbons having a number-average molecular weight of 200 to 15,000 include liquid paraffin, paraffin wax, micro wax, polyethylene wax, Fischer-Tropsch wax, α-olefin oligomers having 3 to 12 carbon atoms, and the like. In this case, the aliphatic hydrocarbons include alicyclic hydrocarbons. Also, the hydrocarbon compounds may be partially oxidized.

Among these aliphatic hydrocarbons, paraffin wax, polyethylene wax, and partial oxides of polyethylene wax are preferred, and paraffin wax and polyethylene wax are particularly preferred. The number-average molecular weight is preferably 200 to 5,000. The aliphatic hydrocarbons may be used alone or in combination of two or more at any desired ratio as long as the main component falls within the above-described range.

Examples of the polysiloxane-based silicone oil include dimethyl silicone oil, phenylmethyl silicone oil, diphenyl silicone oil, fluorinated alkyl silicone, and the like. These may be used alone or in combination of two or more at any desired ratio.

The content of the mold release agent in the highly thermal conductive polycarbonate resin composition of the present invention may be appropriately selected and determined, but an excessively low content does not exhibit the satisfactory mold release effect, while an excessively high content may cause deterioration in hydrolysis resistance of the resin, contamination of a mold during injection molding, or the like. Therefore, the mixing amount of the mold release agent is 0.001 to 2 parts by mass and preferably 0.01 to 1 part by mass relative to 100 parts by mass of the highly thermal conductive polycarbonate resin composition of the present invention.

### (6) Others

Besides the above-described components, the highly thermal conductive polycarbonate resin composition of the present invention may be mixed with required amounts of an ultraviolet absorber, a stabilizer such as an antioxidant or the like, a pigment, a dye, a lubricant, and the like according to demand.

### [Panel support]

The panel support on which each of the panels of the first aspect not according to the claimed invention and the second aspect according to the claimed invention is supported through the frame member is generally composed of a metal.

When the panel of the present invention is a frame member of a building or the like, the panel support is a metal frame of a window and is composed of any one of various steel materials or nonferrous materials, for example, a steel material (steel sheet), an aluminum alloy, a magnesium alloy, a titanium alloy, and the like. Among these, a steel material and an aluminum alloy are preferred. A surface of the metal frame, such as a frame member bonded surface or the like of the panel, may have a coating film of another material. For example, a coating film may be formed by hot-dipping, electroplating, painting, or the like.

When the panel of the present invention is a glazing of a vehicle, a car body frame serves as the panel support and is generally composed of a steel material or an aluminum alloy.

### [Seal member/adhesive]

In the frame member of each of the panels of the first aspect not according to the claimed invention and the second aspect according to the claimed invention, as described above, heat may be transferred from the panel body by direct contact with the panel support or through an adhesive or a seal member interposed between the frame member and the panel support. When the seal member is interposed between the frame member and the panel support, with a very narrow space between the frame member and the panel support, the seal member is not particularly required to have high thermal conductivity. However, the seal member becomes an intermediate which inhibits heat transfer, and it is thus undesired to use the seal member so as to cover the entire surface of the highly thermal conductive frame member. A double-sided tape, a usual adhesive, grease, rubber, or the like can be used as the seal member. With a large space between the frame member and the panel support (for example, 1 mm or more), the seal member having a high thermal conductivity of 0.5 W/m·K or more is preferred and, specifically, a resin, rubber, polyurethane, grease, or the like which contains a highly thermal conductive filler such as a metal powder, graphite, alumina, boron nitride, silicon nitride, aluminum nitride, or the like can be used.

These may be used alone or in combination of two or more.

The adhesive preferably has high thermal conductivity. Preferred examples of the highly thermal conductive adhesive include a urethane-based adhesive which forms a gum buffer layer (C) disclosed in Japanese Unexamined Patent Application Publication No. 2009-270121, and the like. A primer described in the same publication may be applied before the urethane-based adhesive is applied. In particular, when adhesion between the panel support and the panel of the present invention and durability of the adhesion are required, a primer is preferably applied between the urethane adhesive and the frame member and between the urethane adhesive and the panel support.

### [Hard coating film]

In the first aspect not according to the claimed invention and the second aspect according to the claimed invention, a hard coat (hard coating film) may be provided as a protective film for mainly preventing damage and deterioration of the panel body. The hard coating film is provided on one or both of the panel body front surface opposite to the frame member, and a region of the panel body back surface, the region being disposed inside the frame member. However, the hard coating film is preferably formed on at least the front surface of the panel body.

The thickness of the hard coating film is preferably 1/100 or less of the thickness of the panel body and generally 1 to 50 µm and preferably 5 to 20 µm. The hard coating film having an excessively small thickness may cause deterioration in the function as a protective layer for the panel body in view of weather resistance and scratch resistance. The hard coating film having an excessively large thickness tends to increase the possibility of leading to age fracture due to a difference of linear expansion from the panel body.

The hard coating film may include a single layer but may have a multilayer structure including at least two layers for enhancing the protective function and weather resistance. In the multilayer structure, the hardness of the outermost layer is preferably maximized. The hard coating film having a multilayer structure preferably has at least one of the functions of various functional layers such as hot-ray shielding, ultraviolet absorption, thermochromic, photochromic, and electrochromic layers, a primer layer, a color-decorating layer, and the like.

The constituent material of the hard coating film is preferably a transparent resin. As the transparent resin, materials known as hard coating agents can be appropriately used. Usable examples thereof include various hard coating agents such as silicone-based, acryl-based, silazane-based, urethane-based hard coating agents, and the like. Among these, a 2-coat-type hard coating formed by providing a primer layer before applying a hard coating agent is preferred for improving adhesion and weather resistance. Examples of a coating method include spray coating, dip coating, flow coating, spin coating, bar coating, and the like. Also, a film insert method, a method of transferring a transfer film coated with a proper chemical, and the like can be used.

Also, a surface protective layer described in Japanese Unexamined Patent Application Publication No. 2011-121304 is effective as the hard coating film.

In addition, a chemical film with any one of various functions (hot-ray shielding, ultraviolet absorption, thermochromic, photochromic, and electrochromic functions) may be formed on the outermost layer of the hard coating film.

Further, a transparent resin layer may be provided between the surface of the panel body the hard coating film.

Further, when the panel of the present invention is used as a backdoor panel, a conductive film and an anti-fogging film are preferably formed on the frame member-forming surface side of the panel body because of the need for the anti-fogging and defogging function of a rear glass. A hard coating film having a hard coating function may be further provided on the outer surface side of the conductive film, but the anti-fogging film is preferably provided as the outermost layer of a film attached to the panel body.

### [Application]

The panels and the panel installation structures of the first aspect not according to the claimed invention and the second aspect according to the claimed invention are useful for windows of buildings, vehicle glazing, and the like.

The panels and the panel installation structures can be applied as vehicle glazing to a side door, a back door, a slide door, a hood, a roof, and the like.

For example, when the panel of the present invention is used for a backdoor panel, the thermal conductive frame member can be used for heat transfer for a defogging function provided on a backdoor glass.

For example, when the highly thermal conductive frame member is used on the heat transfer side, a heat source is disposed in the frame member so as to transfer heat over the entire periphery of a window through the frame member, and thus the clearness of the glass can be increased.

Conversely, heat generated by a planar heating element or thermal conductive wire disposed in the glass is escaped to the outside through the highly thermal conductive frame of the panel of the present invention, so that excessive heat storage can be suppressed.

In any one of the cases, the highly thermal conductive frame is preferably insulative for preventing electric short-circuiting from a heat source.

### EXAMPLES

The present invention is described in further detail below by giving examples, reference examples and comparative examples.

### [Materials used]

In the examples, reference examples and comparative examples below, formulations and physical properties of resin compositions used for forming panel bodies as test samples are as follows.

### [Polycarbonate resin composition I (resin composition for heat-insulating layer, referred to as "PCI" hereinafter)]

Polycarbonate resin (manufactured by Mitsubishi Engineering-Plastics Corporation, trade name "Iupilon (registered trade name) S-2000UR/5355", light blue, viscosity-average molecular weight: 25,000)

### <Optical characteristics>

Visible light transmittance T_{VIS}: 89.64%
Total solar transmittance T_{SUN}: 89.01%
Reduced total solar transmittance T_{S/V}: 89.00%
T_{S/V} - T_{SUN}: -0.01%
The visible light transmittance T_{VIS} and total solar transmittance T_{SUN} of PCI are shown by black circles in Fig. 4.

### <Thermal conductivity>

Thermal conductivity: 0.3 W/m·K

### [Polycarbonate resin composition II (light-absorbing heat-storing resin composition for IR-absorbing layer and panel body, referred to as "PCII" hereinafter)]

### <Resin composition mixture>

Polycarbonate resin 1 (manufactured by Mitsubishi Engineering-Plastics Corporation, trade name "Iupilon (registered trade name) E-2000FN", viscosity-average molecular weight: 28,000): 44.47 parts by mass
Polycarbonate resin 2 (manufactured by Mitsubishi Engineering-Plastics Corporation, trade name "Iupilon (registered trade name) S-3000FN", viscosity-average molecular weight: 21,500): 55.53 parts by mass
Lanthanum hexaboride fine particle dispersion (manufactured by Sumitomo Metal Mining Co., Ltd., trade name "KHDS-02", lanthanum hexaboride fine particle content 10.5% by mass, zirconium oxide content 10.6% by mass, polymeric dispersant content 78.9% by mass, particle diameter 20 to 100 nm): 0.05 parts by mass
Weather resistance improver (manufactured by Shipro Kasei Co., Ltd., trade name "Seesorb 709", 2-(2'-hydroxy-5'-tert-octylphenyl)-2H-benzotriazole): 0.3 parts by mass
Heat stabilizer (manufactured by Adeka Corp., trade name "Adeka Stab AS2112", tris(2,4-di-tert-butylphenyl)phosphite): 0.02 parts by mass
Antioxidant (manufactured by BASF Corporation, trade name "Irganox 1010", pentaerythritol tetrakis[3-(3,5-di-tert-butyl-4-hydroxyphenyl) propionate]): 0.1 parts by mass
Mold release agent (manufactured by Riken Vitamin Co., Ltd., trade name "Rikemal S-100A", glycerin monostearate): 0.1 parts by mass
Blue dye (manufactured by Bayer Ltd., trade name "Macrolex Blue RR" (anthraquinone-based)): 0.0034 parts by mass
Red dye (manufactured by Mitsubishi Chemical Corporation, trade name "D-RED-HS" (perinone-based)): 0.003 parts by mass

### <Optical characteristics>

Visible light transmittance T_{VIS}: 18.40%
Total solar transmittance T_{SUN}: 34.70%
Reduced total solar transmittance T_{S/V}: 49.10%
T_{S/V} - T_{SUN}: 14.40%
The visible light transmittance T_{VIS} and total solar transmittance T_{SUN} of PCII are shown by black circles in Fig. 4.

### <Thermal conductivity>

Thermal conductivity: 0.3 W/m·K

### [Polycarbonate resin composition III (resin composition for IR-absorbing layer, referred to as "PCIII" hereinafter)]

### <Resin composition mixture>

Resin composition prepared by mixing the PCI and PCII at a mass ratio of 1:1

### <Optical characteristics>

Visible light transmittance T_{VIS}: 44.27%
Total solar transmittance T_{SUN}: 46.26%
Reduced total solar transmittance T_{S/V}: 63.59%
T_{S/V} - T_{SUN}: 17.33%
The visible light transmittance T_{VIS} and total solar transmittance T_{SUN} of PCIII are shown by black circles in Fig. 4.

### <Thermal conductivity>

Thermal conductivity: 0.3 W/m·K

### [Polycarbonate resin composition IV (resin composition for IR-absorbing layer, referred to as "PCIV" hereinafter)]

### <Resin composition mixture>

Resin composition prepared by mixing the PCI and PCII at a mass ratio of 3:2

### <Optical characteristics>

Visible light transmittance T_{VIS}: 45.71%
Total solar transmittance T_{SUN}: 50.68%
Reduced total solar transmittance T_{S/V}: 64.40%
T_{S/V} - T_{SUN}: 13.72%
The visible light transmittance T_{VIS} and total solar transmittance T_{SUN} of PCIV are shown by black circles in Fig. 4.

### <Thermal conductivity>

Thermal conductivity: 0.3 W/m·K

### [Polycarbonate resin composition V (resin composition for IR-absorbing layer, referred to as "PCV" hereinafter)]

### <Resin composition mixture>

Polycarbonate resin 1 (manufactured by Mitsubishi Engineering-Plastics Corporation, trade name "Iupilon (registered trade name) E-2000FN", viscosity-average molecular weight: 28,000): 59.8 parts by mass
Polycarbonate resin 2 (manufactured by Mitsubishi Engineering-Plastics Corporation, trade name "Iupilon (registered trade name) S-3000FN", viscosity-average molecular weight: 21,500): 40.2 parts by mass
Lanthanum hexaboride fine particle dispersion (manufactured by Sumitomo Metal Mining Co., Ltd., trade name "KHDS-02", lanthanum hexaboride fine particle content 10.5% by mass, zirconium oxide content: 10.6% by mass, polymeric dispersant content: 78.9% by mass, particle diameter: 20 to 100 nm): 0.03 parts by mass
Lanthanum hexaboride fine particle dispersion (manufactured by Sumitomo Metal Mining Co., Ltd., trade name "KHCS-06", masterbatch with lanthanum hexaboride fine particle content of 0.25% by mass): 1.80 parts by mass
Heat stabilizer 1 (manufactured by Adeka Corp., trade name "Adeka Stab AS2112" (tris(2,4-di-tert-butylphenyl)phosphite)): 0.04 parts by mass
Heat stabilizer 2 (manufactured by Adeka Corp., trade name "Adeka Stab AO50" (stearyl-β-(3,5-di-tert-butyl-4-hydroxyphenyl)propionate): 0.03 parts by mass
Mold release agent: manufactured by Cognis Japan Ltd., trade name "VPG861" (pentaerythritol tetrastearate): 0.15 parts by mass
Ultraviolet absorber: manufactured by Shipro Kasei Co., Ltd., trade name "Seesorb 709" (2-(2'-hydroxy-5'-tert-octylphenyl)-2H-benzotriazole): 0.05 parts by mass
Violet dye (manufactured by Sumitomo Chemical Co., Ltd., trade name "Macrolex Violet 3R" (anthraquinone-based)): 0.0012 parts by mass
Blue dye (manufactured by Sumitomo Chemical Co., Ltd., trade name "Macrolex Blue RR" (anthraquinone-based)): 0.0025 parts by mass
Red dye (manufactured by Mitsubishi Chemical Corporation, trade name "D-RED-HS" (perinone-based)): 0.0015 parts by mass

### <Optical characteristics>

Visible light transmittance T_{VIS}: 13.39%
Total solar transmittance T_{SUN}: 31.87%
Reduced total solar transmittance T_{S/V}: 46.30%
T_{S/V} - T_{SUN}: 14.43%
The visible light transmittance T_{VIS} and total solar transmittance T_{SUN} of PCV are shown by black circles in Fig. 4.

### <Thermal conductivity>

Thermal conductivity: 0.3 W/m·K

### [Polycarbonate resin composition VI (resin composition for IR-absorbing layer, referred to as "PCVI" hereinafter)]

### <Resin composition mixture>

Polycarbonate resin 1 (manufactured by Mitsubishi Engineering-Plastics Corporation, trade name "Iupilon (registered trade name) E-2000FN", viscosity-average molecular weight: 28,000): 67.4 parts by mass
Polycarbonate resin 2 (manufactured by Mitsubishi Engineering-Plastics Corporation, trade name "Iupilon (registered trade name) S-3000FN", viscosity-average molecular weight: 21,500): 32.6 parts by mass
Lanthanum hexaboride fine particle dispersion (manufactured by Sumitomo Metal Mining Co., Ltd., trade name "KHCS-06", masterbatch with lanthanum hexaboride fine particle content of 0.25% by mass): 2.0 parts by mass
Heat stabilizer 1 (manufactured by Adeka Corp., trade name "Adeka Stab AS2112" (tris(2,4-di-tert-butylphenyl)phosphite)): 0.05 parts by mass
Heat stabilizer 2 (manufactured by Adeka Corp., trade name "Adeka Stab AO50" (stearyl-β-(3,5-di-tert-butyl-4-hydroxyphenyl)propionate): 0.05 parts by mass
Mold release agent: manufactured by Cognis Japan Ltd., trade name "VPG861" (pentaerythritol tetrastearate): 0.3 parts by mass
Ultraviolet absorber: manufactured by Shipro Kasei Co., Ltd., trade name "Seesorb 709" (2-(2'-hydroxy-5'-tert-octylphenyl)-2H-benzotriazole): 0.1 parts by mass
Violet dye (manufactured by Sumitomo Chemical Co., Ltd., trade name "Macrolex Violet 3R" (anthraquinone-based)): 0.0003 parts by mass
Blue dye (manufactured by Sumitomo Chemical Co., Ltd., trade name "Macrolex Blue RR" (anthraquinone-based)): 0.0002 parts by mass
Green dye (manufactured by Sumika Chemtex Co., Ltd., trade name "Sumiplast Green G" (anthraquinone-based): 0.0004 parts by mass
Yellow dye: manufactured by Kiwa Chemical Industry Co., Ltd. trade name "KP Plast Yellow MK" (anthraquinone-based): 0.0001 parts by mass

### <Optical characteristics>

Visible light transmittance T_{VIS}: 58.43%
Total solar transmittance T_{SUN}: 54.81%
Reduced total solar transmittance T_{S/V}: 71.52%
T_{S/V} - T_{SUN}: 16.71%
The visible light transmittance T_{VIS} and total solar transmittance T_{SUN} of PCVI are shown by black circles in Fig. 4.

### <Thermal conductivity>

Thermal conductivity: 0.3 W/m·K

### [Polycarbonate resin composition VII (resin composition for IR-absorbing layer, referred to as "PCVII" hereinafter)]

### <Resin composition mixture>

Polycarbonate resin 1 (manufactured by Mitsubishi Engineering-Plastics Corporation, trade name "Iupilon (registered trade name) E-2000FN", viscosity-average molecular weight: 28,000): 74.9 parts by mass
Polycarbonate resin 2 (manufactured by Mitsubishi Engineering-Plastics Corporation, trade name "Iupilon (registered trade name) S-3000FN", viscosity-average molecular weight: 21,500): 25.1 parts by mass
Lanthanum hexaboride fine particle dispersion (manufactured by Sumitomo Metal Mining Co., Ltd., trade name "KHCS-06", masterbatch with lanthanum hexaboride fine particle content of 0.25% by mass): 3.2 parts by mass
Heat stabilizer 1 (manufactured by Adeka Corp., trade name "Adeka Stab AS2112" (tris(2,4-di-tert-butylphenyl)phosphite)): 0.05 parts by mass
Heat stabilizer 2 (manufactured by Adeka Corp., trade name "Adeka Stab AO50" (stearyl-β-(3,5-di-tert-butyl-4-hydroxyphenyl)propionate): 0.05 parts by mass
Mold release agent: manufactured by Cognis Japan Ltd., trade name "VPG861" (pentaerythritol tetrastearate): 0.3 parts by mass
Ultraviolet absorber: manufactured by Shipro Kasei Co., Ltd., trade name "Seesorb 709" (2-(2'-hydroxy-5'-tert-octylphenyl)-2H-benzotriazole): 0.1 parts by mass
Violet dye (manufactured by Sumitomo Chemical Co., Ltd., trade name "Macrolex Violet 3R" (anthraquinone-based)): 0.0022 parts by mass
Blue dye (manufactured by Sumitomo Chemical Co., Ltd., trade name "Macrolex Blue RR" (anthraquinone-based)): 0.0018 parts by mass
Red dye (manufactured by Sumika Chemtex Co., Ltd., trade name "Sumiplast RED HL5B" (perinone-based): 0.0002 parts by mass

### <Optical characteristics>

Visible light transmittance T_{VIS}: 4.86%
Total solar transmittance T_{SUN}: 28.29%
Reduced total solar transmittance T_{S/V}: 41.52%
T_{S/V} - T_{SUN}: 13.23%
The visible light transmittance T_{VIS} and total solar transmittance T_{SUN} of PCVII are shown by black circles in Fig. 4.

### <Thermal conductivity>

Thermal conductivity: 0.3 W/m·K

### [Polycarbonate resin composition VIII (resin composition for IR-absorbing layer, referred to as "PCVIII" hereinafter)]

### <Resin composition mixture>

Resin composition prepared by mixing the PCI and PCII at a mass ratio of 63:37

### <Optical characteristics>

Visible light transmittance T_{VIS}: 42.82%
Total solar transmittance T_{SUN}: 48.40%
Reduced total solar transmittance T_{S/V}: 62.78%
T_{S/V} - T_{SUN}: 14.38%
The visible light transmittance T_{VIS} and total solar transmittance T_{SUN} of PCVIII are shown by black circles in Fig. 4.

### <Thermal conductivity>

Thermal conductivity: 0.3 W/m·K

### [Polycarbonate resin composition IX (resin composition for IR-absorbing layer, referred to as "PCIX" hereinafter)]

### <Resin composition mixture>

Resin composition prepared by mixing the PCI and PCII at a mass ratio of 2:3

### <Optical characteristics>

Visible light transmittance T_{VIS}: 30.61%
Total solar transmittance T_{SUN}: 41.55%
Reduced total solar transmittance T_{S/V}: 55.94%
T_{S/V} - T_{SUN}: 14.39%
The visible light transmittance T_{VIS} and total solar transmittance T_{SUN} of PCIX are shown by black circles in Fig. 4.

### <Thermal conductivity>

Thermal conductivity: 0.3 W/m·K

### [Polycarbonate resin composition X (resin composition for heat-insulating layer, referred to as "PCX" hereinafter)]

Polycarbonate resin (manufactured by Mitsubishi Engineering-Plastics Corporation, trade name "Novarex (registered trade name) 7022R/HRR1953", fluorescent red, viscosity-average molecular weight: 21,500)

### <Optical characteristics>

Visible light transmittance T_{VIS}: 11.83%
Total solar transmittance T_{SUN}: 66.41%
Reduced total solar transmittance T_{S/V}: 45.42%
T_{S/V} - T_{SUN}: -20.99%
The visible light transmittance T_{VIS} and total solar transmittance T_{SUN} of PCX are shown by black circles in Fig. 4.

### <Thermal conductivity>

Thermal conductivity: 0.3 W/m·K

### [Polycarbonate resin composition XI (light-absorbing heat-storing polycarbonate resin composition for panel body, referred to as "PCXI" hereinafter)]

### <Resin composition mixture>

Polycarbonate resin 1 (manufactured by Mitsubishi Engineering-Plastics Corporation, trade name "Iupilon (registered trade name) E-2000FN", viscosity-average molecular weight: 28,000): 22 parts by mass
Polycarbonate resin 2 (manufactured by Mitsubishi Engineering-Plastics Corporation, trade name "Iupilon (registered trade name) S-3000FN", viscosity-average molecular weight: 21,500): 78 parts by mass
Lanthanum hexaboride fine particle dispersion (manufactured by Sumitomo Metal Mining Co., Ltd., trade name "KHCS-06", masterbatch with lanthanum hexaboride fine particle content of 0.25% by mass): 2.1 parts by mass
Weather resistance improver (manufactured by Shipro Kasei Co., Ltd., trade name "Seesorb 709", 2-(2'-hydroxy-5'-tert-octylphenyl)-2H-benzotriazole): 0.1 parts by mass
Heat stabilizer 1 (manufactured by Adeka Corp., trade name "Adeka Stab AS2112", tris(2,4-di-tert-butylphenyl)phosphite): 0.05 parts by mass
Heat stabilizer 2 (manufactured by Adeka Corp., trade name "Adeka Stab AO60" (tetrakis[methylene-3-(3,5-di-tert-butyl-4-hydroxyphenyl)propionate]methane)): 0.05 parts by mass
Mold release agent: manufactured by Cognis Japan Ltd., trade name "VPG861" (pentaerythritol tetrastearate): 0.3 parts by mass
Blue dye (manufactured by Lanxess Co., Ltd., trade name "Macrolex Blue RR" (anthraquinone-based)): 0.0015 parts by mass
Red dye (manufactured by Lanxess Co., Ltd., trade name "Macrolex Red 5B" (anthraquinone-based): 0.0011 parts by Mass
Black pigment (manufactured by Mitsubishi Chemical Corporation, trade name "Carbon Black #1000"): 0.0003 parts by mass

### <Optical characteristics>

Visible light transmittance T_{VIS}: 24.40%
Total solar transmittance T_{SUN}: 37.30%
Reduced total solar transmittance T_{S/V}: 52.46%
T_{S/V} - T_{SUN}: 15.16%
The visible light transmittance T_{VIS} and total solar transmittance T_{SUN} of PCXI are shown by black circles in Fig. 4.

### [Polycarbonate resin composition XII (non-light-absorbing heat-storing polycarbonate resin composition for comparison, referred to as "PCXII" hereinafter)]

### <Resin composition mixture>

Polycarbonate resin composition of No. 2 shown in Table 1

### <Optical characteristics>

Visible light transmittance T_{VIS}: 16.80%
Total solar transmittance T_{SUN}: 49.60%
Reduced total solar transmittance T_{S/V}: 48.21%
T_{S/V} - T_{SUN}: -1.39%

In the examples, reference examples and comparative examples below, formulations and physical properties of resin compositions used for forming frame members as test samples are as follows.

### [Polycarbonate resin composition α (highly thermal conductive polycarbonate resin composition, referred to as "PCα" hereinafter)]

### <Resin composition mixture>

Polycarbonate resin (manufactured by Mitsubishi Engineering-Plastics Corporation, trade name "Iupilon (registered trade name) S-3000FN", viscosity-average molecular weight 21,500): 100 parts by mass
Graphitized carbon fibers (pitch-based) (manufactured by Mitsubishi Plastics Industries, Ltd., trade name "Dia Lead K223GM", thermal conductivity in the length direction: 20 W/m·K, average fiber diameter: 10 µm, average fiber length: 6 mm): 15 parts by mass
Scale-like graphite (manufactured by Nishimura Graphite Industry Co., Ltd., trade name "PB90", average particle diameter: 26 µm): 20 parts by mass

### <Thermal conductivity>

Thermal conductivity: 6 W/m·K

### [Polycarbonate resin composition β (low thermal conductive polycarbonate resin composition, referred to as "PCβ" hereinafter)]

### <Resin composition mixture>

Polycarbonate resin 1 (manufactured by Mitsubishi Engineering-Plastics Corporation, trade name "Iupilon (registered trade name) S-3000FN", viscosity-average molecular weight 21,500): 76 parts by mass
Polycarbonate resin 2 (manufactured by Mitsubishi Engineering-Plastics Corporation, trade name "Iupilon (registered trade name) H-4000FN", viscosity-average molecular weight 14,500): 4 parts by mass
Polyethylene terephthalate resin (manufactured by Mitsubishi Chemical Corporation, trade name "Novapex GG501H"): 20 parts by mass
Glass fibers (manufactured by Nippon Electric Glass Co., Ltd., trade name "Chopped Strand ECS-03T-187"): 9.1 parts by mass
Heat stabilizer 1 (manufactured by Adeka Corp., trade name "Adeka Stab AS2112" (tris(2,4-di-tert-butylphenyl)phosphite)): 0.1 parts by mass
Heat stabilizer 2 (manufactured by Adeka Corp., trade name "Adeka Stab AO50" (stearyl-β-(3,5-di-tert-butyl-4-hydroxyphenyl)propionate): 0.2 parts by mass
Elastomer (manufactured by Ganz Chemical Co., Ltd., trade name "Staphyloid MG1011" (styrene-based core-shell graft copolymer): 3.4 parts by mass
Black pigment (manufactured by Koshigaya Chemical Industry Co., Ltd., trade name "Royal Black 904G"): 1.1 parts by mass

### <Thermal conductivity>

Thermal conductivity: 0.3 W/m·K

### [Polycarbonate resin composition γ (highly thermal conductive polycarbonate resin composition, referred to as "PCγ" hereinafter)]

### <Resin composition mixture>

Polycarbonate resin (manufactured by Mitsubishi Engineering-Plastics Corporation, trade name "Iupilon (registered trade name) S-3000UR", viscosity-average molecular weight: 21,500): 16 parts by mass
Polybutylene terephthalate resin 1 (manufactured by Mitsubishi Engineering-Plastics Corporation, trade name "Novaduran (registered trade name) 5007", intrinsic viscosity: 0.70 dl/g): 59 parts by mass
Polybutylene terephthalate resin 2 (manufactured by Mitsubishi Engineering-Plastics Corporation, trade name "Novaduran (registered trade name) 5510", polytetramethylene glycol (PTMG) copolymerized polybutylene terephthalate resin, intrinsic viscosity: 1.3 dl/g): 25 parts by mass
Highly thermal conductive filler (manufactured by Denki Kagaku Kogyo K. K., trade mane "SGP", scale-like boron nitride, purity 99%, average particle diameter: 18 µm) : 21 parts by mass
Reinforcement 1 (manufactured by Matsumura Industry Co., Ltd., trade name "Highfiller #12C", compressed talc, average particle diameter 5 to 7 µm, bulk specific gravity 0.75 to 0.9 g/ml): 35 parts by mass
Reinforcement 2 (manufactured by Nitto Boseki Co., Ltd., trade name "CSG3PA-830", glass fibers with an elliptical sectional shape, flattening 4, use for polyester resin): 70 parts by mass
Flame retardant 1 (manufactured by Suzuhiro Chemical Co., Ltd., trade name "Fire Cut AT-3CN" (antimony trioxide)): 6.3 parts by mass
Mold release agent 2 (manufactured by Nippon Seiro Co., Ltd., trade name "FT100", paraffin wax): 0.7 parts by mass
Antioxidant (manufactured by Ciba Speciality Chemicals Japan K. K., trade name "Irganox 1010", hindered phenol-based compound): 0.7 parts by mass

### <Thermal conductivity>

Thermal conductivity: 1.5 W/m·K

### [Method for measuring physical properties]

The methods for measuring the physical properties of the resin compositions used are as follows.

[Visible light transmittance T_{VIS}, total solar transmittance T_{SUN}]
Each of the resin compositions PCI to PCX described above was formed into a specimen of 150 mm × 100 mm × 5 mm in thickness using an injection molding machine described below under molding conditions below.

Injection molding machine: "J220EVP" (mold clamping force 220 t) manufactured by Japan Steel Works, Ltd.

| | |
|---|---|
| Molding conditions: | Resin temperature during molding: 300°C |
| | Mold temperature: 80°C |
| | Filling time: 2.5 seconds |
| | Pressure holding: 50% of peak pressure during injection for 15 seconds |
| | Cooling time: 20 seconds |

Pellets of each of the polycarbonate resin compositions were used after being hot-air dried at 120°C for 5 hours before injection molding. The resultant molded product was measured with respect to visible light transmittance T_{VIS} and total solar transmittance T_{SUN} according to ISO-9050.

Also, visible light transmittance T_{VIS} and total solar transmittance T_{SUN} of a panel body were determined by measuring, according to ISO-9050, a molded product cut out with a size of 150 mm × 100 mm × 5 mm in thickness from a center of a panel body produced by a method described below.

### [Thermal conductivity]

Each of the resin compositions was molded into a molded product using an injection molding machine (manufactured by Sumitomo Heavy Industries, Ltd., SH100, mold clamping force 100 T) and a mold of 100 mm in length, 100 mm in width, and 3 mm in thickness under the conditions of a cylinder temperature of 300°C, a mold temperature of 80°C, an injection pressure of 147 MPa. Three injection molded products produced as described above were stacked, and a value λ_{X} of thermal conductivity was measured by pressing a heating wire of a probe of a quick thermal conductivity meter (manufactured by Kyoto Electronics Industry K. K., Kemtherm QTM-D3) so that the direction of the heating wire coincided with a flow direction of the uppermost molded product among the three stacked molded products. Similarly, a value λ_{Y} of thermal conductivity was measured by pressing the heating wire of the probe so that the direction of the heating wire coincided with a direction perpendicular to the flow direction. In addition, ten injection molded products were bonded together with methylene chloride and then cut into five equal parts at an interval of 20 mm, and the resultant cut products were bonded together with methylene chloride so that all sections could be observed. Then, the surfaces of the bonded cut products were polished with a belt sander, and a value λ_{Z} of thermal conductivity was measured by pressing the heating wire of the probe on the processed surfaces. Thermal conductivity λ_{M} was calculated by an equation below using the obtained three measurement values with reference to a method of calculating from thermal conductivity values in the x, y, and z directions introduced in "Measurement Methods of Thermophysical Properties, Improvement and Technological Application" (edited by The Japan Society of Mechanical Engineers, issued by Yokendo). ${λ}_{M} = {λ}_{Y} \times {λ}_{Z} / {λ}_{X}$

In the present invention, thermal conductivity λ_{M} in the flow direction is considered as a thermal conductivity value.

### [Color difference ΔE between panel body and IR-absorbing layer]

By using a spectrocolorimeter "SE6000" manufactured by Nippon Denshoku Industries Co., Ltd., a color tone of only an IR-absorbing layer was measured, a color tone of a panel body was measured, and color different ΔE was calculated. A color tone was measured based on JIS Z8722, and a color difference was calculated based on JIS Z8730. A molded product with a size of 100 mm × 50 mm was cut out from a molded product including only an IR-absorbing layer produced by a method described below and was used for measuring a color tone of only the IR-absorbing layer. Also, a molded product with a size of 100 mm × 50 mm was cut out from a panel body produced by a method described below was used for measuring a color tone of only the panel body.

### [Heat insulation property of laminated panel body of first aspect not according to the claimed invention]

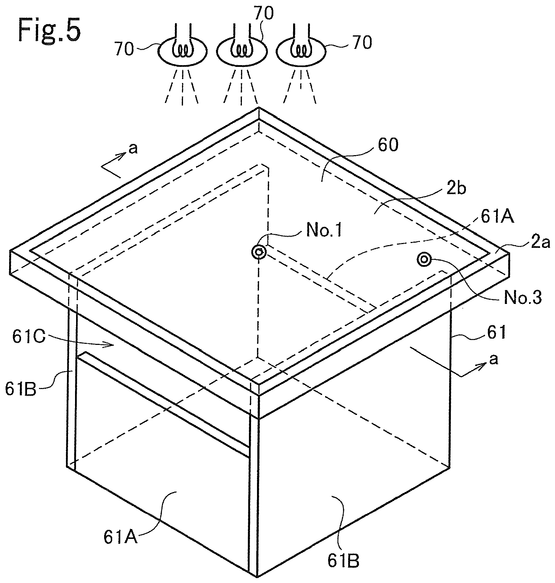

In each of Reference Examples 1 to 9 and Comparative Example 1 below, the heat insulation property was tested by using a test apparatus for a simulation of an automotive panoramic roof shown in Figs. 5 and 6. Fig. 5 is a schematic perspective view showing the entire test apparatus, and Fig. 6 is a sectional view taken along line a-a in Fig. 5.

In Figs. 5 and 6, reference numeral 60 denotes a panel (panel body) used as a test sample having a plate-like shape of 500 mm × 500 mm and having a thickness of 5 mm.

Reference numeral 61 denotes a wood-made instrument shelter for test which was also used as a mount base for the panel (panel body) 60 and which was a box-shaped instrument shelter with a bottom having two opposed side surfaces 61A and two opposed side surfaces 61B and an open upper portion. The instrument shelter for test 61 had the bottom having a size of 300 mm × 300 mm, the side surfaces 61A having a height of 150 mm, and the side surfaces 61B having a height of 250 mm.

The panel body 60 as a sample was mounted on the instrument shelter for test 61, and an opening 61C was formed in an upper portion of each of the side surfaces 61A.

Further, artificial sunlight lamps 70 were provided above the panel body 60 placed on the test instrument shelter 60 so that when the artificial sunlight lamps 70 were turned on, light could be applied to a surface of the panel body 60. The artificial sunlight lamps 70 were provided at a position 900 mm above a central portion of the surface of the panel body 60, and when the artificial sunlight lamps 70 were turned on, a quantity of light applied to the surface of the central portion of the panel body 60 was 1,500 W/m². The quantity of light applied refers to a value measured by an illuminometer provided at the same height as the surface position of the central portion of the panel body 60.

In Fig. 5 and 6, temperature measurement point Nos. 1 to 4 are marked with double circles, and a temperature sensor is attached at each point to measure a temperature. Measurement point Nos. 1 to 4 are as follows.

Measurement point No. 1: a central portion of a surface of a second layer on the surface side of the panel body 60 (refer to Figs. 5 and 6)
Measurement point No. 2: a central portion of a surface of a first layer on the back side of the panel body 60 (refer to Fig. 6)
Measurement point No. 3: a position on a diagonal of a surface of a second layer on the surface side of the panel body 60, the position being at 1/4 of the diagonal from an end (refer to Figs. 5 and 6)
Measurement point No. 4: a position on a diagonal of a surface of a first layer on the back side of the panel body 60, the position being at 1/4 of the diagonal from an end (refer to Fig. 6)

### [REFERENCE EXAMPLE 1]

As described in Tables 2 and 3, a panel body as a test sample having a thickness configuration shown in Table 2 was formed by a method described below using PCII as a molding material of an IR-absorbing layer and PCI as a molding material of a heat-insulating layer.

First, PCII was injection-molded (cylinder temperature: 300°C) in a cavity formed between a fixed mold and a movable mold which were controlled to a mold temperature of 80°C to form an IR-absorbing layer (second layer). An injection rate was a single rate of 50 mm/sec, and a change-over position between injection and holding pressures was 2 mm. Molding was performed with a valve gate-type hot runner. Injection compression molding was performed, and the mold was opened by 2 mm before injection and was again clamped with 700 t at the injection-holding pressure change-over position. In this case, a holding time for mold re-clamping was 15 seconds. Then, after cooling for 60 seconds, the movable mold was opened to remove a molded product of the IR-absorbing layer.

Next, the removed IR-absorbing layer was mounted in the movable mold which was adjusted to have the thickness of a final panel body, and PCI was injection-molded (cylinder temperature: 300°C) to cover the mold entire surface opposite to the IR-absorbing layer and the peripheral portion of 1.5 mm in the IR-absorbing layer. A mold temperature was 80°C, an injection rate was a single rate of 50 mm/sec, and an injection-holding pressure change-over position was 2 mm. Molding was performed with a valve gate-type hot runner. Injection compression molding was performed, the mold was opened by 2 mm before injection, and the mold was re-clamped with 700 t at the injection-holding pressure change-over position. In this case, a holding time for mold re-clamping was 15 seconds. Then, after cooling for 60 seconds, the movable mold was opened to remove a panel body including an integral laminate of the IR-absorbing layer and the heat-insulating layer.

### [REFERENCE EXAMPLE 2]

A panel body as a test sample including an integral laminate of an IR-absorbing layer and a heat-insulating layer was molded by the same method as in Reference Example 1 except that as described in Tables 2 and 3, PCIII was used as a molding material of the IR-absorbing layer, PCI was used as a molding material of the heat-insulating layer, and the cylinder temperature for molding was 320°C.

### [REFERENCE EXAMPLE 3]

As described in Tables 2 and 3, a panel body as a test sample having a thickness configuration shown in Table 2 was formed by a method described below using PCV as a molding material of an IR-absorbing layer and PCI as a molding material of a heat-insulating layer.

First, PCI was injection-molded (cylinder temperature: 300°C) in a cavity formed between a fixed mold and a movable mold which were controlled to a mold temperature of 80°C to form the heat-insulating layer (first layer). An injection rate was a single rate of 50 mm/sec, and an injection-holding pressure change-over position was 2 mm. Molding was performed with a valve gate-type hot runner. Injection compression molding was performed, and the mold was opened by 2 mm before injection and was again clamped with 700 t at the injection-holding pressure change-over position. In this case, a holding time for mold re-clamping was 15 seconds. Then, after cooling for 60 seconds, the movable mold was opened to remove a molded product of the heat-insulating layer.

Next, the removed heat-insulating layer was mounted in the movable mold which was adjusted to have the thickness of a final panel body, and PCV was injection-molded (cylinder temperature: 300°C) so that the peripheral edges of the IR-absorbing layer and the heat-insulating layer formed the same surface. A mold temperature was 80°C, an injection rate was a single rate of 50 mm/sec, and an injection-holding pressure change-over position was 2 mm. Molding was performed with a valve gate-type hot runner. Injection compression molding was performed, and the mold was opened by 2 mm before injection and was again clamped with 700 t at the injection-holding pressure change-over position. In this case, a holding time for mold re-clamping was 15 seconds. Then, after cooling for 60 seconds, the movable mold was opened to form a panel body including an integral laminate of the IR-absorbing layer and the heat-insulating layer.

### [REFERENCE EXAMPLE 4]

A panel body as a test sample including an integral laminate of an IR-absorbing layer and a heat-insulating layer was molded by the same method as in Reference Example 3 except that as described in Tables 2 and 3, PCVI was used as a molding material of the IR-absorbing layer, and PCI was used as a molding material of the heat-insulating layer.

### [REFERENCE EXAMPLE 5]

A panel body as a test sample including an integral laminate of an IR-absorbing layer and a heat-insulating layer was molded by the same method as in Reference Example 3 except that as described in Tables 2 and 3, PCII was used as a molding material of the IR-absorbing layer, and PCX was used as a molding material of the heat-insulating layer.

### [REFERENCE EXAMPLE 6]

As described in Tables 2 and 3, PCV was used as a molding material of an IR-absorbing layer, and PCI was used as a molding material of a heat-insulating layer.

First, a PCI sheet having a thickness of 0.1 mm was produced by using an extruder manufactured by Sokensha (screw diameter ∅30 mm, L/D = 38, full flighted screw). In this case, the resin temperature was 280°C, the rotational speed of the extruder was 20 rpm, and the temperature of a take-up roll was 140°C.

Next, the PCI sheet was mounted in a movable mold which was adjusted to have the thickness of a final panel body so that the peripheral edges of the IR-absorbing layer and the heat-insulating layer formed the same surface, and PCV was injection-molded (cylinder temperature: 300°C). During the injection molding, a mold temperature was 80°C, an injection rate was a single rate of 50 mm/sec, and an injection-holding pressure change-over position was 2 mm. Molding was performed with a valve gate-type hot runner. Injection compression molding was performed, and the mold was opened by 2 mm before injection and was again clamped with 700 t at the injection-holding pressure change-over position. In this case, a holding time for mold re-clamping was 15 seconds. Then, after cooling for 60 seconds, the movable mold was opened to remove a panel body including an integral laminate of the IR-absorbing layer and the heat-insulating layer.

### [REFERENCE EXAMPLE 7]

A panel body as a test sample including an integral laminate of an IR-absorbing layer and a heat-insulating layer was molded by the same method as in Reference Example 6 except that as described in Tables 2 and 3, PCVIII was used as a molding material of the IR-absorbing layer, PCI was used as a molding material of the heat-insulating layer, and a PCI sheet having a thickness of 0.75 mm was produced by using the extruder manufactured by Sokensha at a rotational speed of the extruder of 80 rpm.

### [REFERENCE EXAMPLE 8]

As described in Tables 2 and 3, PCVII was used as a molding material of an IR-absorbing layer, and PCI was used as a molding material of a heat-insulating layer.

First, a PCVII sheet having a thickness of 0.5 mm was produced by using an extruder manufactured by Sokensha (screw diameter 30 ∅mm, L/D = 38, full flighted screw). In this case, the resin temperature was 280°C, the rotational speed of the extruder was 80 rpm, and the temperature of a take-up roll was 140°C.

Next, the PCVII sheet was mounted in a movable mold which was adjusted to have the thickness of a final panel body so that the peripheral edges of the IR-absorbing layer and the heat-insulating layer formed the same surface, and PCI was injection-molded (cylinder temperature: 300°C). During the injection molding, a mold temperature was 80°C, an injection rate was a single rate of 50 mm/sec, and an injection-holding pressure change-over position was 2 mm. Molding was performed with a valve gate-type hot runner. Injection compression molding was performed, and the mold was opened by 2 mm before injection and was again clamped with 700 t at the injection-holding pressure change-over position. In this case, a holding time for mold re-clamping was 15 seconds. Then, after cooling for 60 seconds, the movable mold was opened to remove a panel body including an integral laminate of the IR-absorbing layer and the heat-insulating layer.

### [REFERENCE EXAMPLE 9]

A panel body as a test sample including an integral laminate of an IR-absorbing layer and a heat-insulating layer was molded by the same method as in Reference Example 8 except that as described in Tables 2 and 3, PCVII was used as a molding material of the IR-absorbing layer, PCI was used as a molding material of the heat-insulating layer, and the thickness of the PCI heat-insulating layer molded by injection molding was 3.5 mm.

### [COMPARATIVE EXAMPLE 1]

As described in Tables 2 and 3, a panel body (single-layer body) as a test sample having the same thickness as in Reference Examples 1 and 2 was molded (cylinder temperature: 300°C) by using PCIV as a molding material. During the molding, a mold temperature was 80°C, an injection rate was a single rate of 50 mm/sec, and an injection-holding pressure change-over position was 2 mm. Molding was performed with a valve gate-type hot runner. Injection compression molding was performed, and the mold was opened by 2 mm before injection and was again clamped with 700 t at the injection-holding pressure change-over position. In this case, a holding time for mold re-clamping was 15 seconds. Then, after cooling for 60 seconds, the movable mold was opened to remove a single-layer panel molded product.

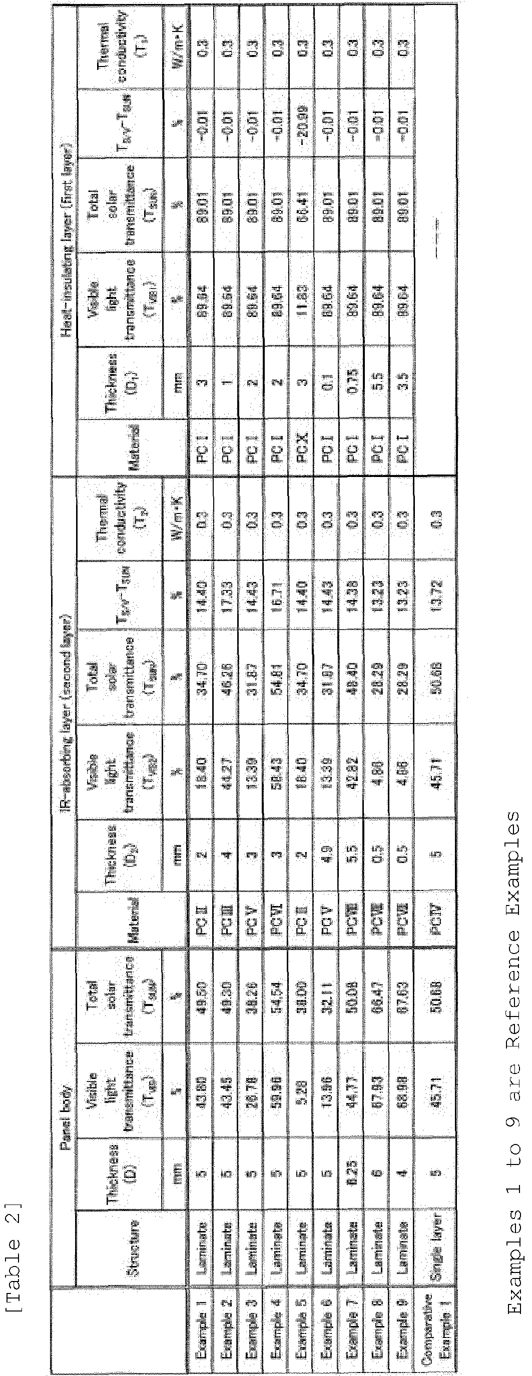

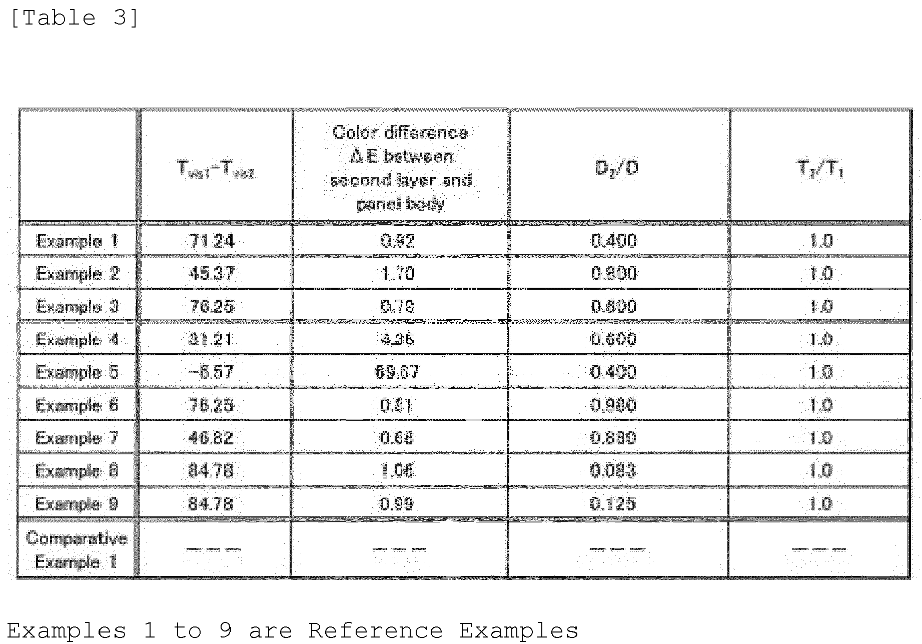

A heat insulation test was conducted for each of the panel bodies by using the test apparatus shown in Figs. 5 and 6. After a stable state was established by turning on the artificial sunlight lamps, each of the panel bodies was placed on the test instrument shelter to examine temperature changes at each of the measurement points with the elapse of time. The results are shown in Table 4.

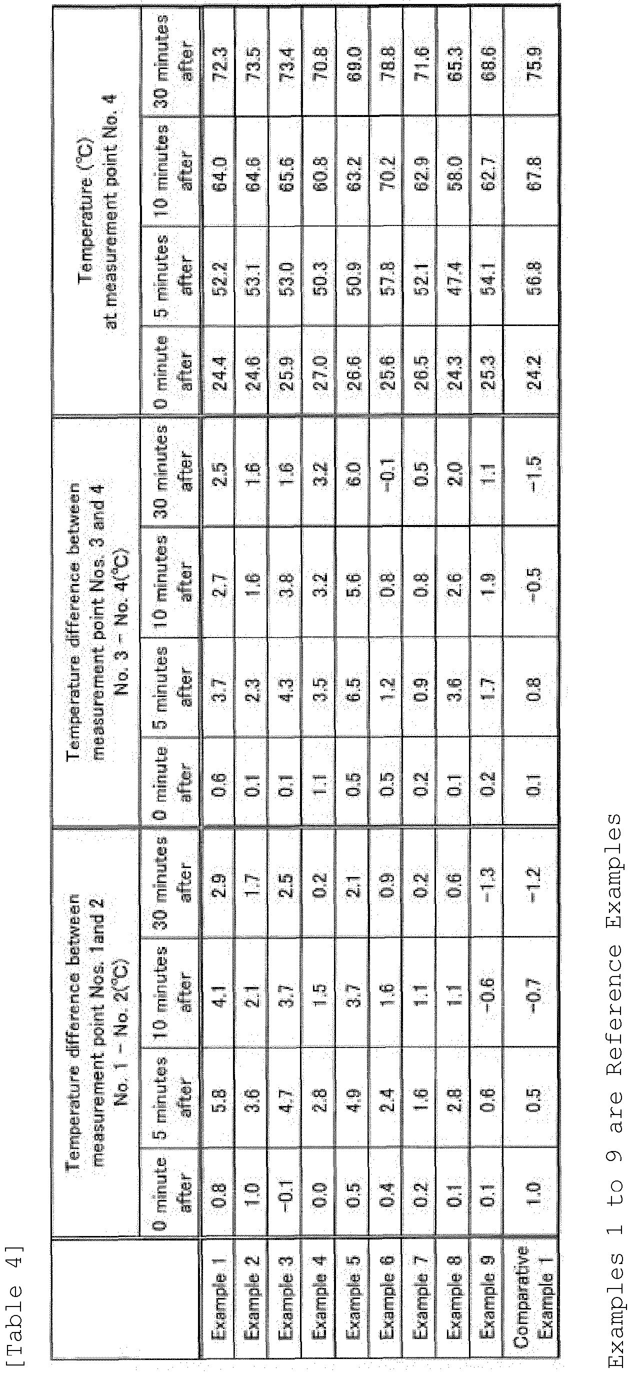

Tables 2 to 4 indicate the following.

It is found that in Reference Examples 1 to 9, a temperature difference occurs between the surface temperature (surface-side temperature) of the IR-absorbing layer and the surface temperature (back-side temperature) of the heat-insulating layer. This is due to the fact that because of a laminated structure including the IR-absorbing layer and the heat-insulating layer, transfer of the heat stored by absorption in the IR-absorbing layer to the back side of the panel body is suppressed by the heat-insulating layer.

On the other hand, in Comparative Example 1 having the same visible light transmittance and total solar transmittance as in Reference Examples 1, 2, and 7 but not having a laminated structure, a temperature difference does not occur between the front and back surfaces of the panel body. This indicates that Comparative Example 1 has a single-layer structure of a material having the IR-absorbing function, and thus heat stored by absorption is transferred over the entire of the panel body. Also, the instrument shelter for evaluation has a closed space on the back side of the panel body, and thus heat stays, thereby causing the phenomenon of increasing the temperature on the back side.

Further, with respect to the back-side temperature at the position (measurement point No. 4) on the diagonal and at 1/4 of the diagonal from an end of the panel body after turning on the artificial sunlight lamps, it is found that in Reference Examples 1, 2, and 7 having satisfactory heat insulation and the same visible light transmittance and total solar transmittance as in Comparative Example 1, the back-side temperature is lower than that in Comparative Example 1, and thus transfer of the heat stored by absorption in the IR-absorbing layer to the back side of the panel body is suppressed by the heat-insulating layer.

Therefore, for example, in application to an automotive glazing, when the panel body is attached so that the IR-absorbing layer is disposed on the outer side of a vehicle, and the heat-insulating layer is disposed on the inner side of a vehicle, radiation of the heat of the IR-absorbing layer at a temperature increased by IR absorption to the interior of the vehicle can be shielded by the heat-insulating layer, and thus temperature rise of the interior of the vehicle can be suppressed.

### [Evaluation of heat radiation of heat-exhaust type panel of first aspect not according to the claimed invention and panel of second aspect according to the claimed invention]

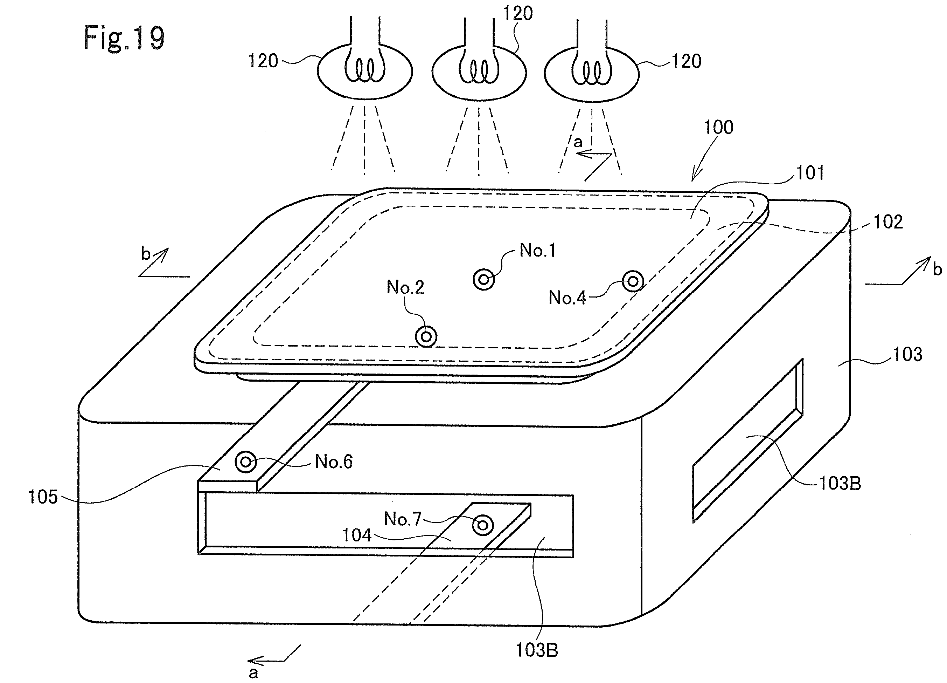

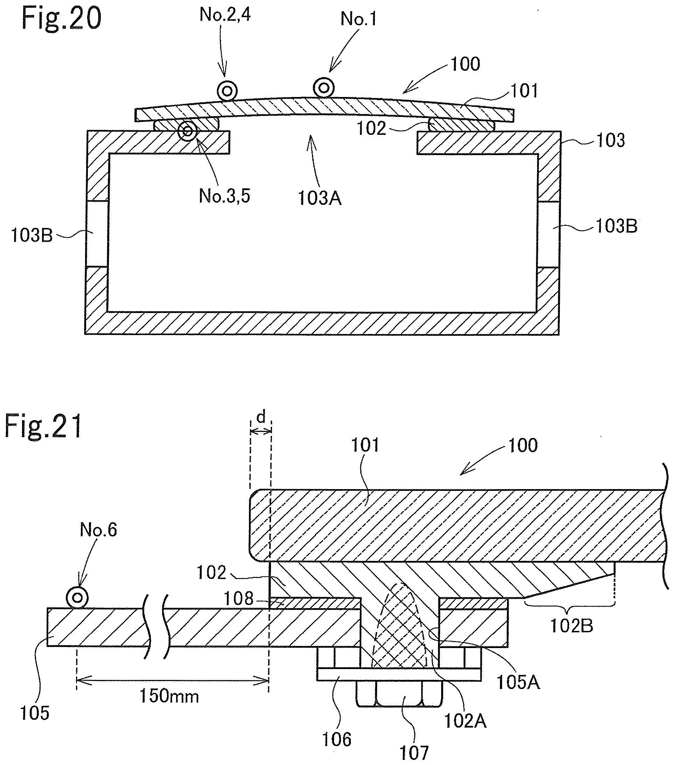

In examples, reference examples and comparative examples below, heat radiation was tested by using a test apparatus for a simulation of an automotive panoramic roof shown in Fig. 19 to Fig. 21. Fig. 19 is a schematic perspective view showing the entire of the test apparatus, Fig. 20 is a sectional view taken along line a-a or b-b in Fig. 19, and Fig. 21 is an enlarged sectional view showing a portion where a metal plate is attached to a panel.

In Figs. 19 to 21, reference numeral 100 denotes a panel as a test sample including a panel body 101 and a frame member 102 provided on a peripheral portion of the panel body 101. The panel body 101 has an outer size of 750 mm × 465 mm and a thickness of 5 mm, and the frame member 102 has a short-side width of 97 mm, a long-side of 75 mm on the side where the boss 102A is installed, a long-side width of 90 mm on the side opposite to the side where the boss 102A is installed, and a thickness of 3 mm excluding the boss 102A. In addition, an inclined portion 102B with a thickness decreasing from 3 mm to 1 mm is provided in a region where a short-side inner peripheral portion has a width of 20 mm, a long-side inner peripheral portion on the side where the boss 102A is installed has a width of 15 mm, and a long-side inner peripheral portion on the side opposite to the side where the boss 102A is installed has a width of 25 mm, and the frame member 102 is provided at a position 3 mm inside of the outer edge of the panel body 101 (that is, d = 3 mm in Fig. 21). The panel body 101 is convexly curved on the surface (front surface) opposite to the surface on which the frame member 102 is formed, thereby forming a curved surface having 10,000R in the longitudinal direction (long side) and 5,000R in the lateral direction (short side).

Reference numeral 103 denotes a test instrument shelter which is also used as a mounting base for the panel 100 and which has an opening 103A in an upper portion and openings 103B in the four side surfaces. A blind (not shown) composed of an aluminum plate is attached to each of the openings 103B in the side surfaces.

The panel 100 as a sample is placed on the test instrument shelter 103 so as to close the upper opening 103A.

In addition, a black panel thermometer 104 is provided at the bottom inside the test instrument shelter 103 in order to measure the temperature of the bottom of the instrument shelter 103.

Further, an elongated metal (S55C) plate (thickness of 1 mm) 105 is fixed to the frame member 102 in order to evaluate thermal conductivity of the frame member 102 of the panel 100. As shown in Fig. 21, the metal plate 105 has an open hole 105A for screwing at one of the ends so that the boss 102A of the frame member 102 of the panel 100 is inserted into the open hole 105A and fixed with a bolt 107 through a washer 106. Reference numeral 108 denotes heat-transfer paste (molybdenum disulfide paste).

In addition, artificial sunlight lamps 120 are provided above the panel 100 placed on the test instrument shelter 103 so that when the artificial sunlight lamps 120 are turned on, light can be applied to the surface of the panel 100. The artificial sunlight lamps 120 are provided at a position 730 mm above the surface of the panel 100, and when the artificial sunlight lamps 120 are turned on, a quantity of light applied to the surface of the panel 100 is 1850 W/m². The quantity of light applied refers to a value measured by an illuminometer provided at the same height as surface Nos. 1 of the panel 100.

In Figs. 19 to 21, temperature measurement points Nos. 1 to 7 are marked with double circles, and a temperature sensor is attached at each point to measure a temperature. Measurement point Nos. 1 to 7 are as follows.

Measurement point No. 1: a central portion of the surface of the panel 100 (refer to Figs. 19 and 20)

In Reference Examples 10 and 11 and Example 12 and Comparative Example 2, a temperature difference (No. 1-2) between the IR-absorbing layer-side front surface (No. 1-1) and the heat-insulating layer-side back surface of the panel body was measured at this measurement point.

Measurement point No. 2: a longitudinal-direction central portion of the panel 100 at a position of the surface of the panel 100 corresponding to a position along the panel 100 center side-edge of the frame member 102 (refer to Figs. 19 and 20)

In Reference Examples 10 and 11 and Example 12 and Comparative Example 2, a temperature difference (No. 2-2) between the IR-absorbing layer-side front surface (No. 2-1) and the heat-insulating layer-side back surface of the panel body was measured at this measurement point.

Measurement point No. 3: a width-direction central portion of the frame member 102 on the surface (surface of contact with the upper surface of the test instrument shelter 103) of the frame member 102 in a longitudinal-direction central portion of the panel 100 (refer to Fig. 20)

Measurement point No. 4: a transverse-direction central portion of the panel 100 at a position of the surface of the panel 100 corresponding to a position along the panel 100 center side-edge of the frame member 102 (refer to Figs. 19 and 20)

In Reference Examples 10 and 11 and Example 12 and Comparative Example 2, a temperature difference (No. 4-2) between the IR-absorbing layer-side front surface (No. 4-1) and the heat-insulating layer-side back surface of the panel body was measured at this measurement point.

Measurement point No. 5: a width-direction central portion of the frame member 102 on the surface (surface of contact with the upper surface of the test instrument shelter 103) of the frame member 102 in a transverse-direction central portion of the panel 100 (refer to Fig. 20)

Measurement point No. 6: the end opposite to the side where the elongated metal plate 105 is attached to the frame member 102 (refer to Fig. 21)

The distance between the outer edge of the frame member 102 and measurement point No. 6 is 150 mm.

Measurement point No. 7: a central position of the bottom of the evaluation instrument shelter 103 (refer to Fig. 19)

The distance between the artificial sunlight lamps 120 and measurement point No. 7 is 1050 mm.

### [COMPARATIVE EXAMPLE 2]

A panel as a test sample was molded by using only PCIX as a molding material of a single-layer panel body and PCβ as a molding material of a frame member.

First, PCIX was injection-molded (cylinder temperature: 300°C) in a cavity formed between a fixed mold and a first movable mold which were controlled to a mold temperature of 90°C to form a panel body. An injection rate was a single rate of 50 mm/sec, and an injection-holding pressure change-over position was 2 mm. Molding was performed with a valve gate-type hot runner. Injection compression molding was performed, and the mold was opened by 2 mm before injection and was again clamped with 700 t at the injection-holding pressure change-over position. In this case, a holding time for mold re-clamping was 15 seconds. Then, after cooling for 60 seconds, the first movable mold was opened, and in a state where the panel body was held in the first movable mold, a second movable mold controlled to a mold temperature of 90°C was combined. Then, a cavity formed between the second movable mold and the panel body was filled with PCβ at a single injection rate of 40 mm/sec (injected resin temperature: 275°C). An injection-holding pressure change-over position was 35 mm. A frame member was formed by applying holding pressure of 25 MPa for 5 seconds. After cooling for 60 seconds, the second movable mold was opened to remove a panel including the panel body and the frame member which were integrally molded.

### [REFERENCE EXAMPLE 10]

PCII was used as a molding material of an IR-absorbing layer of a panel body, PCI was used as a molding material of a heat-insulating layer of the panel body, and PCβ was used as a molding material of a frame member.

First, a PCI sheet having a thickness of 1 mm was produced by using an extruder manufactured by Sokensha (screw diameter 30 ∅mm, L/D = 38, full flighted screw). In this case, the resin temperature was 280°C, the rotational speed of the extruder was 80 rpm, and the temperature of a take-up roll was 140°C.

Next, the PCI sheet was mounted in a movable mold which was adjusted to have the thickness of a final panel body, and PCI was injection-molded (cylinder temperature: 320°C). During the injection molding, a mold temperature was 90°C, an injection rate was a single rate of 50 mm/sec, and an injection-holding pressure change-over position was 2 mm. Molding was performed with a valve gate-type hot runner. Injection compression molding was performed, and the mold was opened by 2 mm before injection and was again clamped with 700 t at the injection-holding pressure change-over position. In this case, a holding time for mold re-clamping was 15 seconds. Then, after cooling for 60 seconds, the first movable mold was opened, and in a state where the panel body was held in the first movable mold, a second movable mold controlled to a mold temperature of 90°C was combined. Then, a cavity formed between the second movable mold and the panel body was filled with PCβ at a single injection rate of 40 mm/sec (injected resin temperature: 275°C). An injection-holding pressure change-over position was 35 mm. A frame member was formed by applying holding pressure of 25 MPa for 5 seconds. After cooling for 60 seconds, the second movable mold was opened to remove a panel including the panel body and the frame member which were integrally molded.

As shown in Fig. 2(b), the panel body as the test sample includes the IR-absorbing layer constituting a peripheral portion of the heat-insulating layer, and the frame member is bonded to the IR-absorbing layer. In addition, an overlap (d₂ in Fig. 2(b)) between the frame member and the heat-insulating layer is 3 mm.

### [REFERENCE EXAMPLE 11]

A test sample was molded by integrally molding a frame member and a panel body including an integral laminate of an IR-absorbing layer and a heat-insulating layer by the same method as in Reference Example 10 except that as described in Tables 5 and 6, PCII was used as a molding material of the IR-absorbing layer, PCI was used as a molding material of the heat-insulating layer, and the thickness of a PCI sheet was 2 mm.

### [EXAMPLE 12]

A test sample was molded by integrally molding a frame member and a panel body including an integral laminate of an IR-absorbing layer and a heat-insulating layer by the same method as in Reference Example 10 except that as described in Tables 5 and 6, PCα was used as a molding material of the frame member.

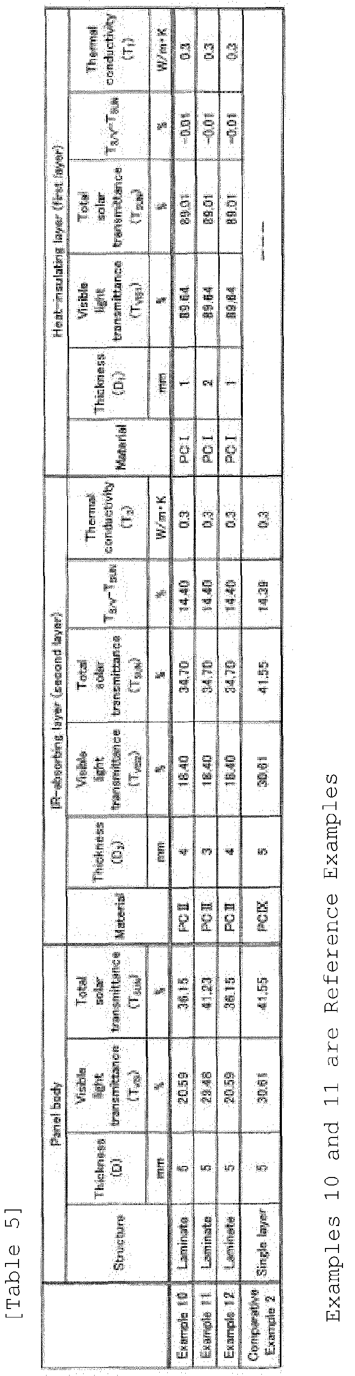

**[Table 6]**

| | Tᵥᵢₐ₁-Tᵥᵢₐ₂ | Color difference ΔE between second layer and panel body | D₂/D | T ₂/T₁ |
|---|---|---|---|---|
| Example 10 | 71.24 | 0.25 | 0.6 | 1.0 |
| Example 11 | 71.24 | 0.99 | 0.6 | 1.0 |
| Example 12 | 71.24 | 0.25 | 0.8 | 1.0 |
| Comparative Example 2 | --- | --- | --- | --- |

### Examples 10 and 11 are Reference Examples

A heat radiation test was conducted for each of the panels by using the test apparatus shown in Figs. 19 to 21. Each of the panels was placed on the test instrument shelter, and after a stable state was established, the artificial sunlight lamps were turned on to examine a temperature at each of measurement point Nos. 1 to 6 25 minutes after turning on. The results are shown in Table 7.

Also, a time (52°C arrival time) required from turning on the artificial sunlight lamps until the temperature (measurement point No. 7) of the black panel in the test instrument shelter reached 52°C was examined, and the results are shown in Table 7.

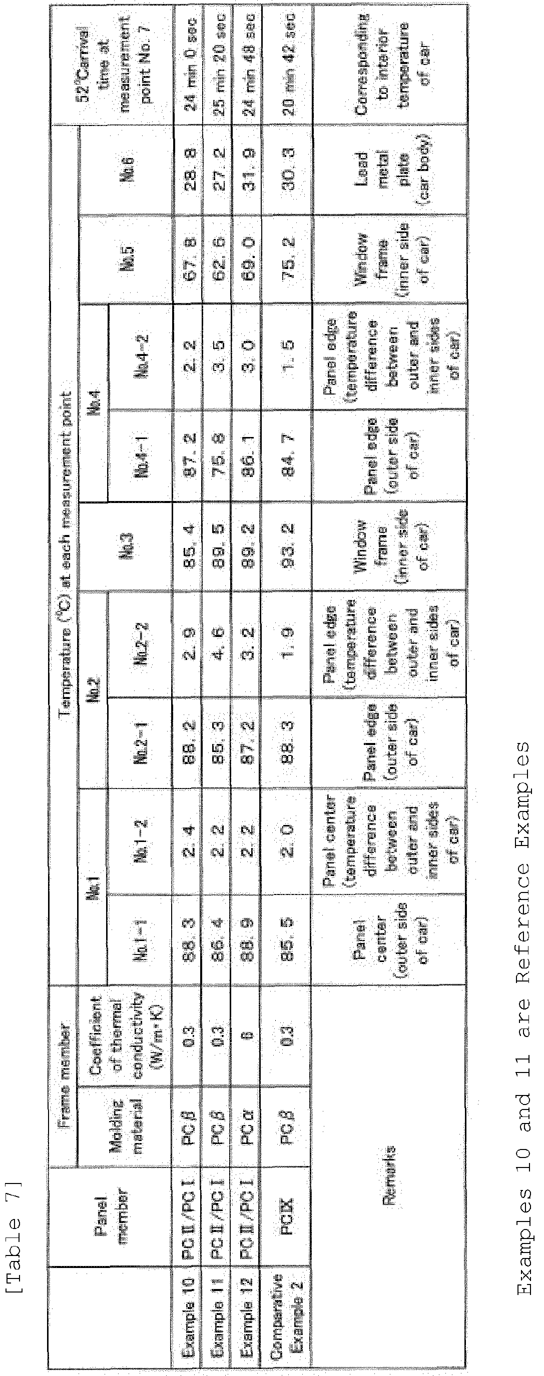

Table 7 indicates the following.

In Reference Examples 10 and 11, a highly thermal conductive molding material is not used for the frame member, but the panel body has a laminated structure of the IR-absorbing layer and the heat-insulating layer, and thus a temperature rise of the interior of a car is suppressed.

In Example 12 using a highly thermal conductive molding material for the frame member with respect to the same panel body as in Reference Example 10, heat of the panel body is effectively radiated through the frame member, and thus a temperature rise of the interior of a car can be further suppressed.

On the other hand, in Comparative Example 2 not using a highly thermal conductive molding material for the frame member with respect to the panel body having a single-layer structure, the interior temperature of a car is significantly increased.

### [EXAMPLE 13 and COMPARATIVE EXAMPLE 3]

A panel as a test sample was molded by a method described below using PCII as a molding material of a panel body and a material shown in Table 8 as a molding material of a frame member.

First, PCII was injection-molded (cylinder temperature: 300°C) in a cavity formed between a fixed mold and a first movable mold which were controlled to a mold temperature of 90°C to form a panel body. An injection rate was a single rate of 50 mm/sec, and an injection-holding pressure change-over position was 2 mm. Molding was performed with a valve gate-type hot runner. Injection compression molding was performed, and the mold was opened by 2 mm before injection and was again clamped with 700 t at the injection-holding pressure change-over position. In this case, a holding time for mold re-clamping was 15 seconds. Then, after cooling for 60 seconds, the first movable mold was opened, and in a state where the panel body was held in the first movable mold, a second movable mold controlled to a mold temperature of 90°C was combined. Then, a cavity formed between the second movable mold and the panel body was filled with the molding material of the frame member at a single injection rate of 40 mm/sec (injected resin temperature: 275°C). An injection-holding pressure change-over position was 35 mm. A frame member was formed by applying holding pressure of 25 MPa for 5 seconds. After cooling for 60 seconds, the second movable mold was opened to remove a panel including the panel body and the frame member which were integrally molded.

A heat radiation test was conducted for each of the panels by using the test apparatus shown in Figs. 19 to 21. Each of the panels was placed on the test instrument shelter, and after a stable state was established, the artificial sunlight lamps were turned on to examine a temperature at each of measurement point Nos. 1 to 6 25 minutes after turning on. The results are shown in Table 8. When the artificial sunlight lamps 120 were turned on, a quantity of light applied to the surface of the panel 100 was 1650 W/m². The quantity of light applied refers to a value measured by an illuminometer provided at the same height as surface No. 1 of the panel 100.

Also, a time (45°C arrival time) required from turning on the artificial sunlight lamps until the temperature (measurement point No. 7) of the black panel in the test instrument shelter reached 45°C was examined, and the results are shown in Table 8.

**[Table 8]**

| | Panel member | Frame member | | Temperature (°C) at each measurement point | | | | | | 45°C arrival time at measurement point No. 7 |
|---|---|---|---|---|---|---|---|---|---|---|
| | | Molding material | Coefficient of thermal conductivity (W/m·K) | No.1 | No.2 | No.3 | No.4 | No.5 | No.6 | |
| Example 13 | PCII | PCα | 6 | 93.6 | 93.9 | 97.7 | 77.0 | 69.3 | 37.2 | 37 min 28 sec |
| Comparative Example 3 | PCII | PC*β* | 0.3 | 94.0 | 96.0 | 94.8 | 79.2 | 65.6 | 31.7 | 28 min 48 sec |
| Difference | | | | -0.4 | -2.1 | 2.9 | -2.2 | 3.7 | 5.5 | 8 min 40 sec |
| Remarks | | | | Panel center (outer side of car) | Panel edge (outer side of car) | Window frame (inner side of car) | Panel edge (outer side of car) | Window frame (inner side of car) | Lead metal plate (car body) | Corresponding to interior temperature of car |

Table 8 indicates the following. In Example 13 using a highly thermal conductive material for the frame member, heat stored in the panel body is easily radiated through the frame member, and thus the temperature (temperature of No. 1) of the central portion of the panel is slightly lower than that in Comparative Example 3.

Also, at the edge of the panel, the temperatures (temperatures of Nos. 2 and 4) of the panel body are lower than in Comparative Example 3.

On the other hand, the frame member of Example 13 receives heat from the panel body, and thus the temperatures (temperatures of Nos. 3 and 5) of the frame member of Example 13 are higher than in Comparative Example 3. Also, the temperature (temperature of No. 6) of the lead metal plate connected to the frame member of Example 13 is higher than that in Comparative Example 3. The higher temperatures at measurement point Nos. 3, 5, and 6 in Example 13 than in Comparative Example 3 indicate that heat of the panel body is more radiated through the frame member and the metal plate.

Therefore, the panel of Example 13 has higher heat radiation than the panel of Comparative Example 3, and thus the temperature (temperature of No. 7) of the bottom of the test instrument shelter corresponding to the interior temperature of a car is little increased. In Comparative Example 3, the time required until the temperature reaches 45°C is 28 minutes and 48 seconds, while in Example 13, the time required until the temperature reaches 45°C is 37 minutes and 28 seconds. Therefore, it is found that the panel of the present invention has good heat radiation, and a temperature rise of the interior of a car can be suppressed by using the panel.

### [REFERENCE EXAMPLE 14]

A panel as a test sample was molded by the same method as in Example 13 except that PCXI was used as a molding material of a panel body and PCγ was used as a molding material of a frame member, and heat radiation was evaluated. The results of evaluation are shown in Table 9.

Table 9 indicates the following. In Reference Example 14, heat storage in the panel body is smaller than in Example 13, and the low thermal conductivity of the frame member results in a small quantity of heat stored in the panel body, and low temperatures (temperatures of Nos. 2 and 4) at the panel edges of the panel body and low temperatures (temperatures of Nos. 3 and 6) of the frame member. It is thus found that the light-absorbing heat-storing property and heat radiation property of Reference Example 14 are lower than in Example 13. However, the temperature (temperature of No. 7) at the bottom of the test instrument shelter corresponding to the interior temperature of a car is little increased. In Comparative Example 3, the time required until the temperature reaches 45°C is 28 minutes and 48 seconds, while in Reference Example 14, the time required until the temperature reaches 45°C is 32 minutes and 08 seconds. Therefore, it is found that the panel of the present invention has good heat radiation, and a temperature rise of the interior of a car can be suppressed by using the panel.

### [COMPARATIVE EXAMPLE 4]

A panel as a test sample was molded by the same method as in Example 13 except that PCXII was used as a molding material of a panel body and PCβ was used as a molding material of a frame member, and heat radiation was evaluated. The results of evaluation are shown in Table 9.

Table 9 indicates the following. In Comparative Example 4, the molding material of the panel body has no light-absorbing heat-storing property, and thus near-infrared to infrared light entirely enters the test instrument shelter. Therefore, the temperature (temperature of No. 7) at the bottom of the test instrument shelter corresponding to the interior temperature of a car reaches 45°C within a short time of 15 minutes and 48 seconds. In addition, the temperature (temperature of No. 7) at the bottom of the test instrument shelter finally reaches 51°C, and thus it is found that all temperatures of the member become high.

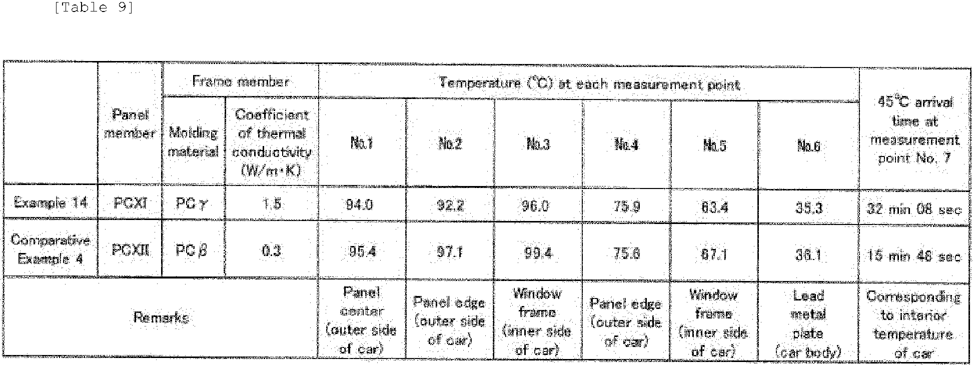

### Example 14 is a Reference Example

The present invention is described in detail with reference to specified embodiments, but it is obvious to persons skilled in the art that various modifications can be made without deviating scope of the present invention.

This application is based on Japanese patent application 2011-171943 filed on August 5, 2011, and Japanese patent application 2011-228096 filed on October 17, 2011.

## Claims

1. A panel comprising a panel body (2) having a front surface and a back surface, and a frame member (3) provided on a peripheral portion of the back surface of the panel body (2), the panel (1) being supported by a panel support (8) through the frame member (3) and made of a synthetic resin,
wherein the panel body (2) has light transmissivity and the light-absorbing heat-storing property of absorbing light, converting the light into heat, and storing the heat therein;
the panel body is made of a polycarbonate resin composition prepared by adding 0.0001 to 0.5 parts by mass of metal boride fine particles of at least one metal selected from the group consisting of La, Ce, Pr, Nd, Tb, Dy, Ho, Y, Sm, Eu, Er, Tm, Yb, Lu, Sr, and Ca relative to 100 parts by mass of an aromatic polycarbonate resin having a water content of 500 ppm by mass or more;
the frame member (3) has a thermal conductivity measured as indicated in the description of 3.0 W/m·K or more; and
the frame member is made of a resin composition containing (A) a polycarbonate resin, and relative to 100 parts by mass of the polycarbonate resin (A), (B) 5 parts by mass or more and less than 40 parts by mass of graphitized carbon fibers having a thermal conductivity in the length direction of 100 W/m·K or more and an average fiber diameter measured with an image analyzer of 5 to 20 µm, and (C) 5 parts by mass or more and 100 parts by mass or less of a graphite powder having an average particle diameter determined according to JIS Z8819-2 based on measurement by a laser diffraction method according to JIS Z8825-1 of 1 to 500 µm, wherein the graphitized carbon fibers are a short carbon fiber bundle produced by bundling short carbon fibers at a bulk density of 450 to 800 g/l with a sizing agent, cutting the carbon fibers into a predetermined length of 2 to 20 mm, and then graphitizing the resultant bundle by heating the bundle in an inert gas atmosphere at a temperature of 2800°C to 3300°C so that the sizing agent content is 0.1% by mass or less.

2. The panel according to Claim 1, wherein a groove (4) is provided in a frame member-forming portion of the back surface of the panel body (2A), and the frame member (3) is provided so as to be fitted into the groove (4).

3. The panel according to Claim 1 or 2, wherein the synthetic resin constituting the panel body (2) is an aromatic polycarbonate resin.

4. The panel according to any one of Claims 1 to 3, wherein a concave portion (3x) and/or a convex portion (2x) is formed on a side surface of the frame member (3M) on the panel outer side and/or inner side.

5. The panel according to any one of Claims 1 to 4, wherein the panel body (2) and the frame member (3) are integrally molded by injection molding.

6. The panel according to any one of Claims 1 to 5, wherein the panel (1) is used as a vehicle window member.

7. A panel installation structure comprising the panel according to any one of Claims 1 to 6, wherein the panel (1D) is supported by a panel support (8) through the frame member (3B).

8. The panel installation structure according to Claim 7, wherein the frame member (3B) and the panel support (8) are supported by engagement between a projection projecting from the frame member (3B) and an attachment hole (9) formed in the panel support (8).

9. The panel installation structure according to Claim 7, wherein the frame member (3D) and the panel support (8A) are supported by fitting between a projection (11) projecting from the panel support (8A) and a concave portion (12) formed in the frame member (3D).

10. The panel installation structure according to any one of Claims 7 to 9, comprising a metal member (17) in which one of the ends is inserted into the frame member (3G), and the other end is in contact with the panel support (8).

## Patentansprüche

1. Paneel, umfassend einen Paneelkörper (2) mit einer Vorderseite und einer Rückseite und ein Rahmenelement (3), das an einem Randbereich der Rückseite des Paneelkörpers (2) angebracht ist, wobei das Paneel (1) von einem Paneelträger (8) über das Rahmenelement (3) getragen wird und aus einem synthetischen Harz ist,
wobei der Paneelkörper (2) eine Lichtdurchlässigkeit und die lichtabsorbierende wärmespeichernde Eigenschaft zum Absorbieren von Licht, Umwandeln des Lichts zu Wärme und Speichern der Wärme darin aufweist,
der Paneelkörper aus einer Polycarbonatharzzusammensetzung besteht, die durch Zugabe von 0,0001 bis 0,5 Masseteilen Metallborid-Feinpartikeln aus mindestens einem Metall, ausgewählt aus der Gruppe, bestehend aus La, Ce, Pr, Nd, Tb, Dy, Ho, Y, Sm, Eu, Er, Tm, Yb, Lu, Sr und Ca, relativ zu 100 Masseteilen eines aromatischen Polycarbonatharzes mit einem Wassergehalt von 500 Masse-ppm oder mehr, hergestellt ist,
das Rahmenelement (3) eine Wärmeleitfähigkeit, gemessen wie in der Beschreibung angegeben, von 3,0 W/m·K oder mehr aufweist und
das Rahmenelement aus einer Harzzusammensetzung ist, die (A) ein Polycarbonatharz und, relativ zu 100 Masseteilen des Polycarbonatharzes (A), (B) 5 Masseteile oder mehr und weniger als 40 Masseteile graphitisierte Kohlenstofffasern mit einer Wärmeleitfähigkeit in Längenrichtung von 100 W/m·K oder mehr und einem durchschnittlichen Faserdurchmesser, gemessen mit einem Bildanalysator, von 5 bis 20 µm und (C) 5 Masseteile oder mehr und 100 Masseteile oder weniger eines Graphitpulvers mit einem durchschnittlichen Partikeldurchmesser, gemessen gemäß JIS Z8819-2 basierend auf einer Messung mittels eines Laserbeugungsverfahrens gemäß JIS Z8825-1, von 1 bis 500 µm enthält, wobei die graphitisierten Kohlenstofffasern ein Kohlenstoffkurzfaserbündel, hergestellt durch Bündeln von Kohlenstoffkurzfasern bei einer Schüttdichte von 450 bis 800 g/l mit einem Leimungsmittel, Zuschneiden der Kohlenstofffasern auf eine vorbestimmte Länge von 2 bis 20 mm und anschließendes Graphitisieren des resultierenden Bündels durch Erwärmen des Bündels in einer Inertgasatmosphäre bei einer Temperatur von 2.800°C bis 3.300°C so, dass der Leimungsmittelgehalt 0,1 Masse-% oder weniger beträgt, sind.

2. Paneel gemäß Anspruch 1, wobei eine Nut (4) in einem Rahmenelement-bildenden Bereich der Rückseite des Paneelkörpers (2A) angeordnet ist und das Rahmenelement (3) so angeordnet ist, dass es in die Nut (4) passt.

3. Paneel gemäß Anspruch 1 oder 2, wobei da synthetische Harz, das den Paneelkörper (2) bildet, ein aromatisches Polycarbonatharz ist.

4. Paneel gemäß irgendeinem der Ansprüche 1 bis 3, wobei ein konkaver Bereich (3x) und/oder ein konvexer Bereich (2x) an einer Seitenoberfläche des Rahmenelements (3M) an der Paneelaußenseite und/oder -innenseite gebildet ist.

5. Paneel gemäß irgendeinem der Ansprüche 1 bis 4, wobei der Paneelkörper (2) und das Rahmenelement (3) durch Spritzguss in einem Stück geformt sind.

6. Paneel gemäß irgendeinem der Ansprüche 1 bis 5, wobei das Paneel (1) als Fahrzeugfensterelement verwendet wird.

7. Paneelinstallationsstruktur, umfassend das Paneel gemäß irgendeinem der Ansprüche 1 bis 6, wobei das Paneel (1D) von einem Paneelträger (8) über das Rahmenelement (3B) getragen wird.

8. Paneelinstallationsstruktur gemäß Anspruch 7, wobei das Rahmenelement (3B) und der Paneelträger (8) durch Einrasten zwischen einem Vorsprung, der von dem Rahmenelement (3B) absteht, und einer Befestigungsöffnung (9), die in dem Paneelträger (8) gebildet ist, getragen werden.

9. Paneelinstallationsstruktur gemäß Anspruch 7, wobei das Rahmenelement (3D) und der Paneelträger (8A) durch Einpassung zwischen einem Vorsprung (11), der von dem Paneelträger (8A) absteht, und einem konkaven Bereich (12), der in dem Rahmenelement (3D) gebildet ist, getragen werden.

10. Paneelinstallationsstruktur gemäß irgendeinem der Ansprüche 7 bis 9, umfassend ein Metallelement (17), in dem eines der Enden in das Rahmenelement (3G) eingefügt ist und das andere Ende in Kontakt mit dem Paneelträger (8) steht.

## Revendications

1. Panneau comprenant un corps de panneau (2) présentant une surface avant et une surface arrière, et un élément de cadre (3) disposé sur une partie périphérique de la surface arrière du corps de panneau (2), le panneau (1) étant supporté par un support de panneau (8) au moyen de l'élément de cadre (3) et constitué d'une résine synthétique,
dans lequel le corps de panneau (2) présente une transmissivité de la lumière et la propriété d'absorption de la lumière-de stockage de la chaleur consistant en absorption de la lumière, conversion de la lumière en chaleur et stockage de la chaleur en son sein ;
le corps de panneau est constitué d'une composition de résine de polycarbonate préparée en ajoutant 0,0001 à 0,5 partie en masse de fines particules de bore métallique d'au moins un métal sélectionné dans le groupe consistant en La, Ce, Pr, Nd, Tb, Dy, Ho, Y, Sm, Eu, Er, Tm, Yb, Lu, Sr et Ca par rapport à 100 parties en masse d'une résine de polycarbonate aromatique présentant une teneur en eau de 500 ppm en masse ou plus ;
l'élément de cadre (3) présente une conductivité thermique mesurée comme indiqué dans la description de 3,0 W/m·K ou plus ; et
l'élément de cadre est constitué d'une composition de résine contenant (A) une résine de polycarbonate et, par rapport à 100 parties en masse de la résine de polycarbonate (A), (B) 5 parties en masse, ou plus, et moins de 40 parties en masse de fibres de carbone graphitisées présentant une conductivité thermique dans le sens de la longueur de 100 W/m·K ou plus et un diamètre moyen de fibre mesuré avec un analyseur d'image de 5 à 20 µm, et (C) 5 parties en masse ou plus et 100 parties en masse ou moins d'une poudre de graphite présentant un diamètre moyen de particule déterminé selon la norme JIS Z8819-2 sur la base d'une mesure par un procédé de diffraction laser selon la norme JIS Z8825-1 de 1 à 500 µm, dans lequel les fibres de carbone graphitisées sont un faisceau de courtes fibres de carbone produit en mettant en paquet de courtes fibres de carbone à une densité en vrac de 450 à 800 g/l avec un agent d'encollage, en coupant les fibres de carbone selon une longueur prédéterminée de 2 à 20 mm et, ensuite, en graphitisant le faisceau résultant en chauffant le faisceau dans une atmosphère de gaz inerte à une température de 2 800 °C à 3 300 °C de telle sorte que la teneur en agent d'encollage soit de 0,1 % en masse ou moins.

2. Panneau selon la revendication 1, dans lequel une rainure (4) est disposée dans une partie de formation d'élément de cadre de la surface arrière du corps de panneau (2A) et l'élément de cadre (3) est disposé de sorte à être tenu dans la rainure (4).

3. Panneau selon la revendication 1 ou 2, dans lequel la résine synthétique constituant le corps de panneau (2) est une résine de polycarbonate aromatique.

4. Panneau selon l'une quelconque des revendications 1 à 3, dans lequel une partie concave (3x) et/ou une partie convexe (2x) est formée sur une surface latérale de l'élément de cadre (3M) du côté externe et/ou du côté interne du panneau.

5. Panneau selon l'une quelconque des revendications 1 à 4, dans lequel le corps de panneau (2) et l'élément de cadre (3) sont moulés d'un seul tenant par un moulage par injection.

6. Panneau selon l'une quelconque des revendications 1 à 5, dans lequel le panneau (1) est utilisé comme élément de vitre de véhicule.

7. Structure d'installation de panneau comprenant le panneau selon l'une quelconque des revendications 1 à 6, dans laquelle le panneau (1D) est supporté par un support de panneau (8) au moyen de l'élément de cadre (3B).

8. Structure d'installation de panneau selon la revendication 7, dans laquelle l'élément de cadre (3B) et le support de panneau (8) sont supportés par une mise en prise entre une saillie faisant saillie depuis l'élément de cadre (3B) et un trou de fixation (9) formé dans le support de cadre (8).

9. Structure d'installation de panneau selon la revendication 7, dans laquelle l'élément de cadre (3D) et le support de panneau (8A) sont supportés par ajustement entre une saillie (11) faisant saillie depuis le support de panneau (8A) et une partie concave (12) formée dans l'élément de cadre (3D).

10. Structure d'installation de panneau selon l'une quelconque des revendications 7 à 9, comprenant un élément métallique (17) dans lequel l'une des extrémités est insérée dans l'élément de cadre (3G), et l'autre extrémité est en contact avec le support de panneau (8).
